# EUROPÄISCHE PATENTSCHRIFT

(11) **EP 3 855 779 B1**
(45) Veröffentlichungstag und Bekanntmachung des Hinweises auf die Patenterteilung: **11.11.2026**
(21) Anmeldenummer: 21152368.3
(22) Anmeldetag: 19.01.2021
(51) Int. Cl.: H04W 12/00, H04W 4/80

(54) **UWB-KOMMUNIKATION MIT EINER MEHRZAHL VON UWB-DATENKODIERUNGSSCHEMATA**
UWB COMMUNICATION WITH A PLURALITY OF UWB DATA CODING SCHEMES
COMMUNICATION UWB AVEC UNE PLURALITÉ DE SCHÉMAS D'ENCODAGE DE DONNÉES UWB

(30) Priorität: 24.01.2020 DE 102020101735
(43) Veröffentlichungstag der Anmeldung: 28.07.2021
(73) Patentinhaber: Bundesdruckerei GmbH, 10969 Berlin (DE)
(72) Erfinder: DRESSEL, Olaf, 14641 Wustermark (DE)
(74) Vertreter: Richardt Patentanwälte PartG mbB

(56) Entgegenhaltungen:
- EP-A1- 3 471 068
- WO-A1-2005/081012
- WO-A1-2016/176028
- WO-A2-01/93434
- WO-A2-2006/102538
- US-A1- 2007 025 739
- US-A1- 2013 325 323

## Beschreibung

Die Erfindung betrifft ein mobiles tragbares UWB-Kommunikationsgerät, ein UWB-Kommunikationssystem sowie ein Verfahren zum Steuern eines mobilen tragbaren UWB-Kommunikationsgeräts.

Mobile Datenverarbeitung unter Verwendung von mobilen tragbaren Kommunikationsgeräten erlaubt es Benutzern entsprechender Kommunikationsgeräte verschiedenste Daten zu erfassen, zu speichern sowie zu Verarbeitungszwecken zu senden und zu empfangen. Die Benutzer können so in vielfältiger Weise und in den unterschiedlichsten Situationen mit ihrer Umgebung informationstechnisch in Verbindung treten und interagieren. Die entsprechenden Daten können dabei unterschiedlichen Informationsbereiche betreffen und insbesondere unterschiedlichen Sicherheitsanforderungen unterliegenden.

Mit dem Umfang und der Qualität der Daten steigen dabei die Anforderungen insbesondere an eine sichere Übertragung der entsprechenden Daten. Diese Sicherheitsproblematik stellt sich insbesondere für sensible Daten, wie etwa personenbezogene Daten umfassen.

Die WO 2005/081012 A1 beschreibt ein Verfahren zum Bestimmen des Ortes eines Ziels.

Das Verfahren umfasst das Initialisieren eines Satzes von Basisstationen, um ihren Standort relativ zueinander zu bestimmen. An dem Ziel wird die Ankunftszeit von mindestens einem Signal von jeder der mehreren Basisstationen gemessen. Daraus kann der Ort des Ziels relativ zu den mehreren Basisstationen unter Verwendung einer geschlossenen Lösung direkt berechnet werden. Dabei wird beispielsweise eine Ultrabreitbandfrequenz verwendet.

Die WO 01/93434 A2 beschreibt ein Verfahren, Gerät und computerlesbares Medium zum Ermöglichen und Blockieren von Kommunikationen mit einem entfernten Gerät basierend auf einer Entfernung des entfernten Geräts. Das Verfahren, auf dem das Gerät und das computerlesbare Medium basieren, umfasst das Senden einer Nachricht von einem lokalen Gerät an ein entferntes Gerät über ein drahtloses Ultrabreitband-(UWB)-Medium und das Empfangen einer Antwort von dem entfernten Gerät über das drahtlose UWB-Medium. Die Sende- und Empfangsschritte werden e gemäß einem Media Access Control (MAC)-Protokoll durchgeführt. Ein Abstand zwischen dem lokalen Gerät und dem entfernten Gerät wird dann basierend auf einer Zeit zwischen dem Senden der Nachricht und dem Empfangen der Antwort bestimmt und eine Funktion, wie beispielsweise eine Kommunikation mit dem entfernten Gerät, wird in dem lokalen Gerät basierend auf der bestimmten Entfernung ausgeführt. Die Kommunikation zwischen dem lokalen Gerät und dem entfernten Gerät wird je nach Entfernung des entfernten Geräts von dem lokalen Gerät aktiviert oder deaktiviert.

Die US 2007/025739 A1 beschreibt Systeme und Verfahren für eine drahtlose und drahtgebundene optische Datenkommunikation, insbesondere eine Infrarot-Datenkommunikation unter Verwendung von Techniken, welche der Ultra-Breitband-Hochfrequenz-Technologie entlehnt sind. Es wird ein optischer Datenkommunikationsempfänger zum Empfangen von Daten verwendet, die unter Verwendung optischer Impulspositionen kodiert sind, wobei der Empfänger Folgendes umfasst: eine Empfangsvorrichtung für optische Signale; einen Referenzsignalspeicher zum Speichern eines Referenzkanalantwortsignals; und einen Korrelator, der mit dem Referenzsignalspeicher und der Empfangsvorrichtung für optische Signale gekoppelt ist, um einen empfangenen optischen Impuls mit dem gespeicherten Referenzkanalantwortsignal zu korrelieren, um die Position des optischen Impulses zu bestimmen; und einen Ausgang, der mit dem Korrelator gekoppelt ist, um Impulspositionsdaten für den empfangenen optischen Impuls bereitzustellen.

Die WO 2006/102538 A2 beschreibt ein Fernüberwachungssystem, welches ein On-Body-Netzwerk von Sensoren und mindestens ein Analysegerät umfasst, das von einem Hub gesteuert wird. Die Sensoren überwachen Physiologie, Aktivität und Umweltbedingungen eines Menschen. Das Überwachungssystem umfasst einen Datenklassifikator, der Sensoreingaben nutzt, um einen Zustand der Person zu bestimmen, die das Fernüberwachungssystem trägt. Das Fernüberwachungssystem ist außerdem in der Lage, ein Maß an Vertrauen in den ermittelten Zustand zu bestimmen.

Der Erfindung liegt die Aufgabe zugrunde, ein verbessertes mobiles tragbares UWB-Kommunikationsgerät bereitzustellen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein mobiles tragbares UWB-Kommunikationsgerät, welches einen Prozessor, einen Speicher und eine Kommunikationsschnittstelle umfasst. Die Kommunikationsschnittstelle ist für eine kabellose UWB-Kommunikation konfiguriert. In dem Speicher ist eine Mehrzahl von Programminstruktionen zum Ausführen durch den Prozessor gespeichert. Ein Ausführen von Programminstruktionen der Mehrzahl von Programminstruktionen durch den Prozessor veranlasst den Prozessor dazu zum Übertragen von Daten eine UWB-Kommunikation unter Verwendung der Kommunikationsschnittstelle auszuführen.

In dem Speicher ist eine Mehrzahl von UWB-Datenkodierungsschemata gespeichert, welche zumindest ein erstes UWB-Datenkodierungsschema und ein von dem ersten UWB-Datenkodierungsschema verschiedenes zweites UWB-Datenkodierungsschema umfassen. In dem Speicher ist ferner eine Mehrzahl von Daten gespeichert ist, welche zumindest erste und zweite Daten umfasst. Die ersten Daten sind dem ersten UWB-Datenkodierungsschema und die zweiten Daten sind dem zweiten UWB-Datenkodierungsschema zugeordnet. Datenkodierungsschemata können auch ein Zertifikat oder kryptographisches Schlüsselmaterial beinhalten, beispielsweise zum Nachweis der Identität und/oder Authentizität des Profils oder Gerätes.

Zum Übertragen der ersten Daten mit einer ersten UWB-Datenkodierung wird eine erste UWB-Kommunikation ausgeführt, die gemäß dem ersten UWB-Datenkodierungsschema kodiert ist. Zum Übertragen der zweiten Daten mit einer von der ersten UWB-Datenkodierung verschiedenen zweiten UWB-Datenkodierung wird eine zweite UWB-Kommunikation ausgeführt, die gemäß dem zweiten UWB-Datenkodierungsschema kodiert ist.

Ausführungsformen können den Vorteil haben, dass zur sicheren Übertragung verschiedener Daten verschieden UWB-Datenkodierungsschema zur Kodierung der übertragenen Daten verwendet werden. Die Kenntnis des UWB-Datenkodierungsschemas ist nicht nur zum Dekodieren der übertragenen Daten notwendig, sondern im Fall einer UWB-Kommunikation zudem notwenige Voraussetzung, um überhaupt erkenn zu können, dass eine Datenübertragung stattfindet und/oder dass ein Daten übertragendes UWB-Kommunikationsgerät präsent ist. Ohne Kenntnis des UWB-Datenkodierungsschema sind die mittel UWB-Datenkodierung übermittelten Daten für einen außenstehenden nicht von statistischem Rauschen zu unterscheiden.

Eine Verwendung einer Mehrzahl von verschiedenen UWB-Datenkodierungsschemata, d.h. zwei oder mehr verschiedener UWB-Datenkodierungsschemata, zur Übertragung einer Mehrzahl von Daten, wobei die Daten jeweils einem der UWB-Datenkodierungsschemata zugeordnet sind, gemäß welchem sie zur Übertragung mittel UWB kodiert werden, die Daten einer Mehrzahl von verschiedenen UWB-Kommunikationskanälen zuzuordnen. Die verschiedenen UWB-Kommunikationskanäle sind durch die verschiedenen UWB-Datenkodierungsschemata charakterisiert, gemäß welchen die Datenübertragung über die jeweiligen UWB-Kommunikationskanäle kodiert ist. Kenntnis eines der UWB-Datenkodierungsschemas erlaubt es lediglich den UWB-Kommunikationskanal zu detektieren, über welchen Daten mit einer UWB-Datenkodierung gemäß des entsprechenden UWB-Datenkodierungsschemas betragen werden. Weder ermöglicht das entsprechende UWB-Datenkodierungsschema andere UWB-Kommunikationskanäle zu detektieren, welche andere UWB-Datenkodierungsschemata verwenden, noch ermöglicht entsprechende UWB-Datenkodierungsschema Daten zu detektieren, welche über andere UWB-Kommunikationskanäle übertragen werden. Nach Ausführungsformen ist mithin keine zusätzliche Verschlüsslung der übertragenen Daten unter Verwendung eines kryptographischen Schlüssels notwendig. Eine Verschlüsselung der übertragenen Daten ist vielmehr immanent in Form der UWB-Datenkodierung gemäß einem UWB-Datenkodierungsschema implementiert. Somit können Daten unterschiedlicher Bereiche und/oder unterschiedlicher Sicherheitsstufen bzw. mit unterschiedlichen Sicherheitsanforderungen unabhängig voneinander über unterschiedliche UWB-Kommunikationskanäle übertragen werden. Wird ein UWB-Datenkodierungsschema und damit ein UWB-Kommunikationskanal kompromittiert, so erhalten alle weiteren UWB-Kommunikationskanäle ihre sicherheitstechnische Integrität aufrecht.

Ausführungsformen können den Vorteil haben, dass nicht nur über einen Kommunikationskanal eine Verbindung zu Dienste- oder Plattformanbieter hergestellt werden kann, wie es unter Nutzung bekannter mobiler Kommunikationstechnologien, wie etwa Bluetooth, WLAN oder GSM der Fall ist. Bei solchen bekannten mobilen Kommunikationstechnologien zum Bereitstellen von Kommunikationsverbindungen zu Diensten werden auch Informationen aus externen Systemen über diesen einen Kanal an den Anwender übertragen. Bei wichtigen privaten Informationen sind daher zahlreiche zusätzliche Schutzmaßnahmen erforderlich, um die Sicherheit der entsprechenden Daten gewährleisten zu können. Die Verbindung des Nutzers zusammen mit einer Ortsposition gehört zum Beispiel zu einer der angewendeten Absicherungsstrategien.

Bekannte mobile Kommunikationstechnologien, wie etwa Bluetooth, WLAN oder auch GSM können in vielerlei Weise angegriffen oder gestört werden können. Fällt im Falle einer bekannte mobilen Kommunikationstechnologie beispielsweise der eine Kanal weg, ist keine Kommunikation, Ortung, Benachrichtigen etc. über die entsprechende Kommunikationstechnologie mehr möglich. Ferner bestehet eine hohe Abhängigkeit vom jeweiligen Anbieter bzw. Betreiber der Infrastruktur bzw. des Netzes der entsprechenden Kommunikationstechnologie.

Ausführungsformen können den Vorteil haben, dass unter Nutzung der UWB-Technologie eine breitbandige, nicht detektierbare, nicht störbare, mehrkanalige örtliche Kommunikationsverbindung bereitgestellt werden kann.

Eine Unterdrückung des UWB-Funksignales ist nicht ohne weiteres möglich, da das UWB-Funksignales parallel auf verschiedenen Frequenzen gleichzeitig gesendet wird. Dieses Sendemuster ist dynamisch wechselnd, mit einer UWB-Datenkodierung gemäß einem UWB-Datenkodierungsschema kodiert und nur den an der autorisierten Kommunikationsparteien bekannt. Ferner kann das UWB-Funksignales, anders als Funksignale im Falle von Bluetooth, WLAN, WiFi, GSM u.a., nicht über die Anwesenheit eines Signalträgers im entsprechenden Frequenzbereich geortet werden, da das UWB-Funksignal ohne Kenntnis des zur UWB-Datenkodierung verwendeten UWB-Datenkodierungsschemas quasi nur statistisches Rauschen darstellt.

UWB ("Ultra Wideband") bezeichnet eine drahtlose Übertragung elektromagnetischer impulsförmiger Signale über eine Mehrzahl paralleler Funkkanäle mit kleiner Sendeleistungen, z.B. bis maximal 1 mW. Hierbei werden beispielsweise Frequenzbereiche mit einer Bandbreite von mindestens 500 MHz und/oder von mindestens 20 % des arithmetischen Mittelwertes von unterer und oberer Grenzfrequenz des genutzten Frequenzbandes verwendet.

UWB basiert auf einer Erzeugung von Impulsen mit einer möglichst kurzen Pulsdauer, weshalb das über UWB-Antenne abgestrahlt bzw. empfangen Spektrum entsprechend den Gesetzen der Fourier-Transformation umso größer bzw. breiter ist, je kürzer die Pulsdauer ist.

Dabei ist das Produkt aus zeitlicher und spektraler Breite des Impulses konstant. Dabei wird die gesamte Sendeleistung von wenigen Milliwatt oder weniger auf einen so großen Frequenzbereich verteilt, dass für den Funkbetrieb schmalbandiger Übertragungsverfahren keine Störungen zu erwarten sind. Mithin ist es nicht oder nur schwer erkennbar, dass überhaupt eine Übertragung mit UWB stattfindet. Für einen schmalbandigen Empfänger erscheint ein UWB-Signal vielmehr wie ein Rauschen. Mithin wird eine kaum ortbare Kommunikation ermöglicht, welche im gleichen Frequenzbereich eingesetzt werden kann wie herkömmliche Übertragungsverfahren.

UWB verwendet keine feste Trägerfrequenz, welche moduliert wird. Eine Datenübertragung erfolgt vielmehr beispielsweise basierend auf einer Pulsphasenmodulation bzw. Pulspositionsmodulation ("Pulse-Position Modulation"/PPM) unter Verwendung einer Mehrzahl von Einzelpulsen. Weitere Möglichkeit zur Datenübertragung mittels UWB bietet eine Modulation von Polarität und/oder Amplitude der Impulse. Falls sich die Zeitpunkte der Einzelimpulse ausreichend unterscheiden, können mehrere UWB-Übertragungskanäle im gleichen Raumgebiet ohne gegenseitige Störung betrieben werden.

Mit zunehmender Bandbreite steigt die Übertragungskapazität, womit UWB-Systeme beispielsweise Nutzbitraten bis hin zum GBit/s-Bereich bereitstellen können. Reichweiten von UWB-Übertragungen können beispielsweise im Bereich von einigen wenigen Metern bis hin zu hundert Metern liegen.

Ein UWB-Datenkodierungsschema legt Modulationsparameter für die verwendeten Impulse fest. Die Modulationsparameter definieren, wie Impulse zu Modulieren sind, damit diese Informationen und mithin Daten übertragen.

Die UWB-Technologie nutzt einen breiten Bereich des elektromagnetischen Spektrums von z.B. 3 bis 9 GHz und sendet gleichzeitig auf einer Vielzahl von Kanälen eine Art Bitmuster, welche gemäß einem spezifischen UWB-Datenkodierungsschemas kodiert ist. Ist einem Kommunikationspartner das verwendete UWB-Datenkodierungsschema bekannt, so kann dieser einen angebotenen UWB-Kommunikationskanal detektieren und an der Kommunikation teilnehmen. Werden nun simultan mehrere solcher UWB-Datenkodierungsschemata zum Kodieren mehrerer simultaner Kommunikationskanäle verwendet, können diese simultane Kommunikationskanäle parallel aufrechterhalten werden.

Ein Benutzer eines UWB-Kommunikationsgeräts kann unabhängig von einem einzelnen Kommunikationskanal selbst entscheiden, welche Daten auf welchem UWB-Kommunikationskanal, d.h. mit welcher UWB-Datenkodierung kodiert, preisgegeben oder genutzt werden. Die Hoheit liegt hierbei beim Benutzer des UWB-Kommunikationsgeräts und nicht mehr bei einem Diensteanbieter der Kommunikationsinfrastruktur.

Ähnlich einer Zwiebelschale kann ein Benutzer eines UWB-Kommunikationsgeräts gemäß einer der Ausführungsformen mehrere UWB-Kommunikationsebenen bzw. UWB-Kommunikationskanäle gleichzeitig lokal betreiben und vollständig selbst entscheiden, wo für wen wann welche Daten sichtbar sind.

Nach Ausführungsformen verwenden das erste und zweite UWB-Datenkodierungsschema jeweils dasselbe Kodierungsverfahren. Ausführungsformen können den Vorteil haben, dass trotz Verwendung ein und desselben Kodierungsverfahren die Übertragungen der ersten und zweiten Daten unabhängig voneinander durch Verwendung verschiedener UWB-Datenkodierungsschema geschützt werden können. Zudem kann so auch ein simultanes Übertragen ermöglicht werden, ohne dass sich die Übertragung der Daten gegenseitig in die Quere kommen würden.

Nach Ausführungsformen verwenden das erste und zweite datenspezifische UWB-Datenkodierungsschema jeweils verschiedene Kodierungsverfahren. Ausführungsformen können den Vorteil haben, dass durch Verwendung verschiedener Kodierungsverfahren, die Sicherheit zusätzlich erhöht werden kann, da sich die Kodierung der verschiedenen UWB-Kommunikationskanäle nicht nur durch die verwendeten UWB-Datenkodierungsschemata unterscheiden, sondern zusätzlich auch in den Kodierungsverfahren, die den UWB-Datenkodierungsschemata zugrundliegen.

Nach Ausführungsformen werden eines oder mehrere der folgenden Kodierungsverfahren verwendet: Pulspositionsmodulation, Pulspolaritätsmodulation, Pulsamplitudenmodulation, orthogonale Pulsformmodulation. Ausführungsformen können den Vorteil haben, dass ein effektives und/oder effizientes Kodierungsverfahren bereitgestellt wird.

Eine Pulspositionsmodulation bzw. Pulsphasenmodulation (engl. "pulse position modulation") bezeichnet eine Modulation zur Datenübertragung unter Verwendung für zeitdiskret abgetastete Signale. Ein Impuls wird relativ zu einem konstanten Referenztakt in der zeitlichen Position, d.h. Phase, verschoben. Diese Phasenverschiebung kodiert die zu übertragenden Daten, während Periodendauer und Amplitude des Impulses bleiben gleich. Falls sich die Zeitpunkte der Einzelimpulse ausreichend unterscheiden, können mehrere UWB-Kommunikationen bzw. UWB-Kommunikationskanäle im gleichen Raumgebiet ohne gegenseitige Störung betrieben werden.

Im Falle einer Pulspolaritätsmodulation wird die Polarität der übertragenen Impulse moduliert bzw. verändert. Diese Polaritätsmodulation kodiert die zu übertragenden Daten. Im Falle einer Pulsamplitudenmodulation wird die Amplitude der übertragenen Impulse moduliert bzw. verändert. Diese Amplitudenmodulation kodiert die zu übertragenden Daten. Eine orthogonale Pulsformmodulation verwendet zwei orthogonale UWB-Pulsformen, welche zusätzlich polaritätsmoduliert werden. Die Impulse können im Falle einer solchen Modulation fortlaufend als kontinuierlicher Strom gesendet werden, wodurch die Bitrate gleich der Impulsrate sein kann. Nach Ausführungsformen werden Modulationsdatenbits gescrambelt bzw. zerhackt oder weiß gemacht ("whitened"), um das Auftreten von Einsen und Nullen zufällig zu machen.

Nach Ausführungsformen werden gemäß unterschiedlichen UWB-Datenkodierungsschemata kodierte UWB-Kommunikationen zumindest zeitweise parallel auf unterschiedlichen UWB-Kanälen, unter Verwendung eines seriellen Multiplex-Verfahren ineinander verschränkt und/oder unter Verwendung eines Zeitmultiplex-Verfahrens abwechselnd nacheinander gesendet. Nach Ausführungsformen werden gemäß unterschiedlichen UWB-Datenkodierungsschemata kodierte UWB-Kommunikationen parallel auf unterschiedlichen UWB-Kanälen, unter Verwendung eines seriellen Multiplex-Verfahren ineinander verschränkt und/oder unter Verwendung eines Zeitmultiplex-Verfahrens abwechselnd nacheinander gesendet.

Ausführungsformen können den Vorteil haben, dass eine Mehrzahl von UWB-Kommunikationen ausgeführt werden können, welche beispielsweise mit unterschiedlichen UWB-Datenkodierungsschemata kodiert sind. Mehreren UWB-Kommunikationen können beispielsweise parallel auf mehreren unterschiedlichen UWB-Kanälen gesendet werden, mehrere UWB-Kommunikationen können beispielsweise unter Verwendung eines seriellen Multiplex-Verfahren ineinander verschränkt gesendet werden und/oder mehrere UWB-Kommunikationen können beispielsweise unter Verwendung eines Zeitmultiplex-Verfahrens abwechselnd nacheinander gesendet werden.

Nach Ausführungsformen werden die ersten Daten mit der ersten UWB-Datenkodierung und die zweiten Daten mit der zweiten UWB-Datenkodierung zumindest zeitweise simultan übertragen. Ausführungsformen können den Vorteil haben, dass aufgrund der verschiedenen UWB-Datenkodierungsschemata, welche zur Kodierung der Daten verwendet werden, eine simultane Übertragung ermöglicht wird, ohne dass sich die übertragenen Daten die Quere kämmen und ohne, dass für einen Empfänger einer der Daten erkennbar wäre, ob weitere Datenübertragung stattfinden, noch die übertragenen Daten dekodierbar wären.

Nach Ausführungsformen umfasst die gespeicherte Mehrzahl von Programminstruktionen erste Programminstruktionen einer ersten Dienstanwendung und zweite Programminstruktionen einer zweiten Dienstanwendungen. Bei den ersten Daten handelt es sich um Daten der ersten Dienstanwendung und bei den zweiten Daten um Daten der zweiten Dienstanwendung. Bei dem ersten UWB-Datenkodierungsschema handelt es sich um ein erstes dienstspezifisches UWB-Datenkodierungsschema der ersten Dienstanwendung und bei dem zweiten UWB-Datenkodierungsschema um ein zweites dienstspezifisches UWB-Datenkodierungsschema der zweiten Dienstanwendung.

Ausführungsformen können den Vorteil haben, dass verschiedenen Dienstanwendungen verschiedene dienstspezifische UWB-Datenkodierungsschemata zugeordnet werden können. Somit wird eine Kommunikation der beiden Dienstanwendungen und/oder weiterer Dienstanwendungen ermöglicht, ohne dass eine Dienstanwendung oder der unter Verwendung der entsprechenden Dienstanwendung bereitgestellte Dienst Kenntnis von der anderen Dienstanwendung und/oder dem unter Verwendung der entsprechenden Dienstanwendung bereitgestellte Dienst erlangt.

Bei den Dienstanwendungen kann es sich um unterschiedliche Arten von Anwendungen über welche Dienste bereitgestellt und/oder in Anspruch genommen werden können. Bei dem Dienst kann es sich beispielsweise um einen Dienst im Bereich des Personennahverkehrs, insbesondere des öffentlichen Personennahverkehrs handeln. Beispielsweise kann ein Nahverkehrs-Funknetz, d.h. ein nahverkehrsspezifisches UWB-Funknetz, eine entsprechende UWB-Kommunikation mit einer eigenständigen UWB-Datenkodierung unter Verwendung eines dienstspezifischen UWB-Datenkodierungsschemas eines Dienstleisters des öffentlichen Personennahverkehres. Beispielsweise können über eine entsprechende Nahverkehrs-Dienstanwendung, welche über das Nahverkehrs-Funknetz, etwa mit Servern eines oder mehrerer Nahverkehrsdienstleitern, kommuniziert, Fahrscheine gekauft, Sitzplatze reserviert werden, Parktickets gelöst werden, etc. Beispielsweise handelt es ich bei dem Dienst um einen Dienst der öffentlichen Verwaltung. Beispielsweise wird ein öffentliches Funknetz, d.h. ein UWB-Funknetz der öffentlichen Verwaltung, zur Kommunikation mit und/oder Legitimation gegenüber Behörden verwendet. Hierbei erfolgt beispielsweise eine UWB-Kommunikation mit einer eigenständigen UWB-Datenkodierung unter Verwendung eines dienstspezifischen UWB-Datenkodierungsschemas der öffentlichen Verwaltung und/oder einer Behörde. Beispielsweise handelt es ich bei dem Dienst um einen privaten Nachrichtendienst, z.B. einen Nachrichtensofortdienst (engl. "Instant Messaging" Dienst), über welchen Text-, Sprach- und/oder Videonachrichten und/oder Dateien an andere Nutzer übertragen bzw. von diesen empfangen werden können. Beispielsweise wird ein privates Funknetz, d.h. ein UWB-Funknetz zur Kommunikation mit Freunden und Bekannten in der Nähe verwendet. Hierbei erfolgt beispielsweise eine UWB-Kommunikation mit einer eigenständigen UWB-Datenkodierung unter Verwendung eines dienstspezifischen UWB-Datenkodierungsschemas eines privaten Nachrichtendienstes.

Ausführungsformen können den Vorteil haben, dass durch Umsetzung der Strategie der Trennung von Diensten ein effektiver Datenschutz implementiert werden kann.

Nach Ausführungsformen werden die erste und zweite Dienstanwendung zumindest zeitweise simultan ausgeführt. Ausführungsformen können den Vorteil haben, dass das zwei oder mehr Dienstanwendungen simultan ausgeführt und dabei simultan Daten übertragen können, ohne dass sich die Dienstanwendungen oder zugrundeliegenden Dienste gegenseitig stören oder Kenntnis voneinander erlangen.

Beispielsweise können so mehrere Dienste parallel genutzt werden. So können beispielsweise unter Verwendung einer Nahverkehrsdienstanwendung über ein UWB-Nahverkehrs-Funknetz Fahrscheine gekauft, Sitzplätze reserviert oder Parktickets gelöst werden, unter Verwendung einer Dienstanwendung der öffentlichen Verwaltung kann über ein öffentliches UWB-Funknetz eine Kommunikation mit und/oder eine Legitimation gegenüber Behörden erfolgen, unter Verwendung einer privaten Nachrichtendienstanwendung können über ein privates UWB-Funknetz Nachrichten ausgetauscht werden.

Nach Ausführungsformen umfasst die gespeicherte Mehrzahl von Programminstruktionen dritte Programminstruktionen einer dritten Dienstanwendung. Die gespeicherte Mehrzahl von Daten umfasst dritte Daten der dritten Dienstanwendung. Die dritten Daten sind dem ersten UWB-Datenkodierungsschema zugeordnet. Zum Übertragen der dritten Daten mit der ersten UWB-Datenkodierung wird die erste UWB-Kommunikation ausgeführt, die gemäß dem ersten UWB-Datenkodierungsschema kodiert ist.

Ausführungsformen können den Vorteil haben, dass zwei oder mehr Dienstanwendungen dasselbe UWB-Datenkodierungsschema zur UWB-Datenkodierung verwenden können. Bei diesen Dienstanwendungen, welche dasselbe UWB-Datenkodierungsschema zur UWB-Datenkodierung verwenden, kann es sich beispielsweise um Dienstanwendungen aus demselben Bereich von Diensten bzw. um Anwendungen handeln, welche dieselbe Art von Diensten und/oder abhängige bzw. zusammenhängende Dienste bereitstellen. Somit kann beispielsweise ein dienstbereichsspezifisches UWB-Funknetz implementiert werden.

Nach Ausführungsforme verwendet jede auf dem UWB-Kommunikationsgerät implementierte Dienstanwendung ein anderes UWB-Datenkodierungsschema zur UWB-Datenkodierung. Ausführungsformen können den Vorteil haben, dass die UWB-Kommunikationen aller Dienstanwendungen unabhängig voneinander sind. Somit kann beispielsweise eine Mehrzahl dienstspezifischer UWB-Funknetze implementiert werden.

Nach Ausführungsformen werden die dritten Daten mit der ersten UWB-Datenkodierung zumindest zeitweise simultan mit den zweiten Daten mit der zweiten UWB-Datenkodierung übertragen werden. Ausführungsformen können den Vorteil haben, dass aufgrund der verschiedenen UWB-Datenkodierungsschemata, welche zur Kodierung der Daten verwendet werden, eine simultane Übertragung ermöglicht wird, ohne dass sich die übertragenen Daten gegenseitig stören und ohne, dass für einen Empfänger einer der Daten erkennbar wäre, ob weitere Datenübertragung stattfinden, noch die übertragenen Daten dekodierbar wären.

Nach Ausführungsformen wird die dritte Dienstanwendung zumindest zeitweise simultan mit der zweiten Dienstanwendung ausgeführt. Ausführungsformen können den Vorteil haben, dass die zweite und dritte Dienstanwendungen simultan ausgeführt und dabei simultan Daten übertragen können, ohne dass sich die Dienstanwendungen oder zugrundeliegenden Dienste gegenseitig stören oder Kenntnis voneinander erlangen.

Nach Ausführungsformen umfasst das mobile tragbare UWB-Kommunikationsgerät ferner eine Benutzerschnittstelle. Die gespeicherte Mehrzahl von Programminstruktionen umfasst ferner vierte Programminstruktionen. Ein Ausführen der vierten Programminstruktionen durch den Prozessor veranlasst den Prozessor dazu einem Benutzer des mobilen tragbaren UWB-Kommunikationsgeräts mittels der Benutzerschnittstelle eine graphische Benutzeroberfläche zum datenspezifischen Zuordnen der Daten der gespeicherten Mehrzahl von Daten zu den UWB-Datenkodierungsschemata der gespeicherten Mehrzahl von UWB-Datenkodierungsschemata bereitzustellen.

Ausführungsformen können den Vorteil haben, dass es dem Benutzer unter Verwendung der von der Benutzerschnittstelle bereitgestellten graphischen Benutzeroberfläche ermöglicht wird, datenspezifischen Zuordnen von gespeicherten Daten zu UWB-Datenkodierungsschemata festzulegen. Somit kann der Benutzer entscheiden, welche Daten über welche UWB-Kommunikationskanäle übertragen werden bzw. auf welche UWB-Kommunikationskanäle sichtbar werden. Mit anderen Worten kann der Benutzer so selbst entscheiden, wo für wen wann welche Daten sichtbar sind.

Nach Ausführungsformen sind die Daten der gespeicherten Mehrzahl von Daten jeweils genau einem UWB-Datenkodierungsschema der gespeicherten Mehrzahl von UWB-Datenkodierungsschemata zugeordnet. Ausführungsformen können den Vorteil haben, dass die Daten jeweils nur über einen UWB-Kommunikationskanal übertragen werden können bzw. auf einem UWB-Kommunikationskanal sichtbar sind. Nach Ausführungsformen sind einzelne oder alle Daten der gespeicherten Mehrzahl von Daten jeweils mehreren UWB-Datenkodierungsschemata der gespeicherten Mehrzahl von UWB-Datenkodierungsschemata zugeordnet. Ausführungsformen können den Vorteil haben, dass die entsprechenden Daten jeweils nur über mehrere UWB-Kommunikationskanäle übertragen werden können bzw. auf mehreren UWB-Kommunikationskanal sichtbar werden können.

Nach Ausführungsformen wird unter Verwendung der ersten UWB-Kommunikation mit der ersten UWB-Datenkodierung gemäß dem ersten UWB-Datenkodierungsschema ein erster kryptographischer Schlüssel bereitgestellt. Die Kommunikationsschnittstelle ist ferner für eine zusätzliche kabellose, UWB-lose Kommunikation konfiguriert. Die gespeicherte Mehrzahl von Daten umfasst ferner vierte Daten. Die gespeicherte Mehrzahl von Programminstruktionen umfasst ferner fünfte Programminstruktionen. Ein Ausführen der fünften Programminstruktionen durch den Prozessor veranlasst den Prozessor dazu zum Übertragen der vierten Daten die zusätzliche Kommunikation unter Verwendung der Kommunikationsschnittstelle auszuführen. Die übertragenen vierten Daten sind unter Verwendung des bereitgestellten ersten kryptographischen Schlüssels verschlüsselt.

Ausführungsformen können den Vorteil haben, dass der erste kryptographische Schlüssel in sicherer Weise unter der mit einer UWB-Datenkodierung gemäß einem UWB-Datenkodierungsschema kodierten UWB-Kommunikation bereitgestellt werden kann. Da die UWB-Kommunikation nur für berechtigte Teilnehmer, welche Kenntnis von dem verwendeten UWB-Datenkodierungsschema haben bzw. sich in dessen besitz befinden, detektierbar und dekodierbar ist, wird der kryptographischen Schlüssel in effektiver Weise vor unberechtigten Zugriffen geschützt, ohne dass eine zusätzliche Verschlüsselung der UWB-Kommunikation mit einem weiteren kryptographischen Schlüssel notwendig wäre. Somit kann ein Schlüsselaustausch kryptographischer Schlüssel oder ein Bereitstellen eines kryptographischen Schlüssels zur Absicherung zusätzlicher kabelloser, UWB-loser Kommunikationen vereinfacht werden. Bei der zusätzliche kabellose, UWB-lose Kommunikation kann es sich beispielsweise um eine Kommunikation unter Verwendung von Bluetooth, WLAN, WiFi oder GSM handeln. Als abhörsicher oder sicher gegen unbefugtes Eindringen gelten Übertragungen unter Verwendung von Bluetooth, WLAN, WiFi oder GSM nur dann, wenn sie als Verbindung mit mehrstufiger dynamischer Schlüsselvergabe betrieben werden. Bei statischer Schlüsselvergabe ist die Sicherheit begrenzt. Insbesondere die Übertragung der Schlüssel ein gefährdeter Teil der Kommunikation, da erst ein erfolgreicher Schlüsselaustausch eine Verbindung zu schützen vermag. Nach Ausführungsformen wird dieser besonders gefährdete Teil der Kommunikation in den Bereich der gesicherten UWB-Kommunikation verschoben, beispielsweise auch zusätzlich unter der Nutzung der Ortungsmöglichkeiten von UWB.

Nach Ausführungsformen handelt es sich bei dem ersten kryptographischen Schlüssel um einen symmetrischen kryptographischen Schlüssel. Nach Ausführungsformen handelt es sich bei dem ersten kryptographischen Schlüssel um einen privaten oder einen öffentlichen kryptographischen Schlüssel eines asymmetrischen kryptographischen Schlüsselpaars. Der bereitgestellte kryptographisch Schlüssel kann somit je nach Ausführungsform für ein symmetrisches oder asymmetrisches Verschlüsseln von Daten, welche das UWB-Kommunikationsgerät sendet, oder für ein Entschlüsseln von symmetrisch oder asymmetrisch verschlüsselten Daten verwendet werden, welche das UWB-Kommunikationsgerät empfängt. Nach Ausführungsformen kann auch ein hybrides Verschlüsselungsverfahren zum Einsatz kommen, welches eine Kombination aus asymmetrischer Verschlüsselung und symmetrischer Verschlüsselung umfasst. Nach Ausführungsformen können unter Verwendung der ersten UWB-Kommunikation mit der ersten UWB-Datenkodierung gemäß dem ersten UWB-Datenkodierungsschema eine Mehrzahl erster kryptographischer Schlüssel bereitgestellt werden. Nach Ausführungsformen kann die bereitgestellte Mehrzahl von kryptographischen Schlüsseln ein oder mehrere asymmetrische, d.h. private und/oder öffentliche, kryptographische Schlüssel, und/oder ein oder mehrere symmetrische kryptographische Schlüssel umfassen.

Nach Ausführungsformen umfasst das Bereitstellen des ersten kryptographischen Schlüssels ein Übertragen des kryptographischen Schlüssels unter Verwendung der ersten UWB-Kommunikation oder eines Geheimnisses zum Berechnen des ersten kryptographischen Schlüssels. Nach Ausführungsformen erfolgt das Übertragen von dem mobilen tragbaren UWB-Kommunikationsgerät an eine externe UWB-Kommunikationsvorrichtung eines UWB-Kommunikationssystems, insbesondere eine stationäre UWB-Kommunikationsvorrichtung eines lokalen UWB-Kommunikationssystems. Nach Ausführungsformen erfolgt das Übertragen von der externen UWB-Kommunikationsvorrichtung an das mobile tragbare UWB-Kommunikationsgerät.

Nach Ausführungsformen wird der bereitgestellte kryptographische Schlüssel zum Aufbau einer Ende-zu-Ende-Verschlüsselung der zusätzlichen Kommunikation zwischen dem mobilen tragbaren UWB-Kommunikationsgerät und einer externen Kommunikationsvorrichtung verwendet. Nach Ausführungsformen wird der bereitgestellte kryptographische Schlüssel zum Aufbau einer Ende-zu-Ende-Verschlüsselung der zusätzlichen Kommunikation zwischen dem mobilen tragbaren UWB-Kommunikationsgerät und einem externen Server, welcher mit dem mobilen tragbaren UWB-Kommunikationsgerät über die externen Kommunikationsvorrichtung kommuniziert. Die Ende-zu-Ende-Verschlüsselung kann beispielsweise ein symmetrisches, asymmetrisches oder hybrides Verschlüsselungsverfahren zur Verschlüsselung verwenden. Ausführungsformen können den Vorteil haben, dass eine sichere Datenübertragung zwischen mobilen tragbaren UWB-Kommunikationsgerät und der externen Kommunikationsvorrichtung oder dem externen Server, etwa einem Server eines Dienstanbieters, implementiert werden kann.

Nach Ausführungsformen wird und/oder ist der bereitgestellte erste kryptographische Schlüssel in einem geschützten Speicherbereich des Speichers des mobilen tragbaren UWB-Kommunikationsgeräts gespeichert. Unter einem "geschützten Speicherbereich" wird hier ein Bereich eines elektronischen Speichers verstanden, auf den ein Zugriff, beispielsweise ein Lesezugriff oder ein Schreibzugriff, ausschließlich über einen mit dem Speicher gekoppelten Prozessor möglich. Der mit dem Speicher gekoppelten Prozessor ermöglicht einen Zugriff auf geschützten Speicherbereich beispielsweise nur dann, wenn eine hierfür erforderliche Bedingung erfüllt ist. Bei dieser Bedingung kann es sich zum Beispiel um eine kryptografische Bedingung, insbesondere eine erfolgreiche Authentisierung und/oder eine erfolgreiche Berechtigungsprüfung, handeln. Beispielsweise ist ein Zugriff auf bestimmte kryptographische Programme und/oder Dienstanwendungen beschränkt.

Nach Ausführungsformen sind in dem geschützten Speicherbereich des Speichers des mobilen tragbaren UWB-Kommunikationsgeräts Daten, beispielsweise die ersten, zweiten, dritten und/oder vierten Daten gespeichert. Nach Ausführungsformen sind die UWB-Datenkodierungsschemata, beispielsweise das erste und zweite UWB-Datenkodierungsschema gespeichert.

Nach Ausführungsformen werden die ersten Daten mit der ersten UWB-Datenkodierung der ersten UWB-Kommunikation ohne zusätzliche Verschlüsselung unter Verwendung eines kryptographischen Schlüssels übertragen und/oder die zweiten Daten werden mit der zweiten UWB-Datenkodierung der zweiten UWB-Kommunikation ohne zusätzliche Verschlüsselung unter Verwendung eines kryptographischen Schlüssels übertragen. Ausführungsformen können den Vorteil haben, dass eine Absicherung der mittels UWB übertragenen durch die UWB-Datenkodierung erfolgt. Somit ist keine zusätzliche der Übertragung vorgeschaltete oder nachgeschaltete Verschlüsslung bzw. Entschlüsselung der Daten notwendig. Eine Absicherung erfolgt vielmehr instantan mit dem Senden der Daten.

Nach Ausführungsformen sind die mit der ersten UWB-Datenkodierung der ersten UWB-Kommunikation übertragenen ersten Daten unter Verwendung eines zweiten kryptographischen Schlüssels zusätzlich verschlüsselt und/oder die mit der zweiten UWB-Datenkodierung der zweiten UWB-Kommunikation übertragenen zweiten Daten sind unter Verwendung eines dritten kryptographischen Schlüssels zusätzlich verschlüsselt. Ausführungsformen können den Vorteil haben, dass zusätzlich zu der Absicherung der übertragenen Daten durch die UWB-Datenkodierung eine Verschlüsselung erfolgt. Somit kann sichergestellt werden, dass beispielsweise im Falle einer Mehrzahl von Teilnehmern einer UWB-Kommunikation bzw. eines UWB-Netzwerks, welche alle über das zur UWB-Datenkodierung verwendete UWB-Datenkodierungsschema verfügen, nur der oder die Teilnehmer Zugriff auf die übertragenen Daten erhalten, welche über einen kryptographischen Schlüssel zum Entschlüsseln der unter Verwendung des dritten kryptographischen Schlüssels zusätzlich verschlüsselten Daten verfügen.

Nach Ausführungsformen ist für die ersten und/oder zweiten Daten festgelegt, dass diese ausschließlich unter Verwendung von UWB übertragen werden. Nach Ausführungsformen ist für die ersten Daten festgelegt, dass diese ausschließlich unter Verwendung des ersten UWB-Datenkodierungsschemas übertragen werden, und/oder für die zweiten Daten ist festgelegt, dass diese ausschließlich unter Verwendung des zweiten UWB-Datenkodierungsschemas übertragen werden. Ausführungsformen können den Vorteil haben, dass die Übertragung dieser Daten nur für Besitzer des verwendeten UWB-Datenkodierungsschemas detektierbar und lesbar ist

Nach Ausführungsformen ist Voraussetzung zum Aufbau der UWB-Kommunikationen durch das mobile tragbare UWB-Kommunikationsgerät jeweils ein Erfassen einer UWB-Kommunikationsvorrichtung, die zu einer Kommunikation mittel UWB konfiguriert ist, in deren Reichweite sich das mobile tragbare UWB-Kommunikationsgerät befindet und die zur kabellosen UWB-Kommunikation eine UWB-Datenkodierung verwendet, welche gemäß einem der UWB-Datenkodierungsschemata der gespeicherten Mehrzahl von UWB-Datenkodierungsschemata kodiert ist.

Ausführungsformen können den Vorteil haben, dass eine Kommunikation mittel UWB auf UWB-Kommunikationsvorrichtung vor Ort bzw. in der Nähe des mobilen tragbaren Kommunikationsgeräts beschränkt ist. UWB kann je nach Konfiguration beispielsweise eine Reichweite von 10 bis 15 m haben. Ferner kann sichergestellt werden, dass eine Kommunikation nur mit berechtigten Kommunikationspartner bzw. UWB-Kommunikationsvorrichtungen erfolgt, welche sich im Besitz des für die UWB-Datenkodierung verwendeten UWB-Datenkodierungsschemas befinden.

Da der erste Aufbau einer UWB-Kommunikation zu einem präferierten Kommunikationspartner über die Bedingungen bzw. Voraussetzungen "Nähe", d.h. Aufenthalt in Reichweite der UWB-Kommunikationsvorrichtung, und Kenntnis des UWB-Datenkodierungsschemas erfolgt, können alle anderen Verbindungsarten wie Bluetooth, WLAN, WiFi und/oder GSM danach hinzugeschaltet werden. Für eine kryptographische Absicherung der anderen Verbindungsarten kann eine Verschlüsselung unter Verwendung eines über den sicheren UWB-Kommunikationskanal bereitgestellten kryptographischen Schlüssel erfolgen.

Nach Ausführungsformen kann es sich bei der UWB-Kommunikationsvorrichtung beispielsweise um ein weiteres mobiles tragbares Kommunikationsgerät oder eine stationäre UWB-Kommunikationsvorrichtung handeln. Nach Ausführungsformen können das mobile tragbare Kommunikationsgerät und die UWB-Kommunikationsvorrichtung Netzwerkknoten eines UWB-Mesh-Netzwerks bilden.

Nach Ausführungsformen umfasst das Erfassen der UWB-Kommunikationsvorrichtung ein Empfangen und erfolgreiches Dekodieren einer von der UWB-Kommunikationsvorrichtung gesendeten ersten UWB-Nachricht, welche die Anwesenheit der UWB-Kommunikationsvorrichtung anzeigt, durch das mobile tragbare UWB-Kommunikationsgerät unter Verwendung eines der UWB-Datenkodierungsschemata der gespeicherten Mehrzahl von UWB-Datenkodierungsschemata. Nach Ausführungsformen sendet das mobile tragbare UWB-Kommunikationsgerät in Antwort auf das erfolgreiche Dekodieren der ersten UWB-Nachricht eine die Anwesenheit des mobilen tragbaren UWB-Kommunikationsgeräts anzeigende zweite UWB-Nachricht an die UWB-Kommunikationsvorrichtung. Die gesendete zweite UWB-Nachricht ist mit einer UWB-Datenkodierung gemäß demselben UWB-Datenkodierungsschema wie die erste UWB-Nachricht kodiert.

Ausführungsformen können den Vorteil haben, dass der Aufbau der UWB-Kommunikation von der UWB-Kommunikationsvorrichtung imitiert wird. Somit bleibt das mobile tragbare UWB-Kommunikationsgerät für die UWB-Kommunikationsvorrichtung solange unsichtbar, bis das mobile tragbare UWB-Kommunikationsgerät aktiv an der UWB-Kommunikation teilnimmt, d.h. die zweite UWB-Nachricht in Antwort auf die erste UWB-Nachricht an die UWB-Kommunikationsvorrichtung sendet. Ferner kann somit sichergestellt werden, dass das mobile tragbare UWB-Kommunikationsgerät nur an UWB-Kommunikationen mit Kommunikationspartner aktiv teilnimmt, welche über ein dem mobilen tragbaren UWB-Kommunikationsgerät bekanntes und zu diesen Kommunikationszwecken autorisiertes UWB-Datenkodierungsschema zur UWB-Datenkodierung verfügen. Beispielsweise kann der die Verwendung des UWB-Datenkodierungsschemas durch die UWB-Kommunikationsvorrichtung als Nachweis der Autorisierung des UWB-Kommunikationsvorrichtung zur Kommunikation mit dem mobilen tragbaren UWB-Kommunikationsgerät und/oder zur Authentifizierung der UWB-Kommunikationsvorrichtung dienen.

Nach Ausführungsformen handelt es sich bei dem UWB-Datenkodierungsschema, gemäß dem die von der UWB-Kommunikationsvorrichtung verwendete UWB-Datenkodierung kodiert ist, um das erste oder zweite UWB-Datenkodierungsschema.

Ausführungsformen umfassen ferner ein UWB-Kommunikationssystem, welches ein mobiles tragbares UWB-Kommunikationsgerät nach einer der vorangehenden Ausführungsformen und eine UWB-Kommunikationsvorrichtung umfasst, die zu einer Kommunikation mittels UWB konfiguriert ist und zur kabellosen UWB-Kommunikation eine UWB-Datenkodierung verwendet, welche gemäß einem der UWB-Datenkodierungsschemata der gespeicherten Mehrzahl von UWB-Datenkodierungsschemata kodiert ist. Nach Ausführungsformen ist die UWB-Kommunikationsvorrichtung von einer Mehrzahl von Kommunikationsvorrichtungen des UWB-Kommunikationssystems umfasst. Die Mehrzahl von Kommunikationsvorrichtungen umfasst erste UWB-Kommunikationsvorrichtungen, welche zu einer Kommunikation mittels UWB konfiguriert und zu einem UWB-Mesh-Netzwerk zusammengeschlossen sind. Die ersten UWB-Kommunikationsvorrichtungen bilden jeweils einen Netzwerkknoten des UWB-Mesh-Netzwerks. Die UWB-Kommunikationsvorrichtung gehört zu den ersten UWB-Kommunikationsvorrichtungen der Mehrzahl von Kommunikationsvorrichtungen.

Nach Ausführungsformen kann es sich bei den ersten UWB-Kommunikationsvorrichtungen um mobile tragbare oder stationäre Kommunikationsgeräte handeln. Mehrere UWB-Kommunikationsgeräte können sich zu einem Mesh-Netzwerk zusammenschließen um Daten bzw. Informationen ohne zusätzliche externe Netze auszutauschen bzw. zu verteilen.

Nach Ausführungsformen verwenden die ersten UWB-Kommunikationsvorrichtungen zur Kommunikation untereinander innerhalb des UWB-Mesh-Netzwerks eine gemäß einem UWB-Kodierungsschema der gespeicherten Mehrzahl von UWB-Kodierungsschemata kodierte UWB-Kodierung. Ausführungsformen können den Vorteil haben, dass das mobile tragbare UWB-Kommunikationsgerät an der Kommunikation innerhalb des UWB-Mesh-Netzwerks teilnehmen kann. Somit kann durch das UWB-Mesh-Netzwerks beispielsweise ein dienstspezifisches oder datenspezifisches UWB-Netzwerk zur Verfügung gestellt werden. Nach Ausführungsformen kann es sich bei dem mobilen tragbaren UWB-Kommunikationsgerät um einen Netzwerkknoten des UWB-Mesh-Netzwerks handeln.

Nach Ausführungsformen verwenden die ersten UWB-Kommunikationsvorrichtungen zur Kommunikation untereinander innerhalb des UWB-Mesh-Netzwerks eine gemäß einem UWB-Kodierungsschema kodierte UWB-Kodierung, welches nicht in dem Speicher des mobilen tragbaren Kommunikationsgeräts gespeichert ist. Ausführungsformen können den Vorteil haben, dass die Kommunikation innerhalb des UWB-Mesh-Netzwerks für das mobile tragbare UWB-Kommunikationsgerät weder detektierbar noch lesbar ist. Nach Ausführungsformen wird für die Kommunikation zwischen mobilem tragbarem Kommunikationsgerät und den UWB-Kommunikationsvorrichtungen des UWB-Mesh-Netzwerks ein anderes UWB-Kodierungsschema zum Kodieren der UWB-Kodierung verwendet als für die Kommunikation der UWB-Kommunikationsvorrichtungen untereinander innerhalb des UWB-Mesh-Netzwerks.

Nach Ausführungsformen umfasst die Mehrzahl von Kommunikationsvorrichtungen ferner zweite Kommunikationsvorrichtungen, welche zu einer kabellosen, UWB-losen Kommunikation konfiguriert sind. Ausführungsformen können den Vorteil haben, dass neben einer UWB-Kommunikation zwischen dem mobilen tragbaren UWB-Kommunikationsgerät und den ersten UWB-Kommunikationsvorrichtungen zusätzlich eine kabellosen, UWB-losen Kommunikation zwischen dem mobilen tragbaren UWB-Kommunikationsgerät und den zweiten Kommunikationsvorrichtungen zur Verfügung steht. Die zusätzliche kabellose, UWB-lose Kommunikation verwendet beispielsweise Bluetooth, WLAN, WiFi oder GSM.

Nach Ausführungsformen ist die kabellose, UWB-lose Kommunikation der zweiten Kommunikationsvorrichtungen jeweils unter Verwendung eines kryptographischen Schlüssels verschlüsselt, welcher innerhalb des UWB-Kommunikationssystems über eine kabellose UWB-Kommunikation bereitgestellt wird. Ausführungsformen können den Vorteil haben, dass das ein sicherer und effizienter Schlüsselaustausch unter Verwendung der UWB-Kommunikation implementiert werden kann. Dadurch kann die kabellose, UWB-lose Kommunikation beispielsweise effektiv gegen Abhören und/oder unbefugtes Eindringen gesicherter werde. Insbesondere kann so die initiale Sicherheitsschwachstelle des Schlüsselaustauschs über die ungesicherte, d.h. unverschlüsselte, kabellose, UWB-lose Kommunikation vermieden werden.

Nach Ausführungsformen handelt es sich bei ein oder mehreren der zweiten Kommunikationsvorrichtungen um erste UWB-Kommunikationsvorrichtungen. Ausführungsformen können den Vorteil haben, dass die entsprechenden zweiten Kommunikationsvorrichtungen als UWB-Kommunikationsvorrichtungen neben der kabellosen, UWB-losen Kommunikation zum Ausführen einer UWB-Kommunikation konfiguriert sind.

Nach Ausführungsformen ist das UWB-Kommunikationssystem als UWB-Überwachungssystem zur Überwachung eines räumlichen Bereiches konfiguriert. Die ersten UWB-Kommunikationsvorrichtungen sind als UWB-Sensoren konfiguriert, welche in dem räumlichen Bereich verteilt angeordnet sind. Die UWB-Sensoren sind für ein Erfassen von Sensordaten und für ein Übertragen der erfassten Sensordaten mittels UWB konfiguriert. Das UWB-Kommunikationssystem ist als UWB-Überwachungssystem ferner konfiguriert zum
- Erfassen von Sensordaten in dem räumlichen Bereich unter Verwendung der UWB-Sensoren, wobei die erfassten Sensordaten personenbezogene Sensordaten umfassen,
- Filtern der erfassten Sensordaten unter Verwendung eines Anonymisierungsfilters, wobei der Anonymisierungsfilter dazu konfiguriert ist, die personenbezogenen Sensordaten zu anonymisieren,
- Auswerten der erfassten Sensordaten zum Detektieren eines Ausnahmeereignisses,
- auf das Detektieren des Ausnahmeereignisses hin, zeitlich begrenzten Aussetzen des Anonymisierens der personenbezogene Sensordaten.

Ausführungsformen können den Vorteil haben, dass sichergestellt werden kann, dass personenbezogene Sensordaten, soweit diese von den UWB-Sensoren erfasst werden, in Folge der Anonymisierung nicht oder nur in einer solchen Form zur Verfügung gestellt werden, dass keine Rückschlüsse auf die Identität der Personen ermöglicht werden, auf welche die personenbezogenen Daten bezogen sind. Nach Ausführungsformen umfasst das Anonymisieren insbesondere ein Verändern personenbezogener Sensordaten derart, dass Einzelangaben über persönliche oder sachliche Verhältnisse nicht mehr oder nur mit einem unverhältnismäßig großen Aufwand an Zeit, Kosten und Arbeitskraft einer bestimmten oder bestimmbaren natürlichen Person zugeordnet werden können. Das Verändern umfasst beispielsweise ein inhaltliches Umgestalten erfasster personenbezogener Sensordaten bis hin zum Löschen derselben. Ein Löschen bezeichnet dabei beispielsweise ein Unkenntlichmachen personenbezogener Sensordaten bis hin zu einem vollständigen Entfernen der entsprechenden personenbezogenen Sensordaten von einem Speicher zum Speichern erfasster Sensordaten. Bei dem Speicher kann es sich beispielsweise um einen lokalen oder einen zentralen Speicher des UWB-Überwachungssystems handeln.

Nach Ausführungsformen ist der räumliche Bereich beispielsweise ein zugangsbeschränkter räumlicher Bereich, etwa ein zugangsbeschränkten Sicherheitsbereich. Der zugangsbeschränkte räumliche Bereich ist beispielsweise gegenüber der Umgebung abgegrenzt und bestimmungsgemäß nur über ein oder mehrere Ein- bzw. Ausgänge betretbar. Beispielsweise handelt es sich bei dem zugangsbeschränkten räumlichen Bereich um einen Indoor-Bereich bzw. Innenbereich.

Die UWB-Technologie ermöglicht zudem ein Implementieren eines Radarverfahrens unter Verwendung von UWB-Radarsensoren. Dabei wird, wie bei der UWB-Datenübertragung, ein elektromagnetisches Wechselfeld großer Bandbreite generiert, dessen Feldstärken klein sind. Je nach Beschaffenheit von Objekten im Ausbreitungsbereich des elektromagnetischen Wechselfeldes, wird dies das Wechselfeld deformieren. Das resultierende Feld kann von einem UWB Sensor erfasst werden. Bei Kenntnis sowohl des Ausgangsfeldes als auch das resultierenden Feldes kennt, kann auf die Ursache der erfassten Deformation und mithin auf die Art und Geometrie des oder der Objekte im Ausbreitungsbereich des elektromagnetischen Wechselfeldes geschlossen werden.

UWB-Radarsensoren arbeiten beispielsweise auf Frequenzen zwischen 30 MHz und 12,4 GHz. Je nach Anwendung können beispielsweise Auflösungen von Zentimetern bis hin zu einigen Millimetern bei Arbeitsbandbreiten von 5 GHz erreicht werden.

Bei einem Radarverfahren werden kurze Impulse ausgesandt und mit den von dem oder den Objekten reflektierten Impulsverläufen verglichen. Damit lassen sich geometrische Größen wie beispielsweise Abstand, Dicke, Länge, Position, Körperform, Bewegung und/oder Geschwindigkeit bestimmen. Auch können Gegenstände durch Kleidung und Wände hindurch, detektiert werden. Hierbei werden die Eigenschaften des Ausbreitungsmediums für die elektromagnetischen Felder als bekannt vorausgesetzt.

UWB kann ein Tracking von mobilen Geräten verhindern, da über UWB kommunizierende Geräte, wie etwa UWB-Token, ohne Kenntnis der verwendeten UWB-Kodierung nicht lokalisierbar sind. Ferner stellt die verhältnismäßig kurze Reichweite von UWB sicher, dass ein Tracking und/oder Abhören aus der Ferne effektiv unterbunden werden kann. Zudem bietet die UWB-Kodierung eine eigenständige, instantane Verschlüsselung der übertragenen Daten, welche damit gegen ein Abhören abgesichert werden. Darüber hinaus weist UWB aufgrund des breiten Frequenzbandes eine hohe Resistenz gegenüber Störsignalen ("Jamming") auf. Aufgrund dieser speziellen, für Sicherheitsapplikationen vorteilhafter technischer Eigenschaften, kann unter Verwendung von UWB ein Überwachungssystem implementiert werden, welches einen hohen Schutz der Prozesse als auch der darin befindlichen bzw. verwendeten Sensordaten, insbesondere aber auch im Zusammenhang mit personenbezogenen Sensordaten von Beteiligten, gewährleisten kann. Insbesondere kann eine hohe Sicherheit der Datenübertragung mittels UWB sichergestellt werden.

Da die UWB-Technik auch höhere Datenraten zulässt, kann es insbesondere vorteilhaft für eine Übertragung von Sensordaten in Form von Videodaten, Tondaten und oder anderen umfangreichen sensorischen Messwerten sein.

Unter einem UWB-Sensor wird ein Sensor oder Anker verstanden, welcher zum Übertragen von erfassten Daten, z.B. Sensordaten, mittels UWB konfiguriert ist. Ferner kann ein UWB-Sensor, wie beispielsweise ein UWB-Radarsensor oder ein UWB-Lokalisierungssensor, dazu konfiguriert Sensordaten mittels UWB zu erfassen. Alternative kann ein UWB-Sensor dazu konfiguriert die Sensordaten mittels eines UWB-unabhängigen Verfahrens, etwa einem optischen, akustischen, chemischen, thermischen, elektromagnetischen und/oder vibrationsbasierten Verfahren. Nach Ausführungsformen sind die UWB-Sensoren für eine Datenübertragung ausschließlich mittels UWB konfiguriert. Nach Ausführungsformen können ein oder mehrere der UWB-Sensoren zusätzlich zum Übertragen von erfassten Daten mittels einer kabelgebundenen Datenverbindung konfiguriert sein. Nach Ausführungsformen ist ein Teil der UWB-Sensoren des UWB-Überwachungssystems zum Übertragen von erfassten Daten mittels einer kabelgebundenen Datenverbindung konfiguriert. Nach Ausführungsformen sind alle der UWB-Sensoren des UWB-Überwachungssystems zum Übertragen von erfassten Daten mittels einer kabelgebundenen Datenverbindung konfiguriert.

Unter Sensordaten werden mittels eines der UWB-Sensoren erfasste Daten verstanden, d.h. beispielsweise optische, akustische, chemische, thermische, elektromagnetische und/oder vibrationsbasierte Daten. Die Sensordaten werden von den erfassenden UWB-Sensoren innerhalb des UWB-Überwachungssystems mittels UWB übertragen. Nach Ausführungsformen können ein oder mehrere der UWB-Sensoren zusätzlich zum Übertragen von erfassten Daten mittels einer kabelgebundenen Datenverbindung konfiguriert sein. Bei den Sensordaten kann es sich ferner um Daten handeln, welche von den UWB-Sensoren mittels UWB erfasst wurden. Beispielsweise handelt es sich bei den Sensordaten um Sensordaten eines UWB-Radarsensors oder eines UWB-Lokalisierungssensors.

Personenbezogene Sensordaten bezeichnen Sensordaten, welche eine Identifikation einer Person ermöglichen oder einer Person zuordenbar sind, auf welche die personenbezogene Sensordaten bezogen sind. Insbesondere sind personenbezogene Sensordaten beispielsweise mittels eines der UWB-Sensoren erfasste Einzelangaben über persönliche oder sachliche Verhältnisse einer bestimmten oder bestimmbaren natürlichen Person. Beispielsweise umfassen die personenbezogene Sensordaten visuelle Sensordaten, wie etwa Video-und/oder Fotodaten, anhand derer eine Person erkannt werden kann. Dies ist insbesondere der Fall, wenn anhand der Video- und/oder Fotodaten ein Gesicht einer Person erkannt werden kann.

Ein Anonymisierungsfilter ist dazu konfiguriert selektiv personenbezogene Daten zu anonymisieren. Beispielsweise kann der Anonymisierungsfilter dazu konfiguriert sein Sensordaten, welche von bestimmten UWB-Sensoren bzw. einer bestimmten Art von UWB-Sensoren des UWB-Überwachungssystems erfasst werden, zu anonymisieren. Dabei handelt es sich beispielsweise um Video- und/oder Bilddaten, welche etwa unter Verwendung einer Überwachungskamera erfasst werden und auf denen individuelle Personen erkennbar sind.

Ein Ausnahmeereignis bezeichnet eine Anomalie in den erfassten Sensordaten, d.h. eine Datenkonstellation, welche unter vordefinierten Betriebsbedingungen nicht zu erwarten ist. Insbesondere kann es sich bei der Anomalie um eine Notfallsituation, wie etwa ein Feuer oder ein unerlaubtes Eindringen in den und/oder Bewegen innerhalb des räumlichen Bereiches.

Unter einem UWB-Token wird ein Hardwaretoken in Form eines mobilen tragbaren elektronischen Geräts verstanden, welches zu einer kabellosen Kommunikation mittels UWB konfiguriert ist. Ein UWB-Token kann zudem zu einer Bestimmung von Positionsdaten anhand einer Laufzeitmessung und Triangulation von UWB-Signalen konfiguriert sein, welche es von Lokalisierungssensoren des UWB-Überwachungssystems empfängt. Beispielsweise kann das UWB-Token als ein Dokument ausgestaltet sein, insbesondere ein Wert- oder Sicherheitsdokument. Unter einem "Dokument" werden papierbasierte und/oder kunststoffbasierte Dokumente verstanden, wie zum Beispiel elektronische Ausweisdokumente, insbesondere Reisepässe, Personalausweise, Visa sowie Führerscheine, Fahrzeug-scheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise. In einem Speicher eines solchen Dokuments sind beispielsweise ein oder mehrere Attribute eines dem Dokument zugeordneten Nutzers oder Gegenstands gespeichert.

Nach Ausführungsformen ist das Aussetzen des Anonymisierens auf personenbezogene Sensordaten beschränkt, welche von UWB-Sensoren erfasst werden, die einen vordefinierten Bezug zu dem detektierten Ausnahmeereignis aufweisen. Beispielsweise besteht ein vordefinierter Bezug darin, dass die UWB-Sensoren, für deren personenbezogene Sensordaten das Anonymisieren ausgesetzt wird, einem selben räumlichen Abschnitt des räumlichen Bereiches zugeordnet sind wie der oder die UWB-Sensoren, in deren erfassten Sensordaten das Ausnahmeereignis detektiert wird. Ausführungsformen können den Vorteil haben, dass das Aussetzen des Anonymisierens nicht nur zeitlich, sondern auch räumlich begrenzt wird. Mithin kann ein unnötiges Aussetzen des Anonymisierens, z.B. für personenbezogene Daten, welche nichts mit dem Ausnahmeereignis zu tun haben, vermieden werden. Nach Ausführungsformen besteht der vordefinierte Bezug zusätzlich oder alternativ darin, dass UWB-Sensoren, für deren personenbezogene Sensordaten das Anonymisieren ausgesetzt wird, vordefinierten räumlichen Abschnitt des räumlichen Bereiches zugeordnet sind. Bei den entsprechenden räumlichen Abschnitten handelt es sich beispielsweise um Zu- und Ausgänge eines zugangsbeschränkten Bereiches. Im Falle eines möglichen unberechtigten Eindringens in den zugangsbeschränkten räumlichen Bereich oder bei einem möglichen Notfall, wie etwa einem Feueralarm, kann es von Vorteil sein zu erfassen, wer den zugangsbeschränkten räumlichen Bereich betritt und/oder verlässt oder wer versucht den zugangsbeschränkten räumlichen Bereich zu betreten und/oder zu verlassen.

Nach Ausführungsformen wird das Anonymisieren aller durch das UWB-Überwachungssystem erfasster personenbezogener Sensordaten zeitlich begrenzt ausgesetzt. Ausführungsformen können den Vorteil haben, dass sichergestellt werden kann, dass keine für eine Handhabung und/oder Behebung des Ausnahmeereignisses relevanten und/oder notwendigen personenbezogener Sensordaten aufgrund der Anonymisierung fehlen.

Nach Ausführungsformen umfasst das Anonymisieren durch den Anonymisierungsfilter ein Löschen zumindest eines Teils der personenbezogenen Sensordaten. Das zeitlich begrenzte Aussetzen des Anonymisierens umfasst ein Speichern der personenbezogenen Sensordaten, welche innerhalb eines begrenzten Zeitfensters erfasst werden.

Ausführungsformen können den Vorteil haben, dass im Falle eines Löschens, d.h. eines vollständigen Entfernens personenbezogener Sensordaten von lokalen und/oder zentralen Speichern des UWB-Überwachungssystems, sichergestellt werden kann, dass niemand Zugriff auf diese Daten erlangen kann. Tritt jedoch ein Ausnahmeereignis auf, so werden nur für diesen speziellen Fall zeitlich begrenzt personenbezogener Sensordaten, wie etwa Video- und/oder Bilddaten, gespeichert. Nach Ausführungsformen werden die gespeicherten Daten zum Zwecke einer Datenanalyse bereitgestellt, insbesondere zum Zwecke einer Identifikation von Personen, auf welche die gespeicherten personenbezogenen Sensordaten bezogen sind.

Nach Ausführungsformen handelt es sich bei dem Speichern um ein zeitlich begrenztes Speichern. Beispielsweise werden die gespeicherten personenbezogenen Sensordaten nach ihrer Auswertung und/oder auf eine Beendigung der Ausnahmesituation hin wieder gelöscht. Nach Ausführungsformen handelt es sich bei dem Speichern um ein dauerhaftes Speichern.

Nach Ausführungsformen beginnt das begrenzte Zeitfenster mit dem Detektieren des Ausnahmeereignisses. Nach Ausführungsformen endet das begrenzte Zeitfenster mit Ablauf einer vorbestimmten Zeitspanne oder einem Enden des Detektierens des Ausnahmeereignisses.

Ausführungsformen können den Vorteil haben, dass das Speichern der personenbezogenen Sensordaten zeitlich auf ein Zeitfenster begrenzt bleibt, welches in Bezug zu dem Detektierten Ausnahmeereignis steht. Es kann beispielsweise davon ausgegangen werden, dass lediglich in diesem Zeitfenster erfasste personenbezogene Sensordaten im Kontext des detektierten Ausnahmeereignis von Relevanz sind. Nach Ausführungsformen endet das begrenzte Zeitfenster beispielsweise, wenn das Ausnahmeereignis nicht mehr detektiert wird bzw. nicht mehr detektierbar ist. Im Falle eines möglichen Feuers als Ausnahmeereignis kann das Ausnahmeereignis beispielsweise in Form eines Detektierens von Rauch durch einen als Rauchmelder ausgestalteten UWB-Sensor des Überwachungssystems detektiert werden. Wird das Ausnahmeereignis nicht mehr detektiert, d.h. kein Rauch mehr detektiert, wird beispielsweise das Aussetzen des Anonymisierens beendet. Nach Ausführungsformen wird am Ende der vorbestimmten Zeitspanne geprüft, ob das Ausnahmeereignis noch detektierbar ist und/oder ob weitere Voraussetzungen erfüllt sind. Ist das Ausnahmeereignis nicht mehr detektierbar ist und sind gegebenenfalls die weiteren Voraussetzungen erfüllt, wird das Aussetzen des Anonymisierens beendet. Andernfalls wird das Aussetzen nochmals um die vorbestimmte Zeitspanne wiederholt bzw. fortgesetzt. Weitere Voraussetzungen umfassen beispielsweise ein Protokollieren einer Bestätigung in dem UWB-Überwachungssystem, dass das Ausnahmeereignis überprüft wurde und keine weiteren Maßnahmen notwendig sind bzw. alle notwendigen Maßnahmen ergriffen wurden. Alternative oder zusätzlich können die weiteren Voraussetzungen beispielsweise ein Protokollieren einer Bestätigung in dem UWB-Überwachungssystem umfassen, dass das Aussetzen des Anonymisierens nicht und/oder nicht mehr notwendig ist. Die vorbestimmte Zeitspanne kann beispielsweise eine Länge von Sekunden und/oder Minuten aufweisen.

Nach Ausführungsformen erfolgt das Löschen der personenbezogenen Sensordaten jeweils durch den die zu löschenden personenbezogenen Sensordaten erfassenden UWB-Sensor. Nach Ausführungsformen umfasst das Speichern der personenbezogenen Sensordaten jeweils ein Übertragen der personenbezogenen Sensordaten durch den die zu speichernden personenbezogenen Sensordaten erfassenden UWB-Sensor zumindest teilweise und/oder vollständig mittels UWB an ein Speichermodul des UWB-Überwachungssystems. Nach Ausführungsformen umfasst das Speichern der personenbezogenen Sensordaten jeweils ein Übertragen der personenbezogenen Sensordaten durch den die zu speichernden personenbezogenen Sensordaten erfassenden UWB-Sensor zumindest teilweise und/oder vollständig mittels einer kabelgebundenen Datenverbindung an ein Speichermodul des UWB-Überwachungssystems.

Ausführungsformen können den Vorteil haben, dass bei einem direkten Löschen durch den erfassenden UWB-Sensor sichergestellt werden kann, dass die zu löschenden personenbezogenen Sensordaten innerhalb des Überwachungssystems nicht über den erfassenden UWB-Sensor hinausgelangen. Mithin kann effektiv verhindert werden, dass sich jemand auf unerlaubte Weise Zugriff auf die personenbezogenen Sensordaten verschaffen kann. Ausführungsformen können ferner den Vorteil haben, dass die in dem Speichermodul gespeicherten personenbezogenen Sensordaten im Bedarfsfall zum Handhaben und/oder Beheben des Ausnahmeereignisses herangezogen werden können. Beispielsweise können die gespeicherten personenbezogenen Sensordaten analysiert werden, um zu bestimmen welche Personen in das Ausnahmeereignis involviert sind und/oder involviert sein könnten. Bei dem Speichermodul kann es sich um ein lokales Speichermodul einer Mehrzahl von dezentral über das UWB-Überwachungssystem verteilten Speichermodulen oder um ein zentrales Speichermodul des UWB-Überwachungssystems handeln.

Nach Ausführungsformen umfasst das Anonymisieren durch den Anonymisierungsfilter ein Verschlüsseln zumindest eines Teils der personenbezogenen Sensordaten. Nach Ausführungsformen umfasst das zeitlich begrenzte Aussetzen des Anonymisierens ein zeitlich begrenztes Bereitstellen der entsprechenden personenbezogenen Sensordaten in unverschlüsselter Form.

Ausführungsformen können den Vorteil haben, dass durch ein Verschlüsseln der personenbezogenen Sensordaten Zugriffe auf die personenbezogenen Sensordaten effektiv verhindert werden können. Andererseits kann im Falle eines Ausnahmeereignisses ein Zugriff auf bereits erfasste personenbezogenen Sensordaten mittels eines Entschlüsselns ermöglicht werden. Beispielsweise werden die personenbezogenen Sensordaten in entschlüsselter Form nur zeitlich begrenzt zur Verfügung gestellt.

Nach Ausführungsformen erfolgt das Verschlüsseln der personenbezogenen Sensordaten jeweils durch den die zu verschlüsselnden personenbezogenen Sensordaten erfassenden UWB-Sensor.

Ausführungsformen können den Vorteil haben, dass die personenbezogenen Sensordaten direkt bei ihrer Erfassung verschlüsselt werden und indem UWB-Überwachungssystem nur in verschlüsselter Form weiterverarbeitet werden. Eine Verschlüsselung kann beispielsweise mit einem öffentlichen kryptographischen Schlüssel eines asymmetrischen Schlüsselpaars erfolgen, sodass es von einem Besitzer des zugehörigen geheimen kryptographischen Schlüssels des entsprechenden asymmetrischen Schlüsselpaars entschlüsselt werden kann. Bei dem entsprechenden Besitzer handelt es sich beispielsweise um ein zentrales oder dezentrales Steuermodul des UWB-Überwachungssystems. Die geheimen kryptographischen Schlüssel werden beispielsweise in einem geschützten Speicherbereich eines Speichermoduls gespeichert, welcher dem entsprechenden Steuermodul zugeordnet ist. Nach Ausführungsformen stellt das Steuermodul allen UWB-Sensoren oder zumindest allen zum Erfassen personenbezogenen Sensordaten konfigurierten UWB-Sensoren einen einheitlichen öffentlichen kryptographischen Schlüssel zum Verschlüsseln zur Verfügung. Nach Ausführungsformen stellt das Steuermodul allen UWB-Sensoren oder zumindest allen zum Erfassen personenbezogenen Sensordaten konfigurierten UWB-Sensoren jeweils einen individuellen, dem entsprechenden UWB-Sensoren zugeordneten öffentlichen kryptographischen Schlüssel zum Verschlüsseln zur Verfügung. Nach Ausführungsformen stellt das Steuermodul den UWB-Sensoren oder zumindest den zum Erfassen personenbezogenen Sensordaten konfigurierten UWB-Sensoren jeweils gruppenweise einen individuellen, der entsprechenden Gruppe zugeordneten einheitlichen öffentlichen kryptographischen Schlüssel zum Verschlüsseln zur Verfügung. Die Gruppen können dabei so eingeteilt sein, dass sie jeweils UWB-Sensoren umfassen, welche demselben räumlichen Abschnitt des räumlichen Bereiches zugeordnet sind, bei welchen es sich um dieselbe Art von UWB-Sensor handelt oder welche zum Erfassen derselben Art von personenbezogenen Sensordaten konfiguriert sind.

Nach Ausführungsformen umfasst das Bereitstellen der personenbezogenen Sensordaten in unverschlüsselter Form ein Aussetzen des Verschlüsselns der personenbezogenen Sensordaten, welche innerhalb eines begrenzten Zeitfensters erfasst werden. Ausführungsformen können den Vorteil haben, dass der Aufwand für ein Entschlüsseln der entsprechenden personenbezogenen Sensordaten vermieden werden kann und diese personenbezogenen Sensordaten zudem unverschlüsselt bleiben. Nach Ausführungsformen umfasst das Bereitstellen der personenbezogenen Sensordaten in unverschlüsselter Form ein Entschlüsseln verschlüsselter personenbezogenen Sensordaten, welche innerhalb des begrenzten Zeitfensters erfasst werden. Ausführungsformen können den Vorteil haben, dass die personenbezogenen Sensordaten selbst im Falle eines Ausnahmeereignisses ausschließlich in verschlüsselter Form gespeichert werden. Ein Bereitstellen der personenbezogenen Sensordaten in unverschlüsselter Form kann somit effektiv zeitlich beschränkt werden.

Nach Ausführungsformen beginnt das begrenzte Zeitfenster eine vorbestimmte Zeitspanne vor dem Detektieren des Ausnahmeereignisses oder mit dem Detektieren des Ausnahmeereignisses. Nach Ausführungsformen endet das begrenzte Zeitfenster mit Ablauf einer vorbestimmten Zeitspanne nach dem Detektieren des Ausnahmeereignisses oder mit einem Enden des Detektierens des Ausnahmeereignisses.

Ausführungsformen können den Vorteil haben, dass das Bereitstellen der personenbezogenen Sensordaten in unverschlüsselter Form zeitlich auf ein Zeitfenster begrenzt bleibt, welches in Bezug zu dem Detektierten Ausnahmeereignis steht. Es kann beispielsweise davon ausgegangen werden, dass lediglich in diesem Zeitfenster erfasste personenbezogene Sensordaten im Kontext des detektierten Ausnahmeereignis von Relevanz sind. Nach Ausführungsformen endet das begrenzte Zeitfenster beispielsweise, wenn das Ausnahmeereignis nicht mehr detektiert wird bzw. nicht mehr detektierbar ist. Im Falle eines möglichen Feuers als Ausnahmeereignis kann das Ausnahmeereignis beispielsweise in Form eines Detektierens von Rauch durch einen als Rauchmelder ausgestalteten UWB-Sensor des Überwachungssystems detektiert werden. Wird das Ausnahmeereignis nicht mehr detektiert, d.h. kein Rauch mehr detektiert, wird beispielsweise das Aussetzen des Verschlüsselns beendet. Nach Ausführungsformen wird am Ende der vorbestimmten Zeitspanne geprüft, ob das Ausnahmeereignis noch detektierbar ist und/oder ob weitere Voraussetzungen erfüllt sind. Ist das Ausnahmeereignis nicht mehr detektierbar ist und sind gegebenenfalls die weiteren Voraussetzungen erfüllt, wird das Aussetzen des Verschlüsselns beendet. Andernfalls wird das Aussetzen nochmals um die vorbestimmte Zeitspanne wiederholt bzw. fortgesetzt. Weitere Voraussetzungen umfassen beispielsweise ein Protokollieren einer Bestätigung in dem UWB-Überwachungssystem, dass das Ausnahmeereignis überprüft wurde und keine weiteren Maßnahmen notwendig sind bzw. alle notwendigen Maßnahmen ergriffen wurden. Alternative oder zusätzlich können die weiteren Voraussetzungen beispielsweise ein Protokollieren einer Bestätigung in dem UWB-Überwachungssystem umfassen, dass das Aussetzen des Verschlüsselns nicht und/oder nicht mehr notwendig ist. Die vorbestimmte Zeitspanne kann beispielsweise eine Länge von Sekunden und/oder Minuten aufweisen. Ein Beginn des begrenzten Zeitfensters eine vorbestimmte Zeitspanne vor dem Detektieren des Ausnahmeereignisses kann den Vorteil haben, dass auch relevante personenbezogene Sensordaten, welche im Vorfeld des Ausnahmeereignisses erfasst wurden in unverschlüsselter Form bereitgestellt werden können.

Nach Ausführungsformen ist das UWB-Überwachungssystem ferner konfiguriert zum
- Empfangen einer Anfrage zum Freigeben von erfassten Sensordaten,
- Prüfen eines von der Anfrage umfassten Berechtigungsnachweises zum Zugriff auf die angefragte Sensordaten,
- auf eine erfolgreiche Prüfung des Berechtigungsnachweises hin, Freigeben des Zugriffs auf die angefragten Sensordaten.

Ausführungsformen können den Vorteil haben, dass erfasste Sensordaten, insbesondere personenbezogene Sensordaten, nur dazu berechtigten Personen zur Verfügung gestellt werden. Eine Freigabe von Sensordaten, wie etwa Daten der Position und/oder anderer Daten, erfolgt beispielsweise gemäß eines Berechtigungsprofiles des Anfragenden. Somit kann ein effektiver Datenschutzlayer in das UWB-Überwachungssystem integriert werden. Ein Berechtigungsnachweis kann beispielsweise in Form eines Berechtigungszertifikats erbracht werden. Nach Ausführungsformen wird die Anfrage beispielsweise von einem dezentralen oder zentralen Steuermodul des UWB-Überwachungssystems empfangen und geprüft. Im Falle einer erfolgreichen Prüfung erfolgt beispielsweise auch die Freigabe durch das entsprechende Steuermodul. Beispielsweise werden die angefragte Sensordaten in Antwort auf die Anfrage an den Sender der Anfrage gesendet oder auf einer Anzeigevorrichtung des UWB-Überwachungssystems angezeigt. Die Übertragung der angefragte Sensordaten erfolgt beispielsweise in verschlüsselter Form, insbesondere kann sie unter Verwendung einer Ende-zu-Ende-Verschlüsselung erfolgen.

Nach Ausführungsformen werden die erfassten Sensordaten in Kategorien eingeteilt und das Prüfen des Berechtigungsnachweises umfasst ein Prüfen, ob der Berechtigungsnachweis zu einem Zugriff auf Sensordaten der Kategorie berechtigt, welcher die angefragten Sensordaten zugeordnet sind.

Ausführungsformen können den Vorteil haben, dass Berechtigungen kategorieweise gewährt werden können, sodass Berechtigungsnachweise auf ein oder mehrere der Kategorien beschränkt werden können.

Nach Ausführungsformen werden die erfassten personenbezogenen Sensordaten in Kategorien eingeteilt und das Aussetzen der Anonymisierung erfolgt, beispielsweise in Abhängigkeit von der Art des detektierten Ausnaheereignisses, selektiv nur für ein oder mehrere ausgewählte Kategorien.

Nach Ausführungsformen wird die Zugriffsberechtigung des Berechtigungsnachweises auf das Detektieren des Ausnahmeereignisses hin zeitlich beschränkt erweitert. Eine Erweiterung des Berechtigungsnachweises bedeutet, das mit einem gegebenen Berechtigungsnachweis im Falle eines Detektierens eines Ausnahmeereignisses mehr Kategorien eingesehen werden dürfen, als wenn kein Ausnahmeereignis detektiert wird. Nach Ausführungsformen ist der Umfang der Erweiterung abhängig von der Art des detektierten Ausnahmeereignisses. Nach Ausführungsformen wird die Zugriffsberechtigung im Falle eines Detektierens eines Ausnahmeereignisses für alle gültigen Berechtigungsnachweise zum Zugriff auf zumindest eine Kategorie von Sensordaten auf alle Kategorien von Sensordaten zeitlich beschränkt erweitert.

Ausführungsformen können den Vorteil haben, dass beispielsweise in Abhängigkeit der Sensibilität der Sensordaten unterschiedliche Berechtigungsnachweise für einen Zugriff auf die entsprechenden Sensordaten notwendig sind und somit gesteuert werden kann, wer in welchem Umfang Zugriffsrechte auf die erfassten Sensordaten des UWB-Überwachungssystems gewährt bekommt. Somit kann eine Anpassung der Datenfreigabe beispielsweise durch das Berechtigungsprofil des Anfragenden an die aktuelle Gefahrensituation implementiert werden.

Nach Ausführungsformen werden den erfassten Sensordaten jeweils Ursprungs-IDs zugeordnet. Eine Voraussetzung für die erfolgreiche Prüfung des Berechtigungsnachweises umfasst eine gültige Bestätigung des Berechtigungsnachweises zum Zugriff auf die angefragten Sensordaten durch ein oder mehrere den Ursprungs-IDs der angefragten Sensordaten zugeordnete Instanzen.

Bei dem mobilen tragbaren UWB-Kommunikationsgerät kann es sich beispielsweise um ein UWB-Token handeln. Wenn im Folgenden von einem UWB-Token die Rede ist, so ist dies nicht beschränkend zu verstehen. Vielmehr kann es ich allgemein um jede Art mobilem tragbarem UWB-Kommunikationsgerät handeln.

Ausführungsformen können den Vorteil haben, das für einen Zugriff auf die erfassten Sensordaten eine Freigabe durch ein oder mehrere den Ursprungs-IDs, d.h. dem Ursprung, der angefragten Sensordaten zugeordnete Instanzen notwendig ist. Nach Ausführungsformen identifizieren die Ursprung-IDs jeweils den UWB-Sensor, welcher die entsprechenden Sensordaten erfasst hat, und/oder das UWB-Token, welches durch die entsprechenden Sensordaten sensiert wurde. Nach Ausführungsformen handelt es sich bei den entsprechenden Instanzen jeweils um die entsprechenden UWB-Sensoren, UWB-Token oder Nutzer bzw. Administratoren, welche den entsprechenden UWB-Sensoren oder UWB-Token zugeordnet sind.

Beispielsweise wird jeder lokalisierten Position, d.h. erfassten Sensordaten zur Lokalisation von UWB-Token, eine abgesicherte Information des UWB Token aufgeprägt, so dass stets Ursprung und Eigentümer der entsprechenden Sensordaten bekannt sind. Anfragen bezüglich einer Position oder Daten eines UWB-Tokens müssen in diesem Fall beispielsweise zuerst immer durch das betroffene UWB-Token oder einen Träger und/oder Vertreter desselben freigegeben werden.

Nach Ausführungsformen werden im Falle des Freigebens der angefragten Sensordaten Art, Zeit, Ort, Empfänger und/oder Verwendung der freigegebenen Sensordaten protokolliert.

Ausführungsformen können den Vorteil haben, dass anhand der entsprechenden Protokolle genau nachvollziehbar ist, was mit den erfassten Sensordaten geschieht, insbesondere wer Zugriff auf diese erhält. Nach Ausführungsformen erfolgt das Protokollieren in einer Blockchain. Eine Blockchain kann den Vorteil haben, dass diese eine fälschungssichere Speicherstruktur zum Speichern der zu protokollierenden Daten bereitstellt.

Nach Ausführungsformen umfasst das UWB-Überwachungssystem ein oder mehrere vortrainierte Maschinenlernmodule, welche jeweils dazu trainiert sind anhand von Anomalien in den erfassten Sensordaten Ausnahmeereignisse zu erkennen. Ausführungsformen können den Vorteil haben, dass ein automatisiertes Detektieren von Ausnahmeereignisse ermöglicht wird.

Nach Ausführungsformen umfasst die Mehrzahl von UWB-Sensoren eine Mehrzahl von Lokalisierungssensoren, welche zur Positionsbestimmung von UWB-Token innerhalb des räumlichen Bereiches konfiguriert sind. Die Positionsbestimmung erfolgt unter Verwendung von Laufzeitmessungen von UWB-Signalen zwischen UWB-Token und/oder Lokalisierungssensoren.

Ausführungsformen können den Vorteil haben, das unter Verwendung der UWB-Token effektiv überwacht werden kann, wo sich berechtigte Personen innerhalb des räumlichen Bereiches aufhalten. Beispielsweise erhält jede Peron, welche den räumlichen Bereich, etwa einen zugangsbeschränkten räumlichen Bereich, betritt einen entsprechenden UWB-Token. Wenn Daten zu einer Zuordnung einer Token-ID einer bestimmten Person nicht oder kryptographisch gesichert, z.B. in verschlüsselter Form, gespeichert werden, wird durch die Überwachung der UWB-Token eine anonymisierte Überwachung der Träger der UWB-Token ermöglicht. Beispielsweise ist eine notwendige Voraussetzung für ein Entschlüsseln der Daten zur Zuordnung ein Detektieren eines Ausnahmeereignisses.

Eine Lokalisierung von UWB-Token erfolgt beispielsweise mittel Triangulation unter Verwendung zumindest zwei oder drei Lokalisierungssensoren in Form von UWB-Antennen. Dabei können die Triangulationssignale von dem UWB-Token und/oder von den UWB-Antennen gesendet werden. Eine Auswertung der Triangulationssignale kann durch das UWB-Token und/oder die UWB-Antennen und/oder einem Auswertemodul des Überwachungssystems erfolgen.

Nach Ausführungsformen sendet das UWB-Überwachungssystem einen Aktivierungscode. Die UWB-Token werden jeweils bei Eintritt in eine Sendereichweite des UWB-Überwachungssystems auf einen Empfang des Aktivierungscodes hin aktiviert und bei Verlassen der Sendereichweite des UWB-Überwachungssystems auf ein Ausbleiben des Empfangs des Aktivierungscodes hin deaktiviert.

Ausführungsformen können den Vorteil haben, dass das UWB-Token nur innerhalb des räumlichen Bereiches bzw. innerhalb der Sendereichweite des UWB-Überwachungssystems aktiv Signale unter Verwendung von UWB sendet und somit überhaupt detektierbar ist.

Nach Ausführungsformen umfasst das Aktivieren der UWB-Token jeweils ein Aktivieren eines Sendens von UWB-Signalen durch den jeweiligen UWB-Token, insbesondere das Aktivieren des Sendens von UWB-Signalen an das Überwachungssystem. Durch das Aktivieren wird der entsprechende UWB-Token für das Überwachungssystem sichtbar. Nach Ausführungsformen umfasst das Deaktivieren der UWB-Token jeweils ein Deaktivieren des Sendens von UWB-Signalen durch den jeweiligen UWB-Token, insbesondere das Deaktivieren des Sendens von UWB-Signalen an das Überwachungssystem. Durch das Deaktivieren wird der entsprechende UWB-Token für das Überwachungssystem unsichtbar.

Nach Ausführungsformen werden Zugangsberechtigungen zu und/oder Aufenthaltsberechtigungen in einem räumlichen Bereich, bei welchem es sich um einen zugangsbeschränkten räumlichen Bereich handelt, unter Verwendung der UWB-Token nachgewiesen.

Ausführungsformen können den Vorteil haben, das mittels der UWB-Token nicht nur Bewegungen der Träger innerhalb eines zugangsbeschränkten räumlichen Bereiches nachverfolgt werden können, sondern kontrolliert werden kann, ob eine Zugangsberechtigungen und/oder Aufenthaltsberechtigungen zu bzw. in dem zugangsbeschränkten räumlichen Bereich und/oder bestimmte räumlichen Abschnitte desselben vorliegt. Basierend hierauf kann erkannt werden, ob sich ein Träger eines UWB-Tokens berechtigter Weise in dem zugangsbeschränkten räumlichen Bereich und/oder einem räumlichen Abschnitt desselben aufhält. Beispielsweise können Zugangsschranken, wie etwa Türen zu dem zugangsbeschränkten räumlichen Bereich und/oder einem räumlichen Abschnitt desselben automatisch öffnen, wenn sich ein Träger eines UWB-Tokens mit gültiger Zugangsberechtigungen der Zugangsschranke nähert. Nach Ausführungsformen können für unterschiedliche räumliche Abschnitte des zugangsbeschränkten räumlichen Bereiches unterschiedliche Zugangsberechtigungen notwendig sein.

Nach Ausführungsformen werden Zugangsberechtigungen und/oder Aufenthaltsberechtigungen durch den Besitz des UWB-Tokens nachgewiesen. Nach werden Zugangsberechtigungen und/oder Aufenthaltsberechtigungen durch Berechtigungszertifikate nachgewiesen. Ein Berechtigungszertifikat ist ein digitales Zertifikat, welches einem UWB-Token und/oder einem Nutzer des entsprechenden UWB-Tokens eine Zugangsberechtigung und/oder Aufenthaltsberechtigung zuweist. Beispielsweise definiert ein Berechtigungszertifikat Zugangsberechtigungen und/oder Aufenthaltsberechtigungen, umfasst einen öffentlichen kryptographischen Schlüssel eines dem UWB-Token zugeordneten asymmetrischen kryptographischen Schlüsselpaars, eine Token-ID, Angeben zum Aussteller des Berechtigungszertifikats und/oder eine digitale Signatur eines Ausstellers. Bei dem Aussteller kann es sich beispielsweise um eine externe Instanz, dezentrales oder zentrales Steuermodul des UWB-Überwachungssystems oder einen anderen UWB-Token handeln, welcher selber über die erteilten Zugangsberechtigungen und/oder Aufenthaltsberechtigungen verfügt. Zugangsberechtigungen und/oder Aufenthaltsberechtigungen lassen sich beispielsweise unter Verwendung des Berechtigungszertifikats in Verbindung mit einer Signatur des UWB-Tokens unter Verwendung eines privaten kryptographischen Schlüssels des dem UWB-Token zugeordneten asymmetrischen kryptographischen Schlüsselpaars. Anhand des von dem Berechtigungszertifikat bereitgestellten öffentlichen kryptographischen Schlüssels kann die Signatur geprüft und mithin der Besitz des privaten kryptographischen Schlüssels seitens des UWB-Tokens verifiziert werden. Das Berechtigungszertifikat definiert beispielsweise für den Besitzer des privaten kryptographischen Schlüssels durch den Aussteller des Berechtigungszertifikats gewährte Zugangsberechtigungen und/oder Aufenthaltsberechtigungen. Nach Ausführungsformen sind die Zugangsberechtigungen und/oder Aufenthaltsberechtigungen zeitlich beschränkt. Beispielsweise ist eine zeitliche Beschränkung durch ein Ablaufdatum und/oder eine Ablaufzeit des Berechtigungszertifikats definiert.

Nach Ausführungsformen umfasst das Detektieren des Ausnahmeereignisses ein Erfassen einer Anzahl von Personen in dem räumlichen Bereich, etwa einem zugangsbeschränkten räumlichen Bereich, unter Verwendung der UWB-Sensoren, welche zumindest lokal von der Anzahl der unter Verwendung der UWB-Token in dem räumlichen Bereich erfassten Anzahl von zugangsberechtigten Personen abweicht.

Ausführungsformen können den Vorteil haben, dass Versuche sich ohne Zugangsberechtigung Zugang zu dem zugangsbeschränkten räumlichen Bereich oder Abschnitten desselben zu verschaffen und/oder Versuche sich der Bewegungsüberwachung durch das UWB-Überwachungssystem innerhalb des zugangsbeschränkten räumlichen Bereiches effektiv detektiert werden können.

Nach Ausführungsformen ist jedes der UWB-Token jeweils einem Nutzer zugeordnet. In den UWB-Token sind beispielsweise jeweils ein oder mehrere Referenzwerte für personenbezogenen Sensordaten zum Authentifizieren des zugeordneten Nutzers, d.h. Authentifizierungsdaten, gespeichert. Der Nachweis einer Zugangsberechtigung und/oder Aufenthaltsberechtigung unter Verwendung eines der UWB-Token umfasst beispielsweise ein Bestätigen eines Authentifizierens des dem entsprechenden UWB-Token zugeordneten Nutzers durch das UWB-Token. Das Authentifizieren durch das UWB-Token umfasst beispielsweise ein lokales Validieren von Authentifizierungsdaten durch das UWB-Token unter Verwendung der in dem UWB-Token gespeicherten ein oder mehreren Referenzwerten.

Nach Ausführungsformen umfassen die UWB-Token beispielsweise jeweils einen Sensor zum Erfassen der Authentifizierungsdaten. Nach Ausführungsformen werden die Authentifizierungsdaten des Nutzers beispielsweise jeweils durch einen Sensor der UWB-Tokens erfasst. Nach Ausführungsformen werden die Authentifizierungsdaten beispielsweise durch einen lokalen Sensor des UWB-Überwachungssystems erfasst und an den UWB-Token zum Validieren gesendet. Nach Ausführungsformen erfolgt das Senden der erfassten Authentifizierungsdaten in verschlüsselter Form. Nach Ausführungsformen werden die Referenzwerte in verschlüsselter Form gespeichert und das lokale Validieren der erfassten Authentifizierungsdaten erfolgt in verschlüsselter Form.

Nach Ausführungsformen umfassen die Authentifizierungsdaten biometrische Daten des Nutzers, welche unter Verwendung eines biometrischen Sensors erfasst werden. Biometrische Daten können beispielsweise umfassen: DNA-Daten, Fingerabdruckdaten, Körpergeometriedaten/Anthropometriedaten, wie etwa Gesichts-, Hand-, Ohrgeometriedaten, Handlinienstrukturdaten, Venenstrukturdaten, wie etwa Handvenenstrukturdaten, Irisdaten, Retinadaten, Stimmerkennungsdaten, Nagelbettmuster, Zahnmusterdaten.

Nach Ausführungsformen umfassen die Authentifizierungsdaten verhaltensbasierte Daten des Nutzers. Verhaltensbasiert Daten sind Daten, welche auf einem intrinsischen Verhalten des Nutzers beruhen und können beispielsweise umfassen: Bewegungsmuster, Gangmuster, Arm-, Hand-, Fingerbewegungsmuster, Lippenbewegungsmuster. Ein Verwenden von verhaltensbasierten Daten zum Authentifizieren des Nutzers kann den Vorteil haben, dass der Nutzer zum Zwecke des Authentifizierens sein übliches, für ihn charakteristisches Verhalten fortsetzen kann, ohne dass für ihn untypische zusätzliche Handlungen notwendig sind. Insbesondere muss der Nutzer sein übliches Verhalten nicht unterbrechen.

Zum Erfassen der verhaltensbasierten Daten wird ein Sensor zum Erfassen verhaltensbasierter Daten verwendet. Bei den verhaltensbasierten Daten handelt es sich beispielsweise um Bewegungsdaten, welche unter Verwendung eines als Bewegungssensor konfigurierten Authentifizierungssensor erfasst werden. Der Bewegungssensor kann beispielsweise einen Beschleunigungssensor umfassen. Eine Bewegung kann beispielsweise durch Integration über Beschleunigungsmesswerte, welche der Beschleunigungssensor erfasst, berechnet werden. Der Bewegungssensor kann beispielsweise zudem seine Lage im Raum und/oder Veränderungen der Lage detektieren. Beispielsweise umfasst der Bewegungssensor ein Gyroskop. Bei den durch den Bewegungssensor erfassten Bewegungsdaten handelt es sich beispielsweise um Beschleunigungs-, Neigungs- und/oder Positionsdaten.

Bei erfassten Bewegungsdaten handelt es sich beispielsweise um Daten von Bewegungen des UWB-Tokens, welche dadurch verursacht werden, dass der Nutzer das UWB-Token mit sich führt, beispielsweise am Körper trägt. Durch die charakteristischen Bewegungen des Nutzers wird der UWB-Token in einer für den Nutzer charakteristischer Weise mitbewegt. Dies ist selbst dann der Fall, wenn der Nutzer nicht aktive mit dem UWB-Token interagiert, z.B. keine Benutzerschnittstelle des UWB-Tokens, wie etwa eine Taste, eine Tastatur, einen Touchscreen, ein Mikrophon, nutzt.

Nach Ausführungsformen umfasst das UWB-Token ein Klassifikationsmodul, welches zum Erkennen eines oder mehrerer generischer Bewegungsmuster unter Verwendung von Bewegungsdaten konfiguriert ist. Bei den Bewegungsmustern kann es sich beispielweise um grob- und/oder feinmotorische Bewegungen des UWB-Tokens handeln, wie sie für eine Nutzung des UWB-Tokens, etwa ein Mitführen und/oder Tragen am Körper, durch einen individuellen Nutzer charakteristisch sind. Beispielsweise ist das Klassifikationsmodul zum Erkennen der generischen Bewegungsmuster unter Verwendung von Trainingsdatensätzen mit Bewegungsdaten einer Nutzerkohorte vortrainiert.

Nach Ausführungsformen wird der Nutzer im Zuge einer Einlernphase als Nutzer des UWB-Tokens registriert. Nach Ausführungsformen umfasst die Einlernphase ein Erfassen von Bewegungsdaten des Nutzers durch einen Authentifizierungssensor in Form eines Bewegungssensors des UWB-Tokens und Extrahieren von ein oder mehreren für den zu registrierenden Nutzer charakteristischen Referenzwerten.

Nach Ausführungsformen umfasst ein verhaltensbasiertes Authentifizieren eines Nutzers unter Verwendung des UWB-Tokens die folgenden Schritte:
- Erfassen von Bewegungsdaten durch einen Authentifizierungssensor in Form eines Bewegungssensors des UWB-Tokens,
- Eingeben der erfassten Bewegungsdaten in das Klassifikationsmodul,
- Generieren eines Klassifikationsergebnisses durch das Klassifikationsmodul, ob der aktuelle Nutzer ein in dem UWB-Token registrierte Nutzer ist,
- Erzeugen eines Authentifizierungssignals, falls das Klassifikationsergebnis ein Prüfungskriterium erfüllt, wobei das Authentifizierungssignal eine erfolgreiche Authentifizierung des aktuellen Nutzers signalisiert.

Das Prüfkriterium kann beispielsweise umfassen, dass eine ausreichen hohe Übereinstimmung zwischen den erfassten Bewegungsdaten und einem oder mehreren für den registrierten Nutzer hinterlegten Referenzwerten vorliegt. Ferner kann das Prüfkriterium umfassen, dass die erfassten Bewegungsdaten und/oder die verwendeten ein oder mehreren Referenzwerte ein maximales Alter nicht überschreiten.

Nach Ausführungsformen werden die vorgenannten Schritte des Erfassens der Bewegungsdaten, des Eingebens der Bewegungsdaten und des Generierens des Klassifikationsergebnisses wiederholt nacheinander ausgeführt. Ferner wird zusätzliche zum Schritt des Generierens des Klassifikationsergebnisse jeweils der Schritt ausgeführt:
- Speichern des Klassifikationsergebnisses in dem Speicher des UWB-Tokens.

Das Erzeugen eines Authentifizierungssignals umfasst beispielsweise:
auf eine Authentifizierungsanfrage hin, Zugreifen auf den Speicher des UWB-Tokens zum Auslesen des gespeicherten Klassifikationsergebnisses, beispielsweise des zuletzt gespeicherten Klassifikationsergebnisses,
Auslesen und Auswerten des Klassifikationsergebnisses gemäß dem Prüfungskriterium.

Nach Ausführungsformen können erfasste Bewegungsdaten im Falle einer erfolgreichen Authentifizierung des Nutzers zum Anpassen und/oder Verbessern der für den entsprechenden Nutzer hinterlegten Referenzwerte verwendet werden.

Nach Ausführungsformen ist die Authentifizierung wissensbasiert. Beispielsweise umfassen die Authentifizierungsdaten ein persönliches Passwort des Nutzers. Bei dem Passwort kann es sich beispielsweise um eine alphanumerische Zeichenfolge handeln.

Nach Ausführungsformen ist die Authentifizierung besitzbasiert. Nach Ausführungsformen umfassen die Authentifizierungsdaten signierte Daten eines oder mehrere weiterer dem Nutzer zugeordneter elektronischer Geräte, insbesondere mobile tragbare elektronische Geräte. Bei den entsprechenden elektronischen Geräten handelt es sich beispielsweise um Smart Devices, welche der Nutzer mit sich führt, etwa wie Smartphone, Smartwatch, Smartglasses, Phablets, Tablets, Smart band, Smart Keychain, Smartcard etc. Diese elektronischen Geräte senden ein reichweitenbeschränktes Signal, welches ihre Anwesenheit signalisiert. Beispielsweise umfasst das Signal eine ID des entsprechenden elektronischen Gerätes. Beispielsweise ist das Signal mit einem kryptographischen Signaturschlüssel des entsprechenden elektronischen Gerätes signiert. Bei dem Signal kann es sich beispielsweise um ein Bluetooth oder ein UWB-Signal handeln. Im Falle einer Nutzung eines UWB-Signals, handelt es sich bei der Mehrzahl von elektronischen Geräten um eine Mehrzahl von UWB-Token. Für ein erfolgreiches Authentifizieren des Nutzers kann es notwendig sein, dass dieser eine bestimmte Anzahl an ihm zugeordneten elektronischen Geräten mit sich führt. Ein elektronisches Gerät mag gestohlen werden, je höher jedoch die Anzahl der für das erfolgreiche Authentifizieren notwendigen elektronischen Geräten ist, desto geringer ist die Wahrscheinlichkeit, dass diese von einem anderen Nutzer als dem registrierten Nutzer mitgeführt werden, beispielsweise infolge eines Diebstahls.

Nach Ausführungsformen ist jedes der UWB-Token jeweils einem Nutzer zugeordnet. In den UWB-Token sind jeweils ein oder mehrere Referenzwerte für personenbezogenen Sensordaten zum Authentifizieren des zugeordneten Nutzers gespeichert. Der Nachweis einer Zugangsberechtigung und/oder Aufenthaltsberechtigung unter Verwendung eines der UWB-Token umfasst ein Bestätigen eines Authentifizierens des dem entsprechenden UWB-Token zugeordneten Nutzers durch den UWB-Token. Das Authentifizieren durch den UWB-Token umfasst ein lokales Validieren von personenbezogenen Sensordaten durch den UWB-Token unter Verwendung der in dem UWB-Token gespeicherten ein oder mehreren Referenzwerten.

Detektieren ein oder mehrere UWB-Sensoren, etwa Trittschallsensoren, Bewegungsmelder, Lichtschranken oder Gasdetektoren, eine Anwesenheit einer Person in einem räumlichen Abschnitt des räumlichen Bereiches, in welchem kein UWB-Token detektiert wird, so ist dies ein Hinweis auf einen Versuch eines unerlaubten Eindringens. Ebenso können Unterschiede in Bewegungsmustern von UWB-Token und detektierten Personen auf unberechtigte Aktivitäten hindeuten, etwa falls ein UWB-Token an einer Stelle ruht, während anhand der erfassten Sensordaten Bewegungen einer Person detektiert werden.

Nach Ausführungsformen umfasst ein Ausnahmeereignis beispielsweise ein Erfassen einer Anzahl von Personen, welche die Anzahl der erfassten zugangsberechtigten Personen bzw. der erfassten ID-Token zumindest lokal überschreitet.

Nach Ausführungsformen umfasst das Detektieren des Ausnahmeereignisses ein Erfassen eines UWB-Tokens in einem räumlichen Abschnitt des räumlichen Bereiches, etwa eines zugangsbeschränkten räumlichen Bereiches, für welchen der entsprechende UWB-Token keine Zugangsberechtigung besitzt.

Nach Ausführungsformen umfasst das Detektieren des Ausnahmeereignisses ein Erfassen von nicht personenbezogenen Sensordaten, welche einen vordefinierten Schwellenwert überschreiten.

Ausführungsformen können den Vorteil haben insbesondere Notfallsituationen effektiv erkannt werden können, wie etwa ein Feuer unter Verwendung eines als Rauchmelder konfigurierten UWB-Sensors oder ein Einbruch unter Verwendung eines als Glasbruch konfigurierten UWB-Sensors. So kann beispielsweise erhöhte Bewegungsaktivität und ein gleichzeitiger Temperaturanstieg zunächst als unklares Ausnahmeereignis bis hin zur Gefahrensituation interpretiert werden.

Nach Ausführungsformen umfasst die Mehrzahl von UWB-Sensoren Sensoren zum Erfassen optischer, akustischer, chemischer, thermischer, elektromagnetischer und/oder vibrationsbasierter Sensordaten.

Ausführungsformen können den Vorteil haben, dass unter Verwendung der entsprechenden Sensoren eine Vielzahl unterschiedlicher Sensordaten erfasst und somit eine Vielzahl unterschiedlicher Situationen bzw. Gegebenheiten innerhalb des räumlichen Bereiches erkannt werden können. Die UWB-Sensoren umfassen beispielsweise ein oder mehrere UWB-Radarsensoren, Glasbruchsensoren, Trittschallsensoren, Gassensoren, Bewegungsmelder, Videosensoren, Infrarotsensoren, Temperatursensoren und/oder Rauchsensoren.

Nach Ausführungsformen ist das UWB-Überwachungssystem ferner konfiguriert zum:
- auf ein Erfassen von Sensordaten durch einen Sensor eines der zusätzlichen UWB-Sensoren, welche indikativ für eine Anwesenheit einer Person in einem Erfassungsbereich des Sensors sind, Prüfen, ob Positionsdaten eines UWB-Tokens innerhalb des Erfassungsbereich des Sensors bestimmbar sind,
- falls keine Positionsdaten eines UWB-Tokens innerhalb des Erfassungsbereich des Sensors bestimmbar sind, Ausgeben eines Alarmsignals.

Ausführungsformen können den Vorteil haben, dass mittels des UWB-Überwachungssystems erkannt werden kann, ob sich eine Person innerhalb des überwachten räumlichen Bereiches aufhält und/oder bewegt, welche kein UWB-Token mit sich führt. Falls eine Person bzw. Hinweise auf eine Person ohne UWB-Token erfasst werden, wird ein Alarmsignal ausgegeben. Falls Positionsdaten eines UWB-Tokens innerhalb des Erfassungsbereich des Sensors bestimmbar sind, d.h. die Person ein UWB-Token mit sich führt, kann beispielsweise geprüft werden, ob der UWB-Token eine Zugangsberechtigung zu und/oder eine Aufenthaltsberechtigung in dem räumlichen Bereich nachweisen kann.

Die Positionsdaten der UWB-Token werden beispielsweise mittels der Lokalisierungssensoren erfasst. Sensordaten, welche indikativ für eine Anwesenheit einer Person sind, können beispielsweise unter Verwendung von UWB-Radar, Hochfrequenzstrahlung, Mikrowellenstrahlung, Dopplerradar, Laser, Ultraschall, Infraschall, Infrarotstrahlung, Vibrationsmessungen oder Gaskonzentrationsmessungen erfasst werden. Hält sich eine Person im Erfassungsbereich eines Sensors auf, reflektiert, streut oder unterbricht diese beispielsweise von dem Sensor ausgesandte Strahlung oder Wellen, wie UWB-Radar, Hochfrequenzstrahlung, Mikrowellenstrahlung, Dopplerradar, Laserstrahlen, Ultraschall, oder erzeugt messbare Strahlung, Wellen oder anderweitige Einflüsse, wie Infrarotstrahlung, Vibrationen, z.B. Trittschall, Infraschall oder Gaskonzentrationsänderungen, z.B. eine Erhöhung der Kohlenstoffdioxidkonzentration.

Nach Ausführungsformen umfasst das UWB-Überwachungssystem ein digitales Funknetzwerk mit einer Mesh-Topologie, welches zum Übertragen der erfassten Sensordaten unter Verwendung von UWB konfiguriert ist.

Ausführungsformen können den Vorteil haben, dass erfassten Sensordaten effektiv über das UWB-Überwachungssystem übertragen werden können. Ferner bietet eine Mesh-Topologie eine hohe Ausfallsicherheit, da bei einem Ausfall einzelner Komponenten der Mesh-Topologie weiterhin eine Datenübertragung über alternative Routen möglich ist. Zudem kann bei einem Ausfall eines Teilbereichs der Mesh-Topologie ein Betrieb mit dem verbleibenden Teil der Mesh-Topologie aufrechterhalten werden.

Nach Ausführungsformen können den Vorteil haben, dass in dem auf UWB basierenden Funknetzwerk mit einer Mesh-Topologie Positionsdaten für mehrere und/oder alle Netzwerknoten, d.h. UWB-Sensoren und/oder UWB-Token breitgestellt werden bzw. bestimmt werden können. Eine Bestimmung von Positionsdaten kann beispielsweise unter Verwendung eines auf Laufzeitmessungen von UWB-Signalen basierenden Triangulationsverfahrens erfolgen. Bei den Positionsdaten kann es sich um relative und/oder absolute Positionsdaten handeln. Zum bestimmen absoluter Positionsdaten müssen Positionsdaten zumindest ein oder mehrere stationärer Referenzpunkte bekannt sein. Ausführungsformen können den Vorteil haben, dass für eine zielgerichtete Weiterleitung von Daten in dem UWB-basierten Funknetzwerk mit Mesh-Topologie ein positionsbasiertes Routingverfahren genutzt werden kann, um unter Verwendung der mittels UWB bestimmten Positionsdaten jeweils einen kürzesten oder anderweitig besten Pfad zwischen einem Quellknoten und einem Zielknoten innerhalb des Funknetzwerks zu bestimmen.

Nach Ausführungsformen sind ein oder mehrere der UWB-Sensoren als UWB-Transceiver zum Weiterleiten von UWB-Übertragungssignalen konfiguriert. Nach Ausführungsformen umfasst das UWB-Überwachungssystem zusätzlich zu den UWB-Sensoren ein oder mehrere UWB-Transceiver, welche zum Weiterleiten der UWB-Übertragungssignale konfiguriert sind.

Ausführungsformen können den Vorteil haben, dass ein Weiterleiten von Daten mittels UWB in effektiver Weise unter Verwendung der UWB-Sensoren und/oder zusätzlicher UWB-Transceiver implementiert werden kann.

Ausführungsformen umfassen ferner ein Verfahren zum Steuern eines UWB-Überwachungssystems zur Überwachung eines räumlichen Bereiches. Das UWB-Überwachungssystem umfasst eine Mehrzahl von UWB-Sensoren, welche in dem räumlichen Bereich räumlich verteilt angeordnet sind. Die UWB-Sensoren sind für ein Erfassen von Sensordaten und für ein Übertragen der erfassten Sensordaten mittels UWB konfiguriert.

Ausführungsformen umfassen ferner ein Verfahren zum Betreiben eines mobilen tragbaren UWB-Kommunikationsgeräts. Das mobile tragbare UWB-Kommunikationsgerät umfasst einen Prozessor, einen Speicher und eine Kommunikationsschnittstelle. Die Kommunikationsschnittstelle ist für eine kabellose UWB-Kommunikation konfiguriert. In dem Speicher ist eine Mehrzahl von Programminstruktionen zum Ausführen durch den Prozessor gespeichert. Ein Ausführen von Programminstruktionen der Mehrzahl von Programminstruktionen durch den Prozessor veranlasst den Prozessor dazu zum Übertragen von Daten eine UWB-Kommunikation unter Verwendung der Kommunikationsschnittstelle auszuführen.

In dem Speicher ist eine Mehrzahl von UWB-Datenkodierungsschemata gespeichert, welche zumindest ein erstes UWB-Datenkodierungsschema und ein von dem ersten UWB-Datenkodierungsschema verschiedenes zweites UWB-Datenkodierungsschema umfassen. In dem Speicher ist ferner eine Mehrzahl von Daten gespeichert ist, welche zumindest erste und zweite Daten umfasst. Die ersten Daten sind dem ersten UWB-Datenkodierungsschema und die zweiten Daten sind dem zweiten UWB-Datenkodierungsschema zugeordnet.

Das Verfahren umfasst:
- Übertragen der ersten Daten mit einer ersten UWB-Datenkodierung unter Verwendung einer ersten UWB-Kommunikation, die gemäß dem ersten UWB-Datenkodierungsschema kodiert ist,
- Übertragen der zweiten Daten mit einer von der ersten UWB-Datenkodierung verschiedenen zweiten UWB-Datenkodierung unter Verwendung einer zweiten UWB-Kommunikation, die gemäß dem zweiten UWB-Datenkodierungsschema kodiert ist.

Nach Ausführungsformen ist das Verfahren zum Betreiben eines mobilen tragbaren UWB-Kommunikationsgeräts dazu konfiguriert jede der zuvor beschrieben Ausführungsformen des mobilen tragbaren UWB-Kommunikationsgeräts zu betreiben bzw. zu steuern.

Ausführungsformen umfassen ferner ein Verfahren zum Steuern eines als UWB-Überwachungssystem zur Überwachung eines räumlichen Bereiches konfigurierten UWB-Kommunikationssystems. Das UWB-Kommunikationssystem umfasst ein mobiles tragbares UWB-Kommunikationsgerät nach einer der vorangehenden Ausführungsformen und eine Mehrzahl von Kommunikationsvorrichtungen. Die Mehrzahl von Kommunikationsvorrichtungen umfasst erste UWB-Kommunikationsvorrichtungen, welche zu einer Kommunikation mittels UWB konfiguriert und zu einem UWB-Mesh-Netzwerk zusammengeschlossen sind. Die ersten UWB-Kommunikationsvorrichtungen bilden jeweils einen Netzwerkknoten des UWB-Mesh-Netzwerks.

Die ersten UWB-Kommunikationsvorrichtungen sind ferner als UWB-Sensoren konfiguriert, welche in dem räumlichen Bereich verteilt angeordnet sind. Die UWB-Sensoren sind für ein Erfassen von Sensordaten und für ein Übertragen der erfassten Sensordaten mittels UWB konfiguriert. Das Verfahren umfasst:
- Erfassen von Sensordaten in dem räumlichen Bereich unter Verwendung der UWB-Sensoren, wobei die erfassten Sensordaten personenbezogene Sensordaten umfassen,
- Filtern der erfassten Sensordaten unter Verwendung eines Anonymisierungsfilters, wobei der Anonymisierungsfilter dazu konfiguriert ist, die personenbezogenen Sensordaten zu anonymisieren,
- Auswerten der erfassten Sensordaten zum Detektieren eines Ausnahmeereignisses,
- auf das Detektieren des Ausnahmeereignisses hin, zeitlich begrenzten Aussetzen des Anonymisierens der personenbezogene Sensordaten.

Nach Ausführungsformen ist das Verfahren zum Steuern des UWB-Überwachungssystems dazu konfiguriert jede der zuvor beschrieben Ausführungsformen des UWB-Überwachungssystems zu steuern.

Im Weiteren werden Ausführungsformen der Erfindung mit Bezugnahme auf die Zeichnungen näher erläutert. Es zeigen:
- Figur 1: ein schematisches Diagramm eines exemplarischen mobilen, tragbaren UWB-Kommunikationsgeräts,
- Figur 2: ein schematisches Diagramm einer exemplarischen UWB-Kommunikationsvorrichtung,
- Figuren 3: schematische Diagramme exemplarischer UWB-Signale in Zeit- und Frequenzdomäne,
- Figuren 4: schematische Diagramme exemplarischer UWB-Datenkodierungen,
- Figur 5: ein schematisches Diagramm exemplarischer UWB-Kommunikationssysteme,
- Figur 6: ein Flussdiagramm eines exemplarischen Verfahrens zum Betreiben eines UWB-Kommunikationsgeräts,
- Figur 7: ein Flussdiagramm eines exemplarischen Verfahrens zum Steuern eines UWB-Kommunikationssystems,
- Figur 8: ein Flussdiagramm eines exemplarischen Verfahrens zum Betreiben eines UWB-Kommunikationsgeräts,
- Figur 9: ein schematisches Diagramm eines exemplarischen UWB-Überwachungssystems,
- Figur 10: ein schematisches Diagramm eines exemplarischen als UWB-Sensors konfigurierten UWB-Kommunikationsvorrichtung,
- Figur 11: ein Flussdiagramm eines exemplarischen Verfahrens zum Steuern eines UWB-Kommunikationssystems und
- Figur 12: ein Flussdiagramm eines exemplarischen Verfahrens zum Steuern eines UWB-Kommunikationssystems.

Elemente der nachfolgenden Ausführungsformen, die einander entsprechen, werden mit denselben Bezugszeichen gekennzeichnet.

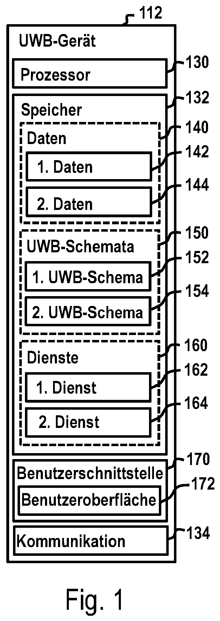

Figur 1 zeigt ein exemplarisches mobiles tragbares UBW-Kommunikationsgerät 112, welches einen Prozessor 130, einen Speicher 132 und eine Kommunikationsschnittstelle 134, etwa in Form einer UWB-Antenne umfasst. Der Prozessor 130 ist dazu konfiguriert durch Ausführen von Programminstruktionen, welche beispielsweise in dem Speicher 132 gespeichert sind, das mobile tragbare UBW-Kommunikationsgerät 112 zu steuern. In dem Speicher 132 kann beispielsweise ferner eine Token-ID gespeichert sein. Das mobile tragbare UBW-Kommunikationsgerät 112 ist dazu konfiguriert über die Kommunikationsschnittstelle 134 UWB-Signale zu senden und zu empfangen. Beispielsweise sendet das mobile tragbare UBW-Kommunikationsgerät 112 UWB-Signale, welche einen Zeitstempel und/oder die Token-ID umfassen. Nach Ausführungsformen kann ein UWB-Kommunikationssystem, welches als UWB-Überwachungssystems 100, beispielsweise anhand dieser UWB-Signale des mobilen tragbaren UBW-Kommunikationsgeräts 112 oder UWB-Signalen von UWB-Antennen bzw. UWB-Sensoren des UWB-Überwachungssystems das mobile tragbare UBW-Kommunikationsgerät 112 lokalisieren und/oder identifizieren.

In dem Speicher 132 ist beispielweise ferner eine Mehrzahl von Daten 140 gespeichert, welche beispielsweise erste Daten 142 und zweite Daten 144 umfassen. Ferner kann in dem Speicher 132 eine Mehrzahl von UWB-Datenkodierungsschemata 150 gespeichert sein, welche ein erstes UWB-Datenkodierungsschema 152 und ein zweites UWB-Datenkodierungsschemata 154 umfassen. Die ersten Daten 142 sind beispielsweise dem ersten UWB-Datenkodierungsschema 152 zugeordnet, während die zweiten Daten 144 beispielsweise dem zweiten UWB-Datenkodierungsschema 154 zugeordnet sind. Zum Übertragen der ersten Daten 142 mit einer ersten UWB-Datenkodierung wird beispielsweise eine erste UWB-Kommunikation ausgeführt, die gemäß dem ersten UWB-Datenkodierungsschema 152 kodiert ist, welchem die ersten Daten 142 zugeordnet sind. Zum Übertragen der zweiten Daten 144 mit einer von der ersten UWB-Datenkodierung verschiedenen zweiten UWB-Datenkodierung wird beispielsweise eine zweite UWB-Kommunikation ausgeführt, die gemäß dem zweiten UWB-Datenkodierungsschema 154 kodiert ist, welchem die zweiten Daten 144 zugeordnet sind. Beispielsweise sind die UWB-Datenkodierungsschemata 150, die ersten Daten 142 und/oder die zweiten Daten 144 in einem geschützten Speicherbereich des Speichers 132 gespeichert.

Nach Ausführungsformen umfasst das mobile tragbare UWB-Kommunikationsgerät 112 ferner eine Benutzerschnittstelle 170. Die in dem Speicher 132 gespeicherten Programminstruktionen können ferner dazu konfiguriert sein, bei einem Ausführen durch den Prozessor 130 den Prozessor 130 dazu zu veranlassen, einem Benutzer des mobilen tragbaren UWB-Kommunikationsgeräts 112 mittels der Benutzerschnittstelle 170 eine graphische Benutzeroberfläche 172 zum datenspezifischen Zuordnen der Daten 140 zu den UWB-Datenkodierungsschemata 150 bereitzustellen.

Zudem können die in dem Speicher 132 gespeicherten Programminstruktionen Programminstruktionen von Dienstanwendungen 160 umfassen, welche das mobile tragbare UWB-Kommunikationsgeräts 112 beispielsweise dem Benutzer zur Verwendung bereitstellt. Nach Ausführungsformen, werden die Dienstanwendungen 160 dem Benutzer über die Benutzerschnittstelle zur Verfügung gestellt, beispielweise wird eine graphische Benutzeroberfläche 172 der entsprechenden Dienstanwendungen 160 bereitgestellt. Beispielsweise umfassen die Dienstanwendungen 160 eine erste Dienstanwendung 162 und eine zweite Dienstanwendung 164, wobei es sich bei den ersten Daten 142 um Daten der ersten Dienstanwendung 162 und bei den zweiten Daten 144 um Daten der zweiten Dienstanwendung 164 handelt. Ferner handelt es sich bei dem ersten UWB-Datenkodierungsschema 152 beispielsweise um ein dienstspezifisches UWB-Datenkodierungsschema 152 der ersten Dienstanwendung 162 und bei dem zweiten UWB-Datenkodierungsschema 154 um ein dienstspezifisches UWB-Datenkodierungsschema 154 der zweiten Dienstanwendung 164. Beispielsweise verwendet in diesem Fall die erste Dienstanwendung 162 zur Kommunikation mit einer externen UWB-Kommunikationsvorrichtung das ersten UWB-Datenkodierungsschema 152 zur Kodierung und/oder Dekodieren von übertragenen Daten, wie etwa den ersten Daten 142. Ferner verwendet beispielsweise die zweite Dienstanwendung 164 zur Kommunikation mit einer externen UWB-Kommunikationsvorrichtung das zweite UWB-Datenkodierungsschema 154 zur Kodierung und/oder Dekodieren von übertragenen Daten, wie etwa den zweiten Daten 144.

Nach Ausführungsformen kann die Kommunikationsschnittstelle 134 des mobilen tragbaren UWB-Kommunikationsgeräts 112 ferner für eine zusätzliche kabellose, UWB-lose Kommunikation konfiguriert sein, wie etwa Bluetooth, WLAN, WiFi oder GSM. Daten werden unter Verwendung der zusätzlichen Kommunikation beispielsweise mit einem kryptographischen Schlüssel, etwa einem symmetrischen Schlüssel und/oder einem privaten oder öffentlichen Schlüssel eines asymmetrischen Schlüsselpaars, verschlüsselt übertragen. Beispielsweise wird unter Verwendung des kryptographischen Schlüssels eine Ende-zu-Ende-Verschlüsselung zwischen dem mobilen, tragbaren UWB-Kommunikationsgeräts 112 und einer die verschlüsselten Daten sendenden oder empfangenden externen Kommunikationsvorrichtung, wie etwa einem entfernten Server, aufgebaut. Der kryptographischen Schlüssel wird beispielweise über einen UWB-Kommunikationskanal bereitgestellt, d.h. beispielsweise an das und/oder von dem mobilen tragbaren UWB-Kommunikationsgerät 112 gesendet. Der kryptographische Schlüssel wird bzw. ist beispielsweise in dem Speicher 132 des mobilen tragbaren UWB-Kommunikationsgeräts 112 gespeichert, insbesondere in einem geschützten Speicherbereich des Speichers 132.

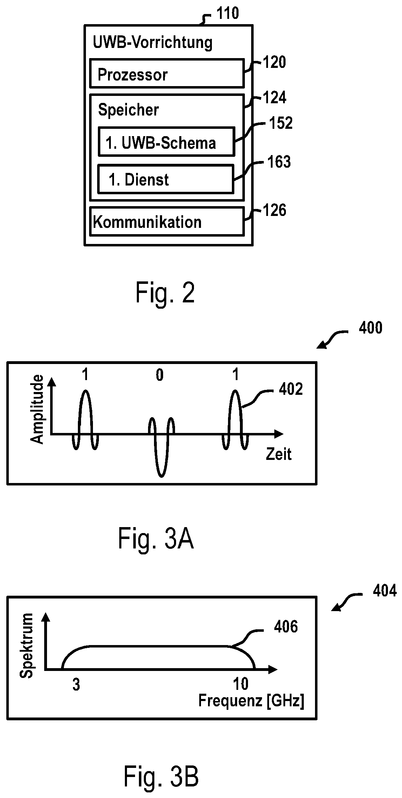

Figur 2 zeigt eine exemplarische UBW-Kommunikationsvorrichtung 110. Diese UBW-Kommunikationsvorrichtung 110 umfasst einen Prozessor 120, welcher Programminstruktionen ausführt, die beispielsweise in einem Speicher 124 der UBW-Kommunikationsvorrichtung 110 gespeichert sind, und die UBW-Kommunikationsvorrichtung 110 gemäß den Programminstruktionen steuert. Ferner umfasst der UWB-Sensor 110 eine Kommunikationsschnittstelle 126, etwa in Form einer UWB-Antenne zum Senden und Empfangen von Daten mittels UWB. In dem Speicher 124, beispielsweise in einem geschützten Speicherbereich des Speichers 124, ist ein UWB-Datenkodierungsschema, beispielsweise das erste UWB-Datenkodierungsschema 152, gespeichert zum Kodieren und/oder Dekodieren von Daten, welche mit einer UWB-Datenkodierung gemäß dem UWB-Datenkodierungsschema kodiert über die Kommunikationsschnittstelle 126 gesendet und/oder empfangen werden. Ferner sind in dem Speicher 124 Programminstruktionen eines oder mehrerer von der UBW-Kommunikationsvorrichtung 110 bereitgestellter Dienste 163 gespeichert. Beispielsweise handelt es sich bei der UBW-Kommunikationsvorrichtung 110 um eine Kommunikationsvorrichtung eines Dienstanbieters. Hierbei kann die UBW-Kommunikationsvorrichtung 110 beispielsweise als Server fungieren, welche die Dienste 163 einem beispielsweise als Client fungieren mobilen, tragbaren UWB-Kommunikationsgerät mittels UWB-Kommunikation zur Verfügung stellt. Beispielsweise werden die Dienste 163 der UBW-Kommunikationsvorrichtung 110 von dem mobilen, tragbaren UWB-Kommunikationsgerät mittels einer auf dem mobilen, tragbaren UWB-Kommunikationsgerät ausgeführten Dienstanwendung in Anspruch genommen. Hierzu sendet die UBW-Kommunikationsvorrichtung 110 beispielsweise Daten mittels UWB unter Verwendung des UWB-Datenkodierungsschema 152 an das mobile, tragbare UWB-Kommunikationsgerät und/oder empfängt Daten von dem mobile, tragbare UWB-Kommunikationsgerät mittels UWB unter Verwendung des UWB-Datenkodierungsschema 152.

Nach Ausführungsformen kann die Kommunikationsschnittstelle 126 der UBW-Kommunikationsvorrichtung 110 ferner für eine zusätzliche kabellose, UWB-lose Kommunikation konfiguriert sein, wie etwa Bluetooth, WLAN, WiFi oder GSM. Daten werden unter Verwendung der zusätzlichen Kommunikation beispielsweise mit einem kryptographischen Schlüssel, etwa einem symmetrischen Schlüssel und/oder einem privaten oder öffentlichen Schlüssel eines asymmetrischen Schlüsselpaars, verschlüsselt übertragen. Beispielsweise wird unter Verwendung des kryptographischen Schlüssels eine Ende-zu-Ende-Verschlüsselung zwischen der UBW-Kommunikationsvorrichtung 110 und einem mobilen, tragbaren UWB-Kommunikationsgeräts aufgebaut. Der kryptographischen Schlüssel wird beispielweise über einen UWB-Kommunikationskanal bereitgestellt, d.h. beispielsweise an die und/oder von der UBW-Kommunikationsvorrichtung 110 gesendet. Der kryptographische Schlüssel wird bzw. ist beispielsweise in dem Speicher 124 der UBW-Kommunikationsvorrichtung 110 gespeichert, insbesondere in einem geschützten Speicherbereich des Speichers 124.

Figuren 3A und 3B zeigen exemplarische UWB-Signale in der Zeitdomäne bzw. in der Frequenzdomäne. Figur 3A zeigt ein schematisches Diagramm eines UWB-Signals, beispielsweise "1 0 1", durch Erzeugung von Impulsen 402 mit einer möglichst kurzen Pulsdauer in der Zeitdomäne 400. Den Gesetzen der Fourier-Transformation entsprechend ist das in Figur 3B gezeigte Spektrum 406, welches über die UWB-Antenne abgestrahlt bzw. empfangen wird, in der Frequenzdomäne 404 umso größer bzw. breiter, je kürzer die Pulsdauer der Impulse 402 ist. Dabei ist das Produkt aus zeitlicher und spektraler Breite des Impulses konstant. Bei der Übertragung des UWB-Signals wird die gesamte Sendeleistung auf einen so großen Frequenzbereich verteilt, dass für den Funkbetrieb schmalbandiger Übertragungsverfahren keine Störungen zu erwarten sind. Mithin ist es nicht oder nur schwer erkennbar, dass überhaupt eine Übertragung mit UWB stattfindet. Für einen schmalbandigen Empfänger erscheint ein UWB-Signal vielmehr wie ein statistisches Rauschen.

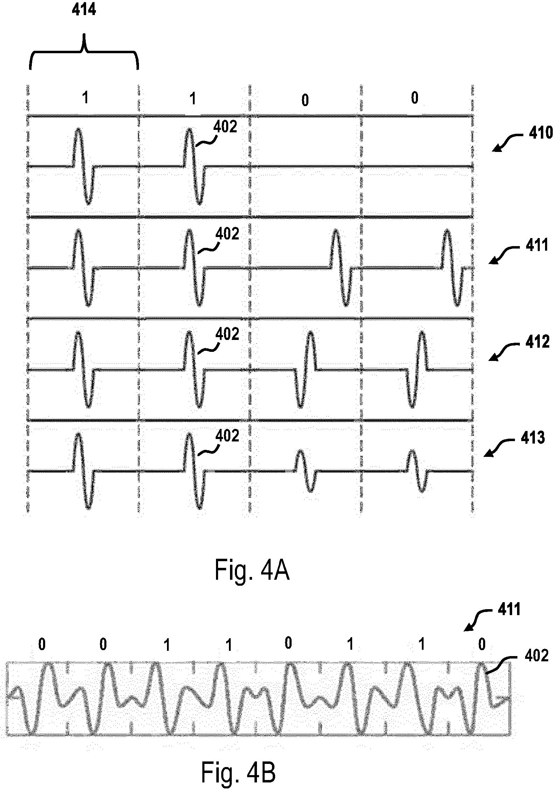

Figur 4A zeigt exemplarische UWB-Datenkodierungen. Es sind vier beispielhafte, identische Zeitintervalle 414 gezeigt. Kodiert werden sollen die Daten "1 1 0 0". In der ersten Zeile 410 wird eine exemplarische UWB-Datenkodierung gemäß einem UWB-Datenkodierungsschema gezeigt, welches auf einem ON-OFF Keying als Kodierungsverfahren beruht. Ein Impulse 402 innerhalb eines der Zeitintervalls 414 ist eine "1", kein Impuls innerhalb eines Zeitintervalls 414 ist eine "0". In der zweiten Zeile 411 wird eine exemplarische UWB-Datenkodierung gemäß einem UWB-Datenkodierungsschema gezeigt, welches auf einem Pulse Position Modulation (PPM) als Kodierungsverfahren beruht. Ein Impulse 402 innerhalb eines der Zeitintervalls 414 an einer ersten Position ist eine "1", ein Impuls 402 innerhalb eines Zeitintervalls 414 an einer relative zur ersten Position verschobenen zweite Position ist eine "0". In der dritten Zeile 412 wird eine exemplarische UWB-Datenkodierung gemäß einem UWB-Datenkodierungsschema gezeigt, welches auf einem Binary Phase Shift Keying (BSPK) als Kodierungsverfahren beruht. Ein Impulse 402 innerhalb eines der Zeitintervalls 414 mit einer ersten Polarität ist eine "1", ein Impuls 402 innerhalb eines Zeitintervalls 414 mit einer relative zur ersten Polarität gespiegelten Polarität ist eine "0". In der vierten Zeile 413 wird eine exemplarische UWB-Datenkodierung gemäß einem UWB-Datenkodierungsschema gezeigt, welches auf einem Pulse Amplitude Modulation (PAM) als Kodierungsverfahren beruht. Ein Impulse 402 innerhalb eines der Zeitintervalls 414 mit einer ersten Amplitude ist eine "1", ein Impuls 402 innerhalb eines Zeitintervalls 414 mit einer von der ersten Amplitude verschiedenen, beispielsweise kleineren, zweiten Amplitude ist eine "0".

Wie in Figur 4B gezeigt können die Impulse 402 im Falle einer Verwendung von Binary Phase Shift Keying (BSPK) als Kodierungsverfahren fortlaufend als kontinuierlicher Strom gesendet werden. Dadurch kann die übertragene Bitrate gleich der Impulsrate sein.

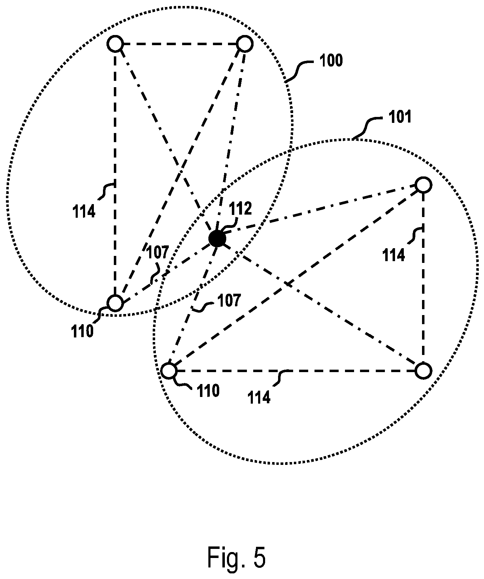

Figur 5 zeigt zwei exemplarische UWB-Kommunikationssysteme 100, 101. Die beiden UWB-Kommunikationssysteme 100, 101 umfassen jeweils eine Mehrzahl von UWB-Kommunikationsvorrichtungen 110. Die UWB-Kommunikationsvorrichtungen 110 des ersten UWB-Kommunikationssystems 100 sind zu einem ersten UWB-Mesh-Netzwerk zusammengefasst. Die Kommunikationsvorrichtungen 110 des zweiten UWB-Kommunikationssystems 101 sind zu einem zweiten UWB-Mesh-Netzwerk zusammengefasst. Die Kommunikation innerhalb des ersten UWB-Kommunikationssystems 100 erfolgt beispielsweise über UWB-Kommunikationskanäle zwischen den UWB-Kommunikationsvorrichtungen 110 des ersten UWB-Mesh-Netzwerks, deren Datenübertragung mittels einer UWB-Datenkodierung gemäß einem ersten UWB-Datenkodierungsschema kodiert ist. Die Kommunikation innerhalb des zweiten UWB-Kommunikationssystems 101 erfolgt beispielsweise über UWB-Kommunikationskanäle zwischen den UWB-Kommunikationsvorrichtungen 110 des zweiten UWB-Mesh-Netzwerks, deren Datenübertragung mittels einer UWB-Datenkodierung gemäß einem von dem ersten UWB-Datenkodierungsschema verschiedenen zweiten UWB-Datenkodierungsschema kodiert ist. Aufgrund der unterschiedlichen verwendeten UWB-Datenkodierungsschemata zur Datenübertragung mittels UWB innerhalb der beiden UWB-Kommunikationssysteme 100, 101 bilden diese zwei unabhängige UWB-Funknetzwerke. Beispielsweise kann es sich bei diesen beiden UWB-Funknetzwerken um unabhängige dienstspezifische UWB-Funknetzwerke handeln, welche unterschiedlichen Diensten zugeordnet sind und über die unterschiedliche Dienstanwendungen des mobilen tragbaren Kommunikationsgeräts 112 Daten übertragen. Die UWB-Kommunikationsvorrichtungen 110 sind beispielsweise dazu konfiguriert sowohl untereinander, als auch mit dem mobilen tragbaren Kommunikationsgerät 112 mittels UWB über UWB-Kommunikationskanäle 107, 114 zu kommunizieren. Zum Kodieren der übertragenen Daten kann dabei von den Kommunikationsvorrichtungen 110 in den beiden UWB-Kommunikationssysteme 100, 101 jeweils dasselbe UWB-Datenkodierungsschema zum Kodieren der Kommunikation untereinander wie auch mit dem mobilen tragbaren Kommunikationsgerät 112 verwendet werden. Alternative können von in einem oder beiden UWB-Kommunikationssystemen 100, 101 von den Kommunikationsvorrichtungen 110 unterschiedliche UWB-Datenkodierungsschemata einerseits zum Kodieren der Kommunikation untereinander und andererseits zum Kodieren der Kommunikation mit dem mobilen tragbaren Kommunikationsgerät 112 verwendet werden.

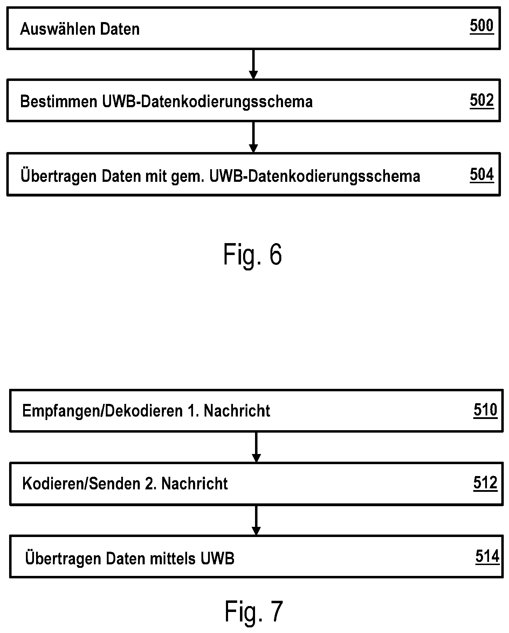

Figur 6 zeigt ein exemplarisches Verfahren zum Betreiben eines mobilen tragbaren UWB-Kommunikationsgeräts. In Block 500 werden Daten ausgewählt, welche von dem mobilen tragbaren UWB-Kommunikationsgerät mittels UWB zu übertragen sind. Beispielsweise handelt es sich hierbei um Daten einer auf dem mobilen tragbaren UWB-Kommunikationsgerät ausgeführten Dienstanwendung. In Block 502 wird ein UWB-Datenkodierungsschema bestimmt, welchem die zu übertagenden Daten zugeordnet sind und das zu bei deren Übertragung zu verwenden ist. Beispielsweise sind die Daten einem dienstspezifischen UWB-Datenkodierungsschema zugeordnet, welches zur Übertagung von Daten des entsprechenden Dienstes bzw. der entsprechenden Dienstanwendung dieses Dienstes zu verwenden sind. In Block 504 werden die Daten mittels UWB übertragen, wobei eine Kodierung der Daten gemäß den bestimmten UWB-Datenkodierungsschema erfolgt. Somit können nur Empfänger, welche ebenfalls in dem Besitz des verwendeten UWB-Datenkodierungsschemas erkennen, dass eine Übertragung von Daten stattfinden und7ioder die übertragenen Daten dekodieren.

Figur 7 zeigt ein exemplarisches Verfahren zum Steuern eines UWB-Kommunikationssystems. In Block 510 empfängt ein für UBW-Kommunikationsvorrichtungen des UWB-Kommunikationssystems zunächst unsichtbares mobiles tragbares UWB-Kommunikationsgerät, welches in Reichweite eines oder mehrere der UBW-Kommunikationsvorrichtungen kommt, eine erste Nachricht des UWB-Kommunikationssystems von einer der UBW-Kommunikationsvorrichtungen. Diese erste Nachricht wird über eine UWB-Kommunikation übertragen, welche mit einer UWB-Datenkodierung gemäß einem UWB-Datenkodierungsschema des UWB-Kommunikationssystems kodiert ist. Ist dem mobilen tragbaren UWB-Kommunikationsgerät dieses UWB-Datenkodierungsschema bekannt, ist es beispielsweise in einem Speicher des mobilen tragbaren UWB-Kommunikationsgeräts gespeichert, kann das mobile tragbare UWB-Kommunikationsgerät bei Empfang der ersten Nachricht erkennen, dass eine Übertragung stattfindet, und die empfangene erste Nachricht dekodieren. Ein Erkennen, dass eine Übertragung stattfindet, bedeutet, dass das mobile tragbare UWB-Kommunikationsgeräts die übertragene Nachricht vor dem statistischen Hintergrundrauchen detektieren und herausfiltern kann. Diese erste Nachricht zeigt die Anwesenheit des UWB-Kommunikationssystems bzw. der die Nachricht sendenden UWB-Kommunikationsvorrichtung des UWB-Kommunikationssystems gegenüber dem mobilen tragbaren UWB-Kommunikationsgerät an. In Block 512 kodiert das mobile tragbare UWB-Kommunikationsgerät in Antwort auf den Empfang der ersten Nachricht eine zweite Nachricht, welche die Anwesenheit des mobilen tragbaren UWB-Kommunikationsgeräts gegenüber dem UWB-Kommunikationssystem bzw. dessen UWB-Kommunikationsvorrichtungen in deren Reichweite anzeigt. Hierzu verwendet das mobilen tragbaren UWB-Kommunikationsgeräts beispielsweise dasselbe UWB-Datenkodierungsschema, mit welchem die erste Nachricht kodiert war. Die Verwendung des spezifischen UWB-Datenkodierungsschema kann beispielsweise der gegenseitigen Authentifizierung von mobilem tragbarem UWB-Kommunikationsgerät und UWB-Kommunikationssystem bzw. dessen UWB-Kommunikationsvorrichtungen dienen. Ferner kann in Block 514 eine Übertragung von Daten zwischen dem mobilen tragbaren UWB-Kommunikationsgerät und dem UWB-Kommunikationssystem bzw. dessen UWB-Kommunikationsvorrichtungen erfolgen. Beispielsweise überträgt das mobile tragbare UWB-Kommunikationsgerät Daten unter Verwendung des Verfahrens gemäß Figur 6.

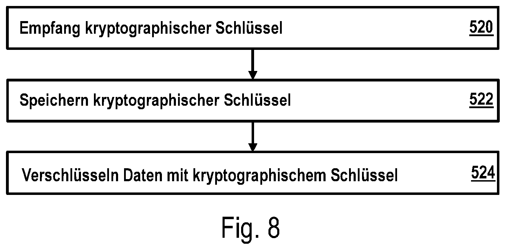

Figur 8 zeigt ein exemplarisches Verfahren zum Betreiben eines mobilen tragbaren UWB-Kommunikationsgeräts, welches neben einer Datenübertragung mittel UWB zum Ausführen ein oder mehreren zusätzlichen kabelloser, UWB-loser Datenübertragungsverfahren, wie beispielsweise Bluetooth, WLAN, WiFi oder GSM, konfiguriert ist. In Block 520 empfängt das mobile tragbare UWB-Kommunikationsgerät einen kryptographischen Schlüssel über einen UWB-Kommunikationskanal. Der kryptographische Schlüssel wird dabei durch die UWB-Datenkodierung vor unerlaubten Zugriffen geschützt. In Block 522 wird der empfangene Schlüssel im Speicher des mobilen tragbaren UWB-Kommunikationsgeräts, beispielsweise in einem geschützten Speicherbereich dieses Speichers, gespeichert. In Block 524 werden von dem mobilen tragbaren UWB-Kommunikationsgerät Daten unter Verwendung eines der zusätzlichen kabellosen, UWB-losen Datenübertragungsverfahren verschlüsselt übertragen. Die Verschlüsselung erfolgt unter Verwendung des empfangenen und gespeicherten kryptographischen Schlüssels. Nach alternativen Ausführungsformen wird der kryptographische Schlüssel von dem mobilen tragbaren UWB-Kommunikationsgerät generiert und/oder gespeichert und an ein oder mehrere Kommunikationspartner mittels UWB gesendet. Hierdurch können die entsprechenden Kommunikationspartner in die Lage versetzt werden, verschlüsselt unter Verwendung eines der zusätzlichen kabellosen, UWB-losen Datenübertragungsverfahren mit dem mobilen tragbaren UWB-Kommunikationsgerät zu kommunizieren.

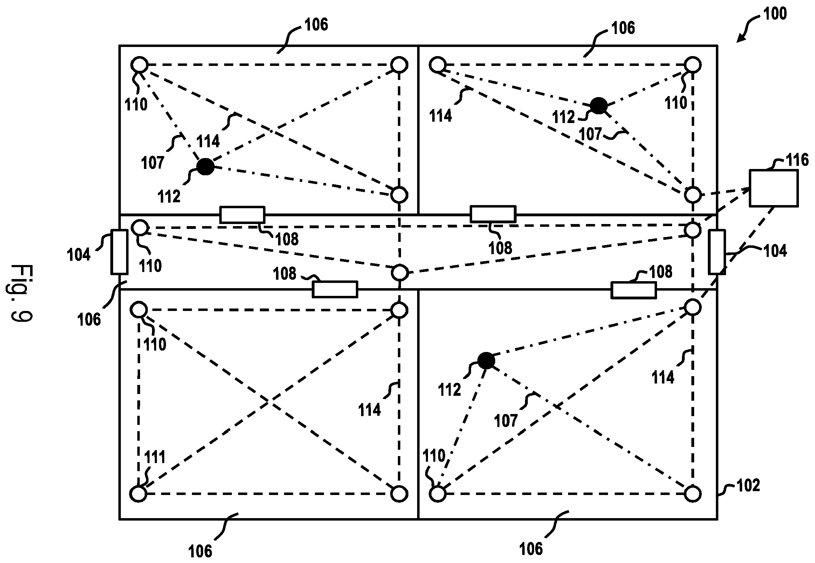

Figur 9 zeigt ein exemplarisches UWB-Überwachungssystem 100 zur Überwachung eines räumlichen Bereiches 102, etwa eines zugangsbeschränkten räumlichen Bereiches. Handelt es sich bei dem räumlichen Bereich 102 um einen zugangsbeschränkten räumlichen Bereich, ist dieser zugangsbeschränkte räumliche Bereich beispielsweise gegenüber der Umgebung abgegrenzt und bestimmungsgemäß nur über ein oder mehrere Ein- bzw. Ausgänge 104 betretbar. Beispielsweise handelt es sich bei dem räumlichen Bereich um einen Indoor-Bereich bzw. Innenbereich innerhalb eines Gebäudes. Alternativ oder zusätzlich kann der räumliche Bereich auch einen Outdoor-Bereich bzw. Innenbereich außerhalb eines Gebäudes umfassen. Beispielsweise kann dieser Outdoor-Bereich ein zugangsbeschränkter Bereich sein, welcher eingefriedet ist. Eine Einfriedung kann beispielsweise einen Zaun, eine Mauer und/oder eine Hecke umfassen. Ein zugangsbeschränkte räumliche Bereich 102 kann beispielsweise in eine Mehrzahl räumlicher Abschnitte 106 unterteilt sein, welche selbst jeweils bestimmungsgemäß nur über ein oder mehrere Ein- bzw. Ausgänge 108 betretbar sind.

Das UWB-Überwachungssystem 100 umfasst eine Mehrzahl von über den räumlichen Bereich 102 verteilten UWB-Sensoren 110. Die UWB-Sensoren 110 sind für ein Erfassen von Sensordaten, wie etwa Positionsdaten, Bewegungsdaten, Bilddaten, Tondaten, Vibrationsdaten, Temperaturdaten, Strukturdaten, Gaskonzentrationsdaten, Partikelkonzentrationsdaten etc. konfiguriert. Ferner sind die UWB-Sensoren 110 für ein Übertragen der erfassten Sensordaten mittels UWB, d.h. über ein von dem UWB-Überwachungssystem 100 bereitgestellten UWB-Netzwerk, konfiguriert. Hierbei können die UWB-Sensoren 110 als UWB-Transceiver zum Weiterleiten von UWB-Übertragungssignalen innerhalb des Überwachungssystem 100 konfiguriert. Ferner kann das UWB-Überwachungssystem 100 zusätzlich zu den UWB-Sensoren 110 ein oder mehrere UWB-Transceiver 111 umfassen, welche zum Weiterleiten der UWB-Übertragungssignale konfiguriert sind. Das von dem Überwachungssystem 100 implementierte UWB-Netzwerk ist beispielsweise ein digitales Funknetzwerk mit einer Mesh-Topologie, welches zum Übertragen der erfassten Sensordaten unter Verwendung von UWB konfiguriert ist. Beispielsweise erfolgt eine Übertragung von Sensordaten innerhalb des UWB-basierten Funknetzwerks mit Mesh-Topologie unter Verwendung eines positionsbasierten Routingverfahrens. Nach Ausführungsformen erfolgt eine Datenübertragung der UWB-Sensoren 110 ausschließlich mittels UWB. Nach Ausführungsformen sind ein oder mehrere der UWB-Sensoren 110 zusätzlich für eine zumindest teilweise und/oder vollständig kabelgebundene Übertragen der erfassten Sensordaten konfiguriert. Nach Ausführungsformen sind alle UWB-Sensoren 110 zusätzlich für eine zumindest teilweise und/oder vollständig kabelgebundene Übertragen der erfassten Sensordaten konfiguriert. Beispielsweise kann auch eine UWB-Radarfunktionalität für die Detektion von Personen eingebunden und/oder implementiert werden, welche keinen UWB-Token tragen.

Die UWB-Sensoren 110 umfassen beispielsweise Anonymisierungsfilter, welche dazu konfiguriert sind, die erfassten Sensordaten zu filtern. Im Zuge des Filterns werden personenbezogene Sensordaten anonymisiert. Personenbezogene Sensordaten umfassen beispielsweise Bilddaten, auf welche Personen identifizierbar sind. Die gefilterten Sensordaten werden beispielweise über das UWB-Netzwerk an ein Steuermodul 116 übertragen. Bei dem Steuermodul 116 kann es sich um ein zentrales Steuermodul oder ein dezentrales Steuermodul handeln. Das Steuermodul 116 ist beispielsweise dazu konfiguriert die von den UWB-Sensoren 110 erfassten Sensordaten auszuwerten zum Detektieren von Ausnahmeereignissen, wie etwa einer Gefahrensituation oder einem unberechtigten Zutritt zu dem räumlichen Bereich 102. Auf das Detektieren eines Ausnahmeereignisses hin, wird das Anonymisierens der personenbezogene Sensordaten zeitlich begrenzt ausgesetzt.

Das Steuermodul 116 ist beispielsweise ferner dazu konfiguriert Anfragen nach erfassten Sensordaten zu empfangen, Berechtigungsnachweise zum Zugriff auf die entsprechenden Sensordaten zu prüfen und im Falle einer erfolgreichen Prüfung Zugriff auf die angefragten Sensordaten zu gewähren. Im Falle eines detektierten Ausnahmeereignisses wird beispielsweise auch ein Zugriff auf personenbezogene Sensordaten gewährt, deren Anonymisierung vorübergehend ausgesetzt ist. Die Berechtigungsnachweise können beispielsweise auf Berechtigungszertifikaten und/oder Berechtigungsprofilen der Anfragenden basieren, welche Zugriffsberechtigungen der Anfragenden definieren. In einem Nutzer und/oder UWB-Token zugeordneten Berechtigungsprofil sind beispielsweise sämtliche einem und/oder UWB-Token zugeordneten Zugriffsberechtigungen gespeichert. Der Umfang der gewährten Zugriffsberechtigung kann nach Ausführungsformen beispielsweise davon abhängen, ob eine Ausnahmesituation detektiert wird.

Das Überwachungssystem 100 kann ferner dazu konfiguriert sein unter Verwendung von UWB-Sensoren UWB-Token 112 innerhalb des räumlichen Bereiches 102 zu lokalisieren. Hierzu werden beispielsweise UBW-Lokalisierungssignale 107 verwendet, welche von den UWB-Antennen 110 an die entsprechenden UWB-Token 112 gesendet werden und umgekehrt. Anhand von Laufzeitunterschieden der übertragenen Signale können beispielsweise mittels Triangulation die relativen Positionen der UBW-Token 112 zu den festinstallierten UWB-Antennen 110 und somit die Positionen der UBW-Token 112 in dem räumlichen Bereich 102 präzise bestimmt werden. Da die übertragenen UBW-Lokalisierungssignale 107 ohne Kenntnis der verwendeten UWB-Kodierung kaum von Hintergrundrauschen zu unterscheiden sind und somit effektiv obfuskiert werden, können Versuche einer unberechtigten Lokalisierung der UWB-Token 112 im Zuge von unerlaubten Ausspähversuchen effektiv verhindert werden. Dies wird zusätzlich unterstützt durch die verhältnismäßig kurze Reichweite der UWB-Signale, welche Ausspähversuche aus der Ferne effektiv kontern. Die UWB-Token 112 kennzeichnen beispielsweise Nutzer bzw. Träger mit Zugangsberechtigung zu dem räumlichen Bereich 102, falls es sich bei diesem um einen zugangsbeschränkten räumlichen Bereich handelt. Ferner können die UWB-Token 112 trägerspezifische Zugangsberechtigungen definieren, falls für einzelne räumliche Abschnitte des räumlichen Bereiches 102 unterschiedliche Zugangsberechtigungen notwendig sind. Anhand der UWB-Token 112 kann somit bestimmt werden, wo sich zugangsberechtigte Personen aufhalten. Falls Personen detektiert werden, welchen kein UWB-Token 112 zugeordnet werden kann, ist dies ein Hinweis auf einen Versuch eines unberechtigten Eindringens, welcher beispielsweise als ein Ausnahmeereignis detektiert wird.

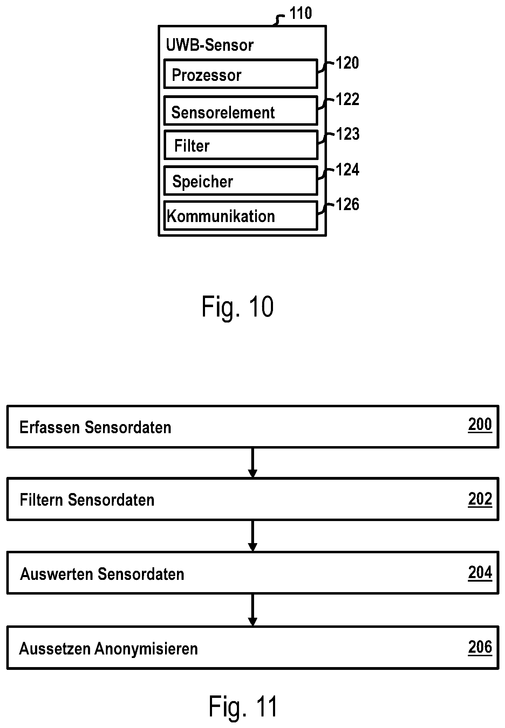

Figur 10 zeigt eine exemplarische als UBW-Sensor konfigurierte UWB-Kommunikationsvorrichtung 110. Beispielsweise umfasst die als UBW-Sensor konfigurierte UWB-Kommunikationsvorrichtung 110 alle Merkmale der in Figur 2 gezeigten UWB-Kommunikationsvorrichtung 110. Der UBW-Sensor 110 umfasst ferner ein Sensorelement 122, welches beispielsweise zum Erfassen optischer, akustischer, chemischer, thermischer, elektromagnetischer und/oder vibrationsbasierter Sensordaten konfiguriert ist. Die erfassten Sensordaten können beispielsweise in Abhängigkeit des verwendeten Sensorelements 122 personenbezogene Sensordaten umfassen. Falls der UWB-Sensor 110 zum Erfassen personenbezogene Sensordaten konfiguriert ist, umfasst der UWB-Sensor 110 ferner einen Anonymisierungsfilter zum Anonymisieren der personenbezogene Sensordaten, andernfalls nicht. Das Anonymisieren kann beispielsweise ein Löschen der erfassten personenbezogene Sensordaten von dem Speicher 124 umfassen. Ferner kann das Anonymisieren beispielsweise ein Verschlüsseln der erfassten personenbezogene Sensordaten umfassen. Schließlich umfasst der UWB-Sensor 110 eine UWB-Antenne 126 zum Senden und Empfangen von Daten mittels UWB. Nach Ausführungsformen kann der UWB-Sensor 110 beispielsweise zusätzlich eine Kommunikationsschnittstelle für eine kabelgebundene Datenübertragung umfassen.

Figur 11 zeigt ein exemplarisches Verfahren zum Steuern eines als UWB-Überwachungssystem konfigurierten UWB-Kommunikationssystems. In Block 200 werden Sensordaten in einem räumlichen Bereich durch UWB-Sensoren des UWB-Überwachungssystems erfasst. Die erfassten Sensordaten können personenbezogene Sensordaten umfassen. In Block 202 werden die erfassten Sensordaten unter Verwendung von Anonymisierungsfiltern der UWB-Sensoren gefiltert. Dabei werden personenbezogene Sensordaten anonymisiert. Ein solches Anonymisieren umfasst beispielsweise ein Löschen oder Verschlüsseln der zu anonymisierenden Sensordaten. In Block 204 werden die erfassten und gefilterten Sensordaten zum Detektieren eines Ausnahmeereignisses ausgewertet.

Dies erfolgt beispielsweise durch ein zentrales oder dezentrales Steuermodul des UWB-Überwachungssystems. In Block 206 wird auf ein Detektieren eines Ausnahmeereignisses hin, ein zeitlich begrenztes Aussetzen des Anonymisierens der personenbezogene Sensordaten beispielsweise durch das Steuermodul veranlasst.

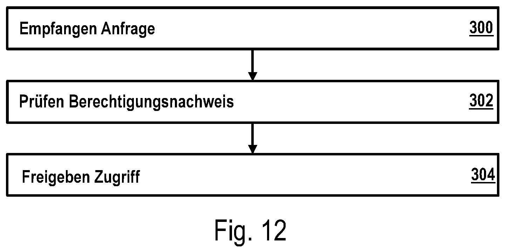

Figur 12 zeigt ein exemplarisches Verfahren zum Steuern eines als UWB-Überwachungssystem konfigurierten UWB-Kommunikationssystems. In Block 300 empfängt das UWB-Überwachungssystem, beispielsweise ein Steuermodul des UWB-Überwachungssystems, eine Anfrage zum Freigeben von erfassten Sensordaten. In Block 302 wird, beispielsweise durch das Steuermodul, eine von der Anfrage umfasster Berechtigungsnachweis zum Zugriff auf die angefragte Sensordaten geprüft. Bei dem Berechtigungsnachweis kann es sich beispielsweise um ein Berechtigungszertifikat handeln oder um einen Identifikator eines hinterlegten Berechtigungsprofils des Anfragenden. In Block 304 wird auf eine erfolgreiche Prüfung des Berechtigungsnachweises hin, ein Zugriff auf die angefragten Sensordaten freigegeben. Beispielsweise werden die angefragten Sensordaten an den Anfragenden gesendet oder auf einer lokalen Anzeigevorrichtung des Überwachungssystems angezeigt.

### Bezugszeichenliste

- 100: UWB-Kommunikationssystem
- 101: UWB-Kommunikationssystem
- 102: räumlicher Bereich
- 104: Zugang/Ausgang
- 106: räumlicher Abschnitt
- 108: Zugang/Ausgang
- 107: UWB-Lokalisierungssignal
- 110: UWB-Kommunikationsvorrichtung
- 111: UWB-Transceiver
- 112: UWB-Kommunikationsgerät
- 114: UWB-Kommunikationskanal
- 116: Steuermodul
- 120: Prozessor
- 122: Sensorelement
- 123: Filter
- 124: Speicher
- 126: Kommunikationsschnittstelle
- 130: Prozessor
- 132: Speicher
- 134: Kommunikationsschnittstelle
- 140: Mehrzahl von Daten
- 142: erste Daten
- 144: zweite Daten
- 150: UWB-Datenkodierungsschemata
- 152: erstes UWB-Datenkodierungsschema
- 154: zweites UWB-Datenkodierungsschema
- 160: Dienstanwendungen
- 162: erste Dienstanwendung
- 163: Dienst
- 164: zweite Dienstanwendung
- 170: Benutzerschnittstelle
- 172: Benutzeroberfläche
- 400: Zeitdomäne
- 402: Impuls
- 404: Frequenzdomäne
- 406: Spektrum
- 410: ON-OFF Keying
- 411: Pulse Position Modulation
- 412: Binary Phase Shift Keying
- 413: Pulse Amplitude Modulation
- 414: Zeitintervall

## Patentansprüche

1. Mobiles tragbares UWB-Kommunikationsgerät (112), wobei das UWB-Kommunikationsgerät (112) einen Prozessor (130), einen Speicher (132) und eine Kommunikationsschnittstelle (134) umfasst, wobei die Kommunikationsschnittstelle (134) konfiguriert ist für eine kabellose UWB-Kommunikation, wobei in dem Speicher (132) eine Mehrzahl von Programminstruktionen zum Ausführen durch den Prozessor (130) gespeichert ist, wobei ein Ausführen von Programminstruktionen der Mehrzahl von Programminstruktionen durch den Prozessor (130) den Prozessor (130) dazu veranlasst zum Übertragen von Daten eine UWB-Kommunikation unter Verwendung der Kommunikationsschnittstelle (134) auszuführen,
wobei in dem Speicher (132) eine Mehrzahl von UWB-Datenkodierungsschemata (150) gespeichert ist, welche zumindest ein erstes UWB-Datenkodierungsschema (152) und ein von dem ersten UWB-Datenkodierungsschema (152) verschiedenes zweites UWB-Datenkodierungsschema (154) umfassen, wobei in dem Speicher (132) ferner eine Mehrzahl von Daten (140) gespeichert ist, welche zumindest erste und zweite Daten (142, 144) umfasst, wobei die ersten Daten (142) dem ersten UWB-Datenkodierungsschema (152) und die zweiten Daten (144) dem zweiten UWB-Datenkodierungsschema (154) zugeordnet sind,
wobei für die ersten und zweiten Daten (142, 144) festgelegt ist, dass diese ausschließlich unter Verwendung von UWB übertragen werden,
wobei für die ersten Daten (142) festgelegt ist, dass diese ausschließlich unter Verwendung des ersten UWB-Datenkodierungsschemas (152) übertragen werden, und wobei für die zweiten Daten (144) festgelegt ist, dass diese ausschließlich unter Verwendung des zweiten UWB-Datenkodierungsschemas (154) übertragen werden,
wobei zum Übertragen der ersten Daten (142) mit einer ersten UWB-Datenkodierung eine erste UWB-Kommunikation ausgeführt wird, die gemäß dem ersten UWB-Datenkodierungsschema (152) kodiert ist, wobei zum Übertragen der zweiten Daten (144) mit einer von der ersten UWB-Datenkodierung verschiedenen zweiten UWB-Datenkodierung eine zweite UWB-Kommunikation ausgeführt wird, die gemäß dem zweiten UWB-Datenkodierungsschema (154) kodiert ist,
wobei Voraussetzung zum Aufbau der UWB-Kommunikationen durch das mobile tragbare UWB-Kommunikationsgerät (112) jeweils ein Erfassen einer UWB-Kommunikationsvorrichtung (110) ist, die zu einer Kommunikation mittel UWB konfiguriert ist, in deren Reichweite sich das mobile tragbare UWB-Kommunikationsgerät (112) befindet und die zur kabellosen UWB-Kommunikation eine UWB-Datenkodierung verwendet, welche gemäß einem der UWB-Datenkodierungsschemata der gespeicherten Mehrzahl von UWB-Datenkodierungsschemata (150) kodiert ist,
wobei das Erfassen der UWB-Kommunikationsvorrichtung (110) ein Empfangen und erfolgreiches Dekodieren einer von der UWB-Kommunikationsvorrichtung (110) gesendeten ersten UWB-Nachricht, welche die Anwesenheit der UWB-Kommunikationsvorrichtung (110) anzeigt, durch das mobile tragbare UWB-Kommunikationsgerät (112) umfasst unter Verwendung eines der UWB-Datenkodierungsschemata der gespeicherten Mehrzahl von UWB-Datenkodierungsschemata (150), wobei es sich bei dem UWB-Datenkodierungsschema, gemäß dem die von der UWB-Kommunikationsvorrichtung (110) verwendete UWB-Datenkodierung kodiert ist, um das erste oder zweite UWB-Datenkodierungsschema (152, 154) handelt,
wobei das mobile tragbare UWB-Kommunikationsgerät (112) in Antwort auf das erfolgreiche Dekodieren der ersten UWB-Nachricht eine die Anwesenheit des mobilen tragbaren UWB-Kommunikationsgeräts (112) anzeigende zweite UWB-Nachricht an die UWB-Kommunikationsvorrichtung (110) sendet, wobei die gesendete zweite UWB-Nachricht mit einer UWB-Datenkodierung gemäß demselben UWB-Datenkodierungsschema wie die erste UWB-Nachricht kodiert ist,
wobei unter Verwendung der ersten UWB-Kommunikation mit der ersten UWB-Datenkodierung gemäß dem ersten UWB-Datenkodierungsschema (152) ein erster kryptographischer Schlüssel bereitgestellt wird,
wobei die Kommunikationsschnittstelle (134) ferner für eine zusätzliche kabellose, UWB-lose Kommunikation konfiguriert ist, wobei die gespeicherte Mehrzahl von Daten (140) ferner vierte Daten umfasst, wobei die gespeicherte Mehrzahl von Programminstruktionen ferner fünfte Programminstruktionen umfasst, wobei ein Ausführen der fünften Programminstruktionen durch den Prozessor (130) den Prozessor (130) dazu veranlasst zum Übertragen der vierten Daten die zusätzliche Kommunikation unter Verwendung der Kommunikationsschnittstelle (134) auszuführen, wobei die übertragenen vierten Daten unter Verwendung des bereitgestellten ersten kryptographischen Schlüssels verschlüsselt sind.

2. Mobiles tragbares UWB-Kommunikationsgerät (112) nach Anspruch 1, wobei das erste und zweite UWB-Datenkodierungsschema (152, 154) jeweils dasselbe Kodierungsverfahren verwenden oder
wobei das erste und zweite datenspezifische UWB-Datenkodierungsschema (152, 154) jeweils verschiedene Kodierungsverfahren verwenden.

3. Mobiles tragbares UWB-Kommunikationsgerät (112) nach Anspruch 2, wobei eines oder mehrere der folgenden Kodierungsverfahren verwendet werden: Pulspositionsmodulation, Pulspolaritätsmodulation, Pulsamplitudenmodulation, orthogonale Pulsformmodulation.

4. Mobiles tragbares UWB-Kommunikationsgerät (112) nach einem der vorangehenden Ansprüche, wobei gemäß unterschiedlichen UWB-Datenkodierungsschemata kodierte UWB-Kommunikationen zumindest zeitweise parallel auf unterschiedlichen UWB-Kanälen, unter Verwendung eines seriellen Multiplex-Verfahren ineinander verschränkt und/oder unter Verwendung eines Zeitmultiplex-Verfahrens abwechselnd nacheinander gesendet werden, und/oder
wobei die ersten Daten (142) mit der ersten UWB-Datenkodierung und die zweiten Daten (144) mit der zweiten UWB-Datenkodierung zumindest zeitweise simultan übertragen werden.

5. Mobiles tragbares UWB-Kommunikationsgerät (112) nach einem der vorangehenden Ansprüche, wobei die gespeicherte Mehrzahl von Programminstruktionen erste Programminstruktionen einer ersten Dienstanwendung (162) und zweite Programminstruktionen einer zweiten Dienstanwendungen (164) umfasst, wobei es sich bei den ersten Daten (142) um Daten der ersten Dienstanwendung (162) und bei den zweiten Daten (144) um Daten der zweiten Dienstanwendung (164) handelt, wobei es sich bei dem ersten UWB-Datenkodierungsschema (152) um ein erstes dienstspezifisches UWB-Datenkodierungsschema der ersten Dienstanwendung (162) und bei dem zweiten UWB-Datenkodierungsschema (154) um ein zweites dienstspezifisches UWB-Datenkodierungsschema der zweiten Dienstanwendung (164) handelt,
wobei beispielsweise die erste und zweite Dienstanwendung (162, 164) zumindest zeitweise simultan ausgeführt werden.

6. Mobiles tragbares UWB-Kommunikationsgerät (112) nach einem der vorangehenden Ansprüche, wobei die gespeicherte Mehrzahl von Programminstruktionen dritte Programminstruktionen einer dritten Dienstanwendung umfasst, wobei die gespeicherte Mehrzahl von Daten (140) dritte Daten der dritten Dienstanwendung umfasst, wobei die dritten Daten dem ersten UWB-Datenkodierungsschema (152) zugeordnet sind, wobei zum Übertragen der dritten Daten mit der ersten UWB-Datenkodierung die erste UWB-Kommunikation ausgeführt wird, die gemäß dem ersten UWB-Datenkodierungsschema (152) kodiert ist,
wobei beispielsweise die dritten Daten mit der ersten UWB-Datenkodierung zumindest zeitweise simultan mit den zweiten Daten (144) mit der zweiten UWB-Datenkodierung übertragen werden und/oder
wobei beispielsweise die dritte Dienstanwendung zumindest zeitweise simultan mit der zweiten Dienstanwendung (164) ausgeführt wird.

7. Mobiles tragbares UWB-Kommunikationsgerät (112) nach einem der vorangehenden Ansprüche, wobei das mobile tragbare UWB-Kommunikationsgerät (112) ferner eine Benutzerschnittstelle (170) umfasst, wobei die gespeicherte Mehrzahl von Programminstruktionen ferner vierte Programminstruktionen umfasst, wobei ein Ausführen der vierten Programminstruktionen durch den Prozessor (130) den Prozessor (130) dazu veranlasst einem Benutzer des mobilen tragbaren UWB-Kommunikationsgeräts (112) mittels der Benutzerschnittstelle (170) eine graphische Benutzeroberfläche (172) zum datenspezifischen Zuordnen der Daten der gespeicherten Mehrzahl von Daten (140) zu den UWB-Datenkodierungsschemata der gespeicherten Mehrzahl von UWB-Datenkodierungsschemata (150) bereitzustellen.

8. Mobiles tragbares UWB-Kommunikationsgerät (112) nach einem der vorangehenden Ansprüche, wobei die ersten Daten (142) mit der ersten UWB-Datenkodierung der ersten UWB-Kommunikation ohne zusätzliche Verschlüsselung unter Verwendung eines kryptographischen Schlüssels und/oder die zweiten Daten (144) mit der zweiten UWB-Datenkodierung der zweiten UWB-Kommunikation ohne zusätzliche Verschlüsselung unter Verwendung eines kryptographischen Schlüssels übertragen werden, oder
wobei die mit der ersten UWB-Datenkodierung der ersten UWB-Kommunikation übertragenen ersten Daten (142) unter Verwendung eines zweiten kryptographischen Schlüssels zusätzlich verschlüsselt sind und/oder die mit der zweiten UWB-Datenkodierung der zweiten UWB-Kommunikation übertragenen zweiten Daten (144) unter Verwendung eines dritten kryptographischen Schlüssels zusätzlich verschlüsselt sind.

9. UWB-Kommunikationssystem (100, 101), welches ein mobiles tragbares UWB-Kommunikationsgerät (112) nach einem der vorangehenden Ansprüche und eine UWB-Kommunikationsvorrichtung (110) umfasst, die zu einer Kommunikation mittels UWB konfiguriert ist und zur kabellosen UWB-Kommunikation eine UWB-Datenkodierung verwendet, welche gemäß einem der UWB-Datenkodierungsschemata der gespeicherten Mehrzahl von UWB-Datenkodierungsschemata (150) kodiert ist.

10. UWB-Kommunikationssystem (100, 101) nach Anspruch 9, wobei die UWB-Kommunikationsvorrichtung (110) von einer Mehrzahl von Kommunikationsvorrichtungen (110) des UWB-Kommunikationssystems (100, 101) umfasst ist, wobei die Mehrzahl von Kommunikationsvorrichtungen (110) erste UWB-Kommunikationsvorrichtungen umfasst, welche zu einer Kommunikation mittels UWB konfiguriert und zu einem UWB-Mesh-Netzwerk zusammengeschlossen sind, wobei die ersten UWB-Kommunikationsvorrichtungen jeweils einen Netzwerkknoten des UWB-Mesh-Netzwerks bilden, wobei die UWB-Kommunikationsvorrichtung (110) zu den ersten UWB-Kommunikationsvorrichtungen der Mehrzahl von Kommunikationsvorrichtungen (110) gehört.

11. UWB-Kommunikationssystem (100, 101) nach Anspruch 10, wobei die ersten UWB-Kommunikationsvorrichtungen zur Kommunikation untereinander innerhalb des UWB-Mesh-Netzwerks eine gemäß einem UWB-Kodierungsschema der gespeicherten Mehrzahl von UWB-Kodierungsschemata kodierte UWB-Kodierung verwenden,
wobei das mobile tragbare Kommunikationsgerät (112) beispielsweise einen weiteren Netzwerkknoten des UWB-Mesh-Netzwerks bildet, oder
wobei die ersten UWB-Kommunikationsvorrichtungen zur Kommunikation untereinander innerhalb des UWB-Mesh-Netzwerks eine gemäß einem UWB-Kodierungsschema kodierte UWB-Kodierung verwenden, welches nicht in dem Speicher (132) des mobilen tragbaren Kommunikationsgeräts (112) gespeichert ist.

12. UWB-Kommunikationssystem (100, 101) nach einem der Ansprüche 9 bis 10, wobei die Mehrzahl von Kommunikationsvorrichtungen (110) ferner zweite Kommunikationsvorrichtungen umfasst, welche zu einer kabellosen, UWB-losen Kommunikation konfiguriert sind,
wobei die kabellose, UWB-lose Kommunikation der zweiten Kommunikationsvorrichtungen beispielsweise jeweils unter Verwendung eines kryptographischen Schlüssels verschlüsselt ist, welcher innerhalb des UWB-Kommunikationssystems (100, 101) über eine kabellose UWB-Kommunikation bereitgestellt wird, und/oder
wobei das UWB-Kommunikationssystem (100) als UWB-Überwachungssystem zur Überwachung eines räumlichen Bereiches (102) konfiguriert ist, wobei die ersten UWB-Kommunikationsvorrichtungen (110) als UWB-Sensoren konfiguriert sind, welche in dem räumlichen Bereich (102) verteilt angeordnet sind, wobei die UWB-Sensoren für ein Erfassen von Sensordaten und für ein Übertragen der erfassten Sensordaten mittels UWB konfiguriert sind, wobei das UWB-Kommunikationssystem (100) als UWB-Überwachungssystem ferner konfiguriert ist zum
• Erfassen von Sensordaten in dem räumlichen Bereich (102) unter Verwendung der UWB-Sensoren, wobei die erfassten Sensordaten personenbezogene Sensordaten umfassen,
• Filtern der erfassten Sensordaten unter Verwendung eines Anonymisierungsfilters, wobei der Anonymisierungsfilter dazu konfiguriert ist, die personenbezogenen Sensordaten zu anonymisieren,
• Auswerten der erfassten Sensordaten zum Detektieren eines Ausnahmeereignisses,
• auf das Detektieren des Ausnahmeereignisses hin, zeitlich begrenzten Aussetzen des Anonymisierens der personenbezogene Sensordaten.

13. Verfahren zum Betreiben eines mobilen tragbaren UWB-Kommunikationsgeräts (112), wobei das UWB-Kommunikationsgerät (112) einen Prozessor (130), einen Speicher (132) und eine Kommunikationsschnittstelle (134) umfasst, wobei die Kommunikationsschnittstelle (134) konfiguriert ist für eine kabellose UWB-Kommunikation, wobei in dem Speicher (132) eine Mehrzahl von Programminstruktionen zum Ausführen durch den Prozessor (130) gespeichert ist, wobei ein Ausführen von Programminstruktionen der Mehrzahl von Programminstruktionen durch den Prozessor (130) den Prozessor (130) dazu veranlasst zum Übertragen von Daten eine kabellose UWB-Kommunikation unter Verwendung der Kommunikationsschnittstelle (134) auszuführen,
wobei in dem Speicher (132) eine Mehrzahl von UWB-Datenkodierungsschemata (150) gespeichert ist, welche zumindest ein erstes UWB-Datenkodierungsschema (152) und ein von dem ersten UWB-Datenkodierungsschema (152) verschiedenes zweites UWB-Datenkodierungsschema (154) umfassen, wobei in dem Speicher (132) ferner eine Mehrzahl von Daten (140) gespeichert ist, welche zumindest erste und zweite Daten (142, 144) umfasst, wobei die ersten Daten (142) dem ersten UWB-Datenkodierungsschema (152) und die zweiten Daten (144) dem zweiten UWB-Datenkodierungsschema (154) zugeordnet sind,
wobei für die ersten und zweiten Daten (142, 144) festgelegt ist, dass diese ausschließlich unter Verwendung von UWB übertragen werden,
wobei für die ersten Daten (142) festgelegt ist, dass diese ausschließlich unter Verwendung des ersten UWB-Datenkodierungsschemas (152) übertragen werden, und wobei für die zweiten Daten (144) festgelegt ist, dass diese ausschließlich unter Verwendung des zweiten UWB-Datenkodierungsschemas (154) übertragen werden,
wobei das Verfahren umfasst:
• Übertragen der ersten Daten (142) mit einer ersten UWB-Datenkodierung unter Verwendung einer ersten UWB-Kommunikation, die gemäß dem ersten UWB-Datenkodierungsschema (152) kodiert ist,
wobei Voraussetzung zum Aufbau der ersten UWB-Kommunikation durch das mobile tragbare UWB-Kommunikationsgerät (112) ein Erfassen einer UWB-Kommunikationsvorrichtung (110) ist, die zu einer Kommunikation mittel UWB konfiguriert ist, in deren Reichweite sich das mobile tragbare UWB-Kommunikationsgerät (112) befindet und die zur kabellosen UWB-Kommunikation eine UWB-Datenkodierung verwendet, welche gemäß dem ersten UWB-Datenkodierungsschemata der gespeicherten Mehrzahl von UWB-Datenkodierungsschemata (150) kodiert ist,
wobei das Erfassen der UWB-Kommunikationsvorrichtung (110) ein Empfangen und erfolgreiches Dekodieren einer von der UWB-Kommunikationsvorrichtung (110) gesendeten ersten UWB-Nachricht, welche die Anwesenheit der UWB-Kommunikationsvorrichtung (110) anzeigt, durch das mobile tragbare UWB-Kommunikationsgerät (112) umfasst unter Verwendung des ersten UWB-Datenkodierungsschemata der gespeicherten Mehrzahl von UWB-Datenkodierungsschemata (150),
wobei das mobile tragbare UWB-Kommunikationsgerät (112) in Antwort auf das erfolgreiche Dekodieren der ersten UWB-Nachricht eine die Anwesenheit des mobilen tragbaren UWB-Kommunikationsgeräts (112) anzeigende zweite UWB-Nachricht an die UWB-Kommunikationsvorrichtung (110) sendet, wobei die gesendete zweite UWB-Nachricht mit einer UWB-Datenkodierung gemäß demselben UWB-Datenkodierungsschema wie die erste UWB-Nachricht kodiert ist,
• Bereitstellen eines ersten kryptographischen Schlüssels unter Verwendung der ersten UWB-Kommunikation mit der ersten UWB-Datenkodierung gemäß dem ersten UWB-Datenkodierungsschema (152),
wobei die Kommunikationsschnittstelle (134) ferner für eine zusätzliche kabellose, UWB-lose Kommunikation konfiguriert ist, wobei die gespeicherte Mehrzahl von Daten (140) ferner vierte Daten umfasst, wobei die gespeicherte Mehrzahl von Programminstruktionen ferner fünfte Programminstruktionen umfasst, wobei ein Ausführen der fünften Programminstruktionen durch den Prozessor (130) den Prozessor (130) dazu veranlasst:
• Übertragen der vierten Daten mittels der zusätzlichen Kommunikation unter Verwendung der Kommunikationsschnittstelle (134), wobei die übertragenen vierten Daten unter Verwendung des bereitgestellten ersten kryptographischen Schlüssels verschlüsselt sind,
wobei das Verfahren ferner umfasst:
• Übertragen der zweiten Daten (144) mit einer von der ersten UWB-Datenkodierung verschiedenen zweiten UWB-Datenkodierung unter Verwendung einer zweiten UWB-Kommunikation, die gemäß dem zweiten UWB-Datenkodierungsschema (154) kodiert ist.

## Claims

1. A mobile portable UWB communication device (112), wherein the UWB communication device (112) comprises a processor (130), a memory (132) and a communication interface (134), wherein the communication interface (134) is configured for wireless UWB communication, wherein a plurality of program instructions for execution by the processor (130) is stored in the memory (132), wherein an execution of program instructions of the plurality of program instructions by the processor (130) causes the processor (130) to perform a UWB communication using the communication interface (134) to transmit data,
wherein a plurality of UWB data coding schemes (150) is stored in the memory (132), said schemes comprising at least a first UWB data coding scheme (152) and a second UWB data coding scheme (154) different from the first UWB data coding scheme (152), wherein a plurality of data (140) is further stored in the memory (132), said data comprising at least first and second data (142, 144), wherein the first data (142) are assigned to the first UWB data coding scheme (152) and the second data (144) are assigned to the second UWB data coding scheme (154),
wherein it is specified for the first and second data (142, 144) that they are transmitted exclusively using UWB,
wherein it is specified for the first data (142) that they are transmitted exclusively using the first UWB data coding scheme (152), and wherein it is specified for the second data (144) that they are transmitted exclusively using the second UWB data coding scheme (154),
wherein, to transmit the first data (142) with a first UWB data coding, a first UWB communication is performed that is coded according to the first UWB data coding scheme (152), wherein, to transmit the second data (144) with a second UWB data coding different from the first UWB data coding, a second UWB communication is performed that is coded according to the second UWB data coding scheme (154),
wherein a prerequisite for establishing each of the UWB communications by the mobile portable UWB communication device (112) is detecting a UWB communication apparatus (110) that is configured for communication by means of UWB, within whose range the mobile portable UWB communication device (112) is located and that uses, for wireless UWB communication, a UWB data coding that is coded according to one of the UWB data coding schemes of the stored plurality of UWB data coding schemes (150),
wherein the detecting of the UWB communication apparatus (110) comprises receiving and successfully decoding, by the mobile portable UWB communication device (112), a first UWB message sent by the UWB communication apparatus (110) and indicating the presence of the UWB communication apparatus (110), using one of the UWB data coding schemes of the stored plurality of UWB data coding schemes (150), wherein the UWB data coding scheme according to which the UWB data coding used by the UWB communication apparatus (110) is coded is the first or second UWB data coding scheme (152, 154),
wherein, in response to the successfully decoding of the first UWB message, the mobile portable UWB communication device (112) sends a second UWB message indicating the presence of the mobile portable UWB communication device (112) to the UWB communication apparatus (110), wherein the second UWB message sent is coded with a UWB data coding according to the same UWB data coding scheme as the first UWB message,
wherein a first cryptographic key is provided using the first UWB communication with the first UWB data coding according to the first UWB data coding scheme (152),
wherein the communication interface (134) is further configured for additional wireless, non-UWB communication, wherein the stored plurality of data (140) further comprises fourth data, wherein the stored plurality of program instructions further comprises fifth program instructions, wherein an execution of the fifth program instructions by the processor (130) causes the processor (130) to perform the additional communication using the communication interface (134) to transmit the fourth data, wherein the transmitted fourth data are encrypted using the first cryptographic key provided.

2. The mobile portable UWB communication device (112) according to claim 1, wherein the first and second UWB data coding schemes (152, 154) each use the same coding method, or
wherein the first and second data-specific UWB data coding schemes (152, 154) each use different coding methods.

3. The mobile portable UWB communication device (112) according to claim 2, wherein one or more of the following coding methods are used: pulse position modulation, pulse polarity modulation, pulse amplitude modulation, orthogonal pulse shape modulation.

4. The mobile portable UWB communication device (112) according to any one of the preceding claims, wherein UWB communications coded according to different UWB data coding schemes are sent at least temporarily in parallel on different UWB channels, interleaved using a serial multiplexing method and/or alternately in succession using a time division multiplexing method, and/or
wherein the first data (142) with the first UWB data coding and the second data (144) with the second UWB data coding are transmitted simultaneously at least temporarily.

5. The mobile portable UWB communication device (112) according to any one of the preceding claims, wherein the stored plurality of program instructions comprises first program instructions of a first service application (162) and second program instructions of a second service application (164), wherein the first data (142) are data of the first service application (162) and the second data (144) are data of the second service application (164), wherein the first UWB data coding scheme (152) is a first service-specific UWB data coding scheme of the first service application (162) and the second UWB data coding scheme (154) is a second service-specific UWB data coding scheme of the second service application (164),
wherein, for example, the first and second service applications (162, 164) are executed simultaneously at least temporarily.

6. The mobile portable UWB communication device (112) according to any one of the preceding claims, wherein the stored plurality of program instructions comprises third program instructions of a third service application, wherein the stored plurality of data (140) comprises third data of the third service application, wherein the third data are assigned to the first UWB data coding scheme (152), wherein, to transmit the third data with the first UWB data coding, the first UWB communication is performed that is coded according to the first UWB data coding scheme (152),
wherein, for example, the third data with the first UWB data coding are transmitted simultaneously at least temporarily with the second data (144) with the second UWB data coding, and/or
wherein, for example, the third service application is executed simultaneously at least temporarily with the second service application (164).

7. The mobile portable UWB communication device (112) according to any one of the preceding claims, wherein the mobile portable UWB communication device (112) further comprises a user interface (170), wherein the stored plurality of program instructions further comprises fourth program instructions, wherein an execution of the fourth program instructions by the processor (130) causes the processor (130) to provide a user of the mobile portable UWB communication device (112), by means of the user interface (170), with a graphical user interface (172) for assigning the data of the stored plurality of data (140) to the UWB data coding schemes of the stored plurality of UWB data coding schemes (150) in a data-specific manner.

8. The mobile portable UWB communication device (112) according to any one of the preceding claims, wherein the first data (142) with the first UWB data coding of the first UWB communication are transmitted without additional encryption using a cryptographic key and/or the second data (144) with the second UWB data coding of the second UWB communication are transmitted without additional encryption using a cryptographic key, or
wherein the first data (142) transmitted with the first UWB data coding of the first UWB communication are additionally encrypted using a second cryptographic key and/or the second data (144) transmitted with the second UWB data coding of the second UWB communication are additionally encrypted using a third cryptographic key.

9. A UWB communication system (100, 101) comprising a mobile portable UWB communication device (112) according to any one of the preceding claims and a UWB communication apparatus (110) that is configured for communication by means of UWB and uses, for wireless UWB communication, a UWB data coding that is coded according to one of the UWB data coding schemes of the stored plurality of UWB data coding schemes (150).

10. The UWB communication system (100, 101) according to claim 9, wherein the UWB communication apparatus (110) is comprised in a plurality of communication apparatuses (110) of the UWB communication system (100, 101), wherein the plurality of communication apparatuses (110) comprises first UWB communication apparatuses that are configured for communication by means of UWB and are interconnected to form a UWB mesh network, wherein the first UWB communication apparatuses each form a network node of the UWB mesh network, wherein the UWB communication apparatus (110) belongs to the first UWB communication apparatuses of the plurality of communication apparatuses (110).

11. The UWB communication system (100, 101) according to claim 10, wherein, for communication with one another within the UWB mesh network, the first UWB communication apparatuses use a UWB coding coded according to a UWB coding scheme of the stored plurality of UWB coding schemes,
wherein the mobile portable communication device (112), for example, forms a further network node of the UWB mesh network, or
wherein, for communication with one another within the UWB mesh network, the first UWB communication apparatuses use a UWB coding coded according to a UWB coding scheme that is not stored in the memory (132) of the mobile portable communication device (112).

12. The UWB communication system (100, 101) according to any one of claims 9 to 10, wherein the plurality of communication apparatuses (110) further comprises second communication apparatuses that are configured for wireless, non-UWB communication,
wherein the wireless, non-UWB communication of the second communication apparatuses is, for example, in each case encrypted using a cryptographic key that is provided within the UWB communication system (100, 101) via wireless UWB communication, and/or
wherein the UWB communication system (100) is configured as a UWB monitoring system for monitoring a spatial area (102), wherein the first UWB communication apparatuses (110) are configured as UWB sensors that are arranged in a distributed manner in the spatial area (102), wherein the UWB sensors are configured for acquiring sensor data and for transmitting the acquired sensor data by means of UWB, wherein the UWB communication system (100), as a UWB monitoring system, is further configured for
• acquiring sensor data in the spatial area (102) using the UWB sensors, wherein the acquired sensor data comprise personal sensor data,
• filtering the acquired sensor data using an anonymization filter, wherein the anonymization filter is configured to anonymize the personal sensor data,
• evaluating the acquired sensor data to detect an exceptional event,
• upon detecting the exceptional event, suspending the anonymization of the personal sensor data for a limited period of time.

13. A method for operating a mobile portable UWB communication device (112), wherein the UWB communication device (112) comprises a processor (130), a memory (132) and a communication interface (134), wherein the communication interface (134) is configured for wireless UWB communication, wherein a plurality of program instructions for execution by the processor (130) is stored in the memory (132), wherein an execution of program instructions of the plurality of program instructions by the processor (130) causes the processor (130) to perform a wireless UWB communication using the communication interface (134) to transmit data,
wherein a plurality of UWB data coding schemes (150) is stored in the memory (132), said schemes comprising at least a first UWB data coding scheme (152) and a second UWB data coding scheme (154) different from the first UWB data coding scheme (152), wherein a plurality of data (140) is further stored in the memory (132), said data comprising at least first and second data (142, 144), wherein the first data (142) are assigned to the first UWB data coding scheme (152) and the second data (144) are assigned to the second UWB data coding scheme (154),
wherein it is specified for the first and second data (142, 144) that they are transmitted exclusively using UWB,
wherein it is specified for the first data (142) that they are transmitted exclusively using the first UWB data coding scheme (152), and wherein it is specified for the second data (144) that they are transmitted exclusively using the second UWB data coding scheme (154),
wherein the method comprises:
• transmitting the first data (142) with a first UWB data coding using a first UWB communication that is coded according to the first UWB data coding scheme (152), wherein a prerequisite for establishing the first UWB communication by the mobile portable UWB communication device (112) is detecting a UWB communication apparatus (110) that is configured for communication by means of UWB, within whose range the mobile portable UWB communication device (112) is located and that uses, for wireless UWB communication, a UWB data coding that is coded according to the first UWB data coding scheme of the stored plurality of UWB data coding schemes (150),
wherein the detecting of the UWB communication apparatus (110) comprises receiving and successfully decoding, by the mobile portable UWB communication device (112), a first UWB message sent by the UWB communication apparatus (110) and indicating the presence of the UWB communication apparatus (110), using the first UWB data coding scheme of the stored plurality of UWB data coding schemes (150),
wherein, in response to the successfully decoding of the first UWB message, the mobile portable UWB communication device (112) sends a second UWB message indicating the presence of the mobile portable UWB communication device (112) to the UWB communication apparatus (110), wherein the second UWB message sent is coded with a UWB data coding according to the same UWB data coding scheme as the first UWB message,
• providing a first cryptographic key using the first UWB communication with the first UWB data coding according to the first UWB data coding scheme (152),
wherein the communication interface (134) is further configured for additional wireless, non-UWB communication, wherein the stored plurality of data (140) further comprises fourth data, wherein the stored plurality of program instructions further comprises fifth program instructions, wherein an execution of the fifth program instructions by the processor (130) causes the processor (130) to:
• transmit the fourth data by means of the additional communication using the communication interface (134), wherein the transmitted fourth data are encrypted using the first cryptographic key provided,
wherein the method further comprises:
• transmitting the second data (144) with a second UWB data coding different from the first UWB data coding using a second UWB communication that is coded according to the second UWB data coding scheme (154).

## Revendications

1. Appareil de communication UWB mobile et portable (112), l'appareil de communication UWB (112) comprenant un processeur (130), une mémoire (132) et une interface de communication (134), l'interface de communication (134) étant configurée pour une communication UWB sans fil, une pluralité d'instructions de programme destinées à être exécutées par le processeur (130) étant stockée dans la mémoire (132), l'exécution, par le processeur (130), d'instructions de programme de ladite pluralité d'instructions de programme amenant le processeur (130) à effectuer, pour transmettre des données, une communication UWB au moyen de l'interface de communication (134),
dans lequel une pluralité de schémas de codage de données UWB (150) est stockée dans la mémoire (132), ladite pluralité comprenant au moins un premier schéma de codage de données UWB (152) et un deuxième schéma de codage de données UWB (154) différent du premier schéma de codage de données UWB (152), une pluralité de données (140) étant en outre stockée dans la mémoire (132), ladite pluralité comprenant au moins des premières données et des deuxièmes données (142, 144), les premières données (142) étant associées au premier schéma de codage de données UWB (152) et les deuxièmes données (144) étant associées au deuxième schéma de codage de données UWB (154),
dans lequel il est spécifié que les premières et deuxièmes données (142, 144) sont transmises exclusivement au moyen de l'UWB,
dans lequel il est spécifié que les premières données (142) sont transmises exclusivement au moyen du premier schéma de codage de données UWB (152), et que les deuxièmes données (144) sont transmises exclusivement au moyen du deuxième schéma de codage de données UWB (154),
dans lequel, pour transmettre les premières données (142) avec un premier codage de données UWB, une première communication UWB codée conformément au premier schéma de codage de données UWB (152) est effectuée, et, pour transmettre les deuxièmes données (144) avec un deuxième codage de données UWB différent du premier codage de données UWB, une deuxième communication UWB codée conformément au deuxième schéma de codage de données UWB (154) est effectuée,
dans lequel l'établissement, par l'appareil de communication UWB mobile et portable (112), de chacune des communications UWB est subordonné à la détection d'un dispositif de communication UWB (110) configuré pour communiquer au moyen de l'UWB, dans la portée duquel se trouve l'appareil de communication UWB mobile et portable (112), et qui utilise, pour la communication UWB sans fil, un codage de données UWB codé conformément à l'un des schémas de codage de données UWB de ladite pluralité de schémas de codage de données UWB stockés (150),
dans lequel la détection du dispositif de communication UWB (110) comprend la réception et le décodage réussi, par l'appareil de communication UWB mobile et portable (112), d'un premier message UWB envoyé par le dispositif de communication UWB (110) et indiquant la présence du dispositif de communication UWB (110), au moyen de l'un des schémas de codage de données UWB de ladite pluralité de schémas de codage de données UWB stockés (150), le codage de données UWB utilisé par le dispositif de communication UWB (110) étant codé conformément au premier ou au deuxième schéma de codage de données UWB (152, 154),
dans lequel, en réponse au décodage réussi du premier message UWB, l'appareil de communication UWB mobile et portable (112) envoie au dispositif de communication UWB (110) un deuxième message UWB indiquant la présence de l'appareil de communication UWB mobile et portable (112), le deuxième message UWB envoyé étant codé au moyen d'un codage de données UWB codé conformément au même schéma de codage de données UWB que celui du premier message UWB,
dans lequel une première clé cryptographique est fournie au moyen de la première communication UWB avec le premier codage de données UWB conformément au premier schéma de codage de données UWB (152),
dans lequel l'interface de communication (134) est en outre configurée pour une communication sans fil supplémentaire non-UWB, ladite pluralité de données stockées (140) comprenant en outre des quatrièmes données, ladite pluralité d'instructions de programme stockées comprenant en outre des cinquièmes instructions de programme, l'exécution des cinquièmes instructions de programme par le processeur (130) amenant le processeur (130) à effectuer, pour transmettre les quatrièmes données, la communication supplémentaire au moyen de l'interface de communication (134), les quatrièmes données transmises étant chiffrées au moyen de la première clé cryptographique fournie.

2. Appareil de communication UWB mobile et portable (112) selon la revendication 1, dans lequel les premier et deuxième schémas de codage de données UWB (152, 154) utilisent le même procédé de codage, ou
dans lequel les premier et deuxième schémas de codage de données UWB spécifiques aux données (152, 154) utilisent des procédés de codage différents.

3. Appareil de communication UWB mobile et portable (112) selon la revendication 2, dans lequel un ou plusieurs des procédés de codage suivants sont utilisés : modulation de position d'impulsion, modulation de polarité d'impulsion, modulation d'amplitude d'impulsion, modulation orthogonale de forme d'impulsion.

4. Appareil de communication UWB mobile et portable (112) selon l'une quelconque des revendications précédentes, dans lequel des communications UWB codées conformément à différents schémas de codage de données UWB sont, au moins temporairement, transmises en parallèle sur différents canaux UWB, entrelacées au moyen d'un procédé de multiplexage série et/ou transmises successivement en alternance au moyen d'un procédé de multiplexage temporel, et/ou
dans lequel les premières données (142) avec le premier codage de données UWB et les deuxièmes données (144) avec le deuxième codage de données UWB sont transmises simultanément, au moins temporairement.

5. Appareil de communication UWB mobile et portable (112) selon l'une quelconque des revendications précédentes, dans lequel ladite pluralité d'instructions de programme stockées comprend des premières instructions de programme d'une première application de service (162) et des deuxièmes instructions de programme d'une deuxième application de service (164), les premières données (142) étant des données de la première application de service (162) et les deuxièmes données (144) étant des données de la deuxième application de service (164), le premier schéma de codage de données UWB (152) étant un premier schéma de codage de données UWB spécifique au service de la première application de service (162), et le deuxième schéma de codage de données UWB (154) étant un deuxième schéma de codage de données UWB spécifique au service de la deuxième application de service (164),
dans lequel, par exemple, les première et deuxième applications de service (162, 164) sont exécutées simultanément, au moins temporairement.

6. Appareil de communication UWB mobile et portable (112) selon l'une quelconque des revendications précédentes, dans lequel ladite pluralité d'instructions de programme stockées comprend des troisièmes instructions de programme d'une troisième application de service, ladite pluralité de données stockées (140) comprenant des troisièmes données de la troisième application de service, les troisièmes données étant associées au premier schéma de codage de données UWB (152), et, pour transmettre les troisièmes données avec le premier codage de données UWB, la première communication UWB codée conformément au premier schéma de codage de données UWB (152) étant effectuée,
dans lequel, par exemple, les troisièmes données avec le premier codage de données UWB sont transmises simultanément, au moins temporairement, avec les deuxièmes données (144) avec le deuxième codage de données UWB, et/ou
dans lequel, par exemple, la troisième application de service est exécutée simultanément, au moins temporairement, avec la deuxième application de service (164).

7. Appareil de communication UWB mobile et portable (112) selon l'une quelconque des revendications précédentes, dans lequel l'appareil de communication UWB mobile et portable (112) comprend en outre une interface utilisateur (170), ladite pluralité d'instructions de programme stockées comprenant en outre des quatrièmes instructions de programme, l'exécution des quatrièmes instructions de programme par le processeur (130) amenant le processeur (130) à fournir, à un utilisateur de l'appareil de communication UWB mobile et portable (112), au moyen de l'interface utilisateur (170), une interface utilisateur graphique (172) permettant d'associer, en fonction des données, les données de ladite pluralité de données stockées (140) aux schémas de codage de données UWB de ladite pluralité de schémas de codage de données UWB stockés (150).

8. Appareil de communication UWB mobile et portable (112) selon l'une quelconque des revendications précédentes, dans lequel les premières données (142), avec le premier codage de données UWB de la première communication UWB, sont transmises sans chiffrement supplémentaire utilisant une clé cryptographique et/ou les deuxièmes données (144), avec le deuxième codage de données UWB de la deuxième communication UWB, sont transmises sans chiffrement supplémentaire utilisant une clé cryptographique, ou
dans lequel les premières données (142) transmises avec le premier codage de données UWB de la première communication UWB sont en outre chiffrées utilisant une deuxième clé cryptographique et/ou les deuxièmes données (144) transmises avec le deuxième codage de données UWB de la deuxième communication UWB sont en outre chiffrées utilisant une troisième clé cryptographique.

9. Système de communication UWB (100, 101), comprenant un appareil de communication UWB mobile et portable (112) selon l'une quelconque des revendications précédentes et un dispositif de communication UWB (110) configuré pour communiquer au moyen de l'UWB et utilisant, pour la communication UWB sans fil, un codage de données UWB codé conformément à l'un des schémas de codage de données UWB de ladite pluralité de schémas de codage de données UWB stockés (150).

10. Système de communication UWB (100, 101) selon la revendication 9, dans lequel le dispositif de communication UWB (110) fait partie d'une pluralité de dispositifs de communication (110) du système de communication UWB (100, 101), la pluralité de dispositifs de communication (110) comprenant des premiers dispositifs de communication UWB configurés pour communiquer au moyen de l'UWB et interconnectés pour former un réseau maillé UWB, les premiers dispositifs de communication UWB formant chacun un nœud de réseau du réseau maillé UWB, le dispositif de communication UWB (110) appartenant aux premiers dispositifs de communication UWB de la pluralité de dispositifs de communication (110).

11. Système de communication UWB (100, 101) selon la revendication 10, dans lequel les premiers dispositifs de communication UWB utilisent, pour communiquer entre eux au sein du réseau maillé UWB, un codage UWB codé conformément à un schéma de codage UWB de la pluralité de schémas de codage UWB stockés,
dans lequel l'appareil de communication mobile et portable (112) forme, par exemple, un nœud de réseau supplémentaire du réseau maillé UWB, ou
dans lequel les premiers dispositifs de communication UWB utilisent, pour communiquer entre eux au sein du réseau maillé UWB, un codage UWB codé conformément à un schéma de codage UWB qui n'est pas stocké dans la mémoire (132) de l'appareil de communication mobile et portable (112).

12. Système de communication UWB (100, 101) selon l'une des revendications 9 à 10, dans lequel la pluralité de dispositifs de communication (110) comprend en outre des seconds dispositifs de communication configurés pour une communication sans fil non-UWB,
dans lequel, par exemple, la communication sans fil non-UWB des seconds dispositifs de communication est, dans chaque cas, chiffrée au moyen d'une clé cryptographique fournie, au sein du système de communication UWB (100, 101), par l'intermédiaire d'une communication UWB sans fil, et/ou
dans lequel le système de communication UWB (100) est configuré en tant que système de surveillance UWB pour surveiller une zone spatiale (102), les premiers dispositifs de communication UWB (110) étant configurés en tant que capteurs UWB répartis dans la zone spatiale (102), les capteurs UWB étant configurés pour acquérir des données de capteur et pour transmettre au moyen de l'UWB les données de capteur acquises, le système de communication UWB (100), en tant que système de surveillance UWB, étant en outre configuré pour :
• acquérir des données de capteur dans la zone spatiale (102) au moyen des capteurs UWB, les données de capteur acquises comprenant des données de capteur à caractère personnel ;
• filtrer les données de capteur acquises au moyen d'un filtre d'anonymisation, le filtre d'anonymisation étant configuré pour anonymiser les données de capteur à caractère personnel ;
• évaluer les données de capteur acquises afin de détecter un événement exceptionnel ;
• en réponse à la détection de l'événement exceptionnel, suspendre, pendant une durée limitée, l'anonymisation des données de capteur à caractère personnel.

13. Procédé de fonctionnement d'un appareil de communication UWB mobile et portable (112), l'appareil de communication UWB (112) comprenant un processeur (130), une mémoire (132) et une interface de communication (134), l'interface de communication (134) étant configurée pour une communication UWB sans fil, une pluralité d'instructions de programme destinées à être exécutées par le processeur (130) étant stockée dans la mémoire (132), l'exécution, par le processeur (130), d'instructions de programme de ladite pluralité d'instructions de programme amenant le processeur (130) à effectuer, pour transmettre des données, une communication UWB sans fil au moyen de l'interface de communication (134),
dans lequel une pluralité de schémas de codage de données UWB (150) est stockée dans la mémoire (132), ladite pluralité comprenant au moins un premier schéma de codage de données UWB (152) et un deuxième schéma de codage de données UWB (154) différent du premier schéma de codage de données UWB (152), une pluralité de données (140) étant en outre stockée dans la mémoire (132), ladite pluralité comprenant au moins des premières données et des deuxièmes données (142, 144), les premières données (142) étant associées au premier schéma de codage de données UWB (152) et les deuxièmes données (144) étant associées au deuxième schéma de codage de données UWB (154),
dans lequel il est spécifié que les premières et deuxièmes données (142, 144) sont transmises exclusivement au moyen de l'UWB,
dans lequel il est spécifié que les premières données (142) sont transmises exclusivement au moyen du premier schéma de codage de données UWB (152), et que les deuxièmes données (144) sont transmises exclusivement au moyen du deuxième schéma de codage de données UWB (154),
le procédé comprenant :
• transmettre les premières données (142) avec un premier codage de données UWB au moyen d'une première communication UWB codée conformément au premier schéma de codage de données UWB (152),
l'établissement de la première communication UWB par l'appareil de communication UWB mobile et portable (112) étant subordonné à la détection d'un dispositif de communication UWB (110) configuré pour communiquer au moyen de l'UWB, dans la portée duquel se trouve l'appareil de communication UWB mobile et portable (112), et qui utilise, pour la communication UWB sans fil, un codage de données UWB codé conformément au premier schéma de codage de données UWB de ladite pluralité de schémas de codage de données UWB stockés (150),
la détection du dispositif de communication UWB (110) comprenant la réception et le décodage réussi, par l'appareil de communication UWB mobile et portable (112), d'un premier message UWB envoyé par le dispositif de communication UWB (110) et indiquant la présence du dispositif de communication UWB (110), au moyen du premier schéma de codage de données UWB de ladite pluralité de schémas de codage de données UWB stockés (150),
l'appareil de communication UWB mobile et portable (112) envoyant, en réponse au décodage réussi du premier message UWB, au dispositif de communication UWB (110) un deuxième message UWB indiquant la présence de l'appareil de communication UWB mobile et portable (112), le deuxième message UWB envoyé étant codé au moyen d'un codage de données UWB codé conformément au même schéma de codage de données UWB que celui du premier message UWB ;
• fournir une première clé cryptographique au moyen de la première communication UWB avec le premier codage de données UWB conformément au premier schéma de codage de données UWB (152),
l'interface de communication (134) étant en outre configurée pour une communication sans fil supplémentaire non-UWB, ladite pluralité de données stockées (140) comprenant en outre des quatrièmes données, ladite pluralité d'instructions de programme stockées comprenant en outre des cinquièmes instructions de programme, l'exécution des cinquièmes instructions de programme par le processeur (130) amenant le processeur (130) à :
• transmettre les quatrièmes données au moyen de la communication supplémentaire au moyen de l'interface de communication (134), les quatrièmes données transmises étant chiffrées au moyen de la première clé cryptographique fournie,
le procédé comprenant en outre :
• transmettre les deuxièmes données (144) avec un deuxième codage de données UWB différent du premier codage de données UWB au moyen d'une deuxième communication UWB codée conformément au deuxième schéma de codage de données UWB (154).
